# EUROPEAN PATENT APPLICATION

(11) **EP 4 295 658 A1**
(43) Date of publication of application: **27.12.2023**
(21) Application number: 23175799.8
(22) Date of filing: 26.05.2023
(51) Int. Cl.: A01C 5/04, A01C 11/02

(54) **SEEDLING TRANSPLANTER**

(30) Priority: 24.06.2022 JP 2022102241; 24.06.2022 JP 2022102242; 21.02.2023 JP 2023025312
(71) Applicant: Yanmar Holdings Co., Ltd., Osaka-shi, Osaka (JP)
(72) Inventor: SAKAGAITO, Takayasu, Okayama (JP); HIRAI, Hironori, Okayama (JP); ISHIZAKI, So, Osaka (JP); TAMURA, Tokuo, Okayama (JP); WATANABE, Yoshiki, Okayama (JP); MIZUTANI, Mikio, Okayama (JP)
(74) Representative: Novagraaf International SA

(57) **Abstract**

A seedling transplanter for continuously planting a seedling in a field by cutting a seedling mat placed on a seedling mount partially by a planting claw 72, the seedling transplanter includes a groove forming arm 200 that is provided near the planting claw 72 and is provided so as to move relative to the planting claw 72. The groove forming arm 200 has, as a position posture relative to the planting claw 72, a standby posture that is a position posture at the timing when the planting claw 72 cuts the seedling mat, and a groove forming posture moved forward with respect to the planting claw 72 when the seedling is planted in the field.

## Description

### TECHNICAL FIELD

The present invention relates to a seedling transplanter that continuously performs seedling planting operation on a field by a seedling planting device.

### BACKGROUND ART

Conventionally, there has been a seedling transplanter that continuously performs seedling planting operation on a field by a seedling planting device. The seedling transplanter plants a seedling by continuously partially scraping (cutting) a plate-shaped seedling mat placed on a seedling mount inclined rearward and downward by a planting claw included in the seedling planting device while horizontally and vertically feeding the seedling mat. Some seedling transplanters of this type include a groove forming arm for forming a transplantation hole in a multifilm and excavating (forming a groove) a transplantation hole for transplanting a seedling in a field when planting a seedling by a planting claw (see, e.g., Patent Document 1). Note that the multifilm is a film covering the field for the purpose of moisture retention, heat retention, weed control, and the like for soil.

Patent Document 1 discloses a configuration in which a seedling holding-hole digging arm which is a groove forming arm is provided below a planting claw via a swing arm. The seedling holding-hole digging arm has, at a tip end portion thereof, a multifilm punching blade, and is turnably provided on the planting claw via the swing arm. The seedling holding-hole digging arm moves together with a pot seedling while supporting the pot seedling taken out by the planting claw from the bottom, turns rearward when the pot seedling reaches a field surface, and forms a transplantation hole in a multifilm by the multifilm punching blade and excavates the transplantation hole in soil.

### PRIOR ART DOCUMENT

### PATENT DOCUMENT

Patent Document 1: JP-A-2002-330607

### SUMMARY OF INVENTION

### TECHNICAL PROBLEM

In the configuration disclosed in Patent Document 1, the groove forming arm (seedling holding-hole digging arm) is provided on the planting claw via, e.g., a bracket, and turns to open the lower side of the pot seedling after the pot seedling held together with the planting claw has reached the field surface. According to such a configuration, since the degree of freedom in the position of the groove forming arm relative to the planting claw is low, it is difficult to respond to a change in a seedling planting condition, such as a change in an intrarow spacing, in terms of the position of the hole formed in the multifilm and the excavation position of the transplantation hole in the soil. Note that the intrarow spacing is an interval between seedlings continuously planted at predetermined intervals in the front-rear direction.

If the response to the change in the seedling planting condition is insufficient, problems such as a decrease in seedling planting accuracy, an increase in torque in groove formation in the soil, and contact of the groove forming arm with a planted seedling might be caused. Contact of the groove forming arm with the planted seedling may cause damage of the seedling or worsening of a seedling planting posture.

The present invention has been made in view of the above-described problems, and an object of the present invention is to provide a seedling transplanter capable of reducing contact of a groove forming arm with a planted seedling and achieving favorable planting performance.

### SOLUTION TO PROBLEM

A seedling transplanter according to the present invention is a seedling transplanter for continuously planting a seedling in a field by cutting a seedling mat placed on a seedling mount partially by a planting claw, the seedling transplanter including a groove forming arm that is provided near the planting claw and is provided so as to move relative to the planting claw. The groove forming arm has, as a position posture relative to the planting claw, a standby posture that is a position posture at the timing when the planting claw cuts the seedling mat, and a groove forming posture moved forward with respect to the planting claw when the seedling is planted in the field.

In the seedling transplanter according to the present invention, the groove forming arm is provided so as to perform a circulation operation of returning from the groove forming posture to the standby posture after planting of the seedling in the field by the planting claw has ended.

In the seedling transplanter according to the present invention, the groove forming arm is provided such that in the groove forming posture, a tip end thereof protrudes forward with respect to the planting claw and enters a field surface prior to the planting claw.

In the seedling transplanter according to the present invention, the groove forming arm is provided so as not to contact the seedling planted in the field in an operation area where at least a tip end portion of the groove forming arm is positioned below a field surface.

In the seedling transplanter according to the present invention, the groove forming arm is provided so as to change the position posture in conjunction with operation of the planting claw.

In the seedling transplanter according to the present invention, the groove forming arm changes the position posture in conjunction with operation of the planting claw by a cam mechanism including a cam provided on a rotary case rotatably supporting a planting claw device including the planting claw and configured to change the position of the groove forming arm relative to the planting claw with rotation of the planting claw device.

In the seedling transplanter according the present invention, the groove forming arm has a tip end portion as a linear plate-shaped portion in a side cross-sectional view, and is provided so as to cause the plate-shaped portion to stand on a field surface at the timing of entering the field surface.

In the seedling transplanter according to the present invention, the groove forming arm is provided so as to draw, as the movement trajectory of a tip end portion, a trajectory for ensuring, for the planting claw positioned at the lowermost end, a space for pushing out a seedling held by the planting claw. In the seedling transplanter according to the present invention, the groove forming arm has an arm body portion provided at a position shifted to one side in a left-right direction with respect to the planting claw, and an arm tip end portion provided on a tip end side of the arm body portion.

In the seedling transplanter according to the present invention, the arm tip end portion is a portion connected, on one end side in the left-right direction, to the arm body portion, and the groove forming arm has an auxiliary arm portion provided at a position shifted to the other side in the left-right direction with respect to the planting claw and having one end side connected to the other end side of the arm tip end portion in the left-right direction.

In the seedling transplanter according to the present invention, the groove forming arm has an arm body portion including a portion provided at a position shifted to one side in a left-right direction with respect to the planting claw and a portion provided at a position within the area of the width of the planting claw in the left-right direction, and an arm tip end portion provided on the tip end side of the arm body portion.

In the seedling transplanter according to the present invention, the arm tip end portion is a portion projecting to both left and right sides with respect to the arm body portion.

A seedling transplanter according to the present invention is a seedling transplanter for continuously planting a seedling in a field by cutting a seedling mat placed on a seedling mount partially by a planting claw, the seedling transplanter including a groove forming arm that is provided near the planting claw and is provided so as to move relative to the planting claw; and a trajectory changing device that changes the movement trajectory of the groove forming arm on the planting claw according to the seedling planting pitch of the planting claw.

In the seedling transplanter according to the present invention, the groove forming arm is provided so as to change the position posture relative to the planting claw in conjunction with operation of the planting claw.

In the seedling transplanter according to the present invention, the trajectory changing device includes a link mechanism that supports the groove forming arm on a planting claw device including the planting claw.

In the seedling transplanter according to the present invention, the link mechanism includes two link arms of which one end side is turnably supported on a planting claw device side and other end side is turnably supported on a groove forming arm side, and the trajectory changing device changes the movement trajectory of the groove forming arm on the planting claw by changing a distance between support portions of the two link arms on the groove forming arm side. In the seedling transplanter according to the present invention, the groove forming arm has, as a position posture relative to the planting claw, a standby posture that is a position posture at the timing when the planting claw cuts the seedling mat, and a groove forming posture moved forward with respect to the planting claw when the seedling is planted in the field, and is provided so as to perform a circulation operation of returning from the groove forming posture to the standby posture after planting of the seedling in the field by the planting claw has ended.

In the seedling transplanter according to the present invention, the groove forming arm is provided such that in the groove forming posture, a tip end thereof protrudes forward with respect to the planting claw and enters a field surface prior to the planting claw.

In the seedling transplanter according to the present invention, the groove forming arm is provided so as not to contact the seedling planted in the field in an operation area where at least a tip end portion of the groove forming arm is positioned below a field surface.

### ADVANTAGEOUS EFFECTS OF INVENTION

According to the present invention, in the seedling transplanter, it is possible to reduce contact of the groove forming arm with the planted seedling and to achieve favorable planting performance.

### BRIEF DESCRIPTION OF DRAWINGS

Fig. 1 is a left side view illustrating the overall configuration of a seedling transplanter according to a first embodiment of the present invention;
Fig. 2 is a plan view illustrating the overall configuration of the seedling transplanter according to the first embodiment of the present invention;
Fig. 3 is a view illustrating a power transmission configuration of the seedling transplanter according to the first embodiment of the present invention;
Fig. 4 is a rear perspective view illustrating the configuration of a seedling transplanting device according to the first embodiment of the present invention;
Fig. 5 is a rear view illustrating the configuration of the seedling transplanting device according to the first embodiment of the present invention;
Fig. 6 is a front perspective view illustrating the configuration of a seedling planting device according to the first embodiment of the present invention;
Fig. 7 is a rear perspective view illustrating the configuration of a lower portion of the seedling transplanting device according to the first embodiment of the present invention;
Fig. 8 is a perspective view illustrating a seedling mat according to the embodiment of the present invention;
Fig. 9 is a plan view illustrating the seedling mat according to the embodiment of the present invention;
Fig. 10 is a side view illustrating the seedling mat according to the embodiment of the present invention;
Fig. 11 is a perspective view illustrating the configurations of a guide rail and a planting claw device according to the first embodiment of the present invention;
Fig. 12 is a left side view illustrating the configurations of the guide rail and the planting claw device according to the first embodiment of the present invention;
Fig. 13 is a plan view illustrating the configurations of the guide rail and the planting claw device according to the first embodiment of the present invention;
Fig. 14 is a left side view illustrating the configuration of the guide rail and a configuration of supporting the seedling mat on the guide rail according to the first embodiment of the present invention;
Fig. 15 is a view for describing seedling mat scraping operation in operation of the planting claw device according to the first embodiment of the present invention;
Fig. 16 is a view for describing seedling block planting operation in operation of the planting claw device according to the first embodiment of the present invention;
Fig. 17 is a perspective view illustrating one example of a planting unit according to the first embodiment of the present invention;
Fig. 18 is a left side view illustrating the planting claw device, a groove forming arm in a groove forming posture, and a link mechanism according to the first embodiment of the present invention;
Fig. 19 is a plan view illustrating one example of the planting unit according to the first embodiment of the present invention;
Fig. 20 is a left side view illustrating the planting claw device, the groove forming arm in a standby posture, and the link mechanism according to the first embodiment of the present invention;
Fig. 21 is a perspective view illustrating the groove forming arm according to the first embodiment of the present invention;
Fig. 22 is a left side sectional view illustrating part of the groove forming arm according to the first embodiment of the present invention;
Fig. 23 is a view illustrating a cam plate according to the first embodiment of the present invention;
Fig. 24 is a view for describing operation of the groove forming arm in association with rotation of the planting claw device relative to a rotary case according to the first embodiment of the present invention;
Fig. 25 is a view for describing operation of the groove forming arm in association with rotation of the planting claw device relative to the rotary case according to the first embodiment of the present invention;
Fig. 26 is a view for describing operation of the groove forming arm in association with rotation of the planting claw device relative to the rotary case according to the first embodiment of the present invention;
Fig. 27 is a view for describing operation of the groove forming arm in association with rotation of the planting claw device relative to the rotary case according to the first embodiment of the present invention;
Fig. 28 is a view for describing operation of the groove forming arm in association with rotation of the planting claw device relative to the rotary case according to the first embodiment of the present invention;
Fig. 29 is a graph for describing operation of the planting claw device and the groove forming arm according to the first embodiment of the present invention;
Fig. 30 is a view for describing operation of the planting unit according to the first embodiment of the present invention;
Fig. 31 is a view for describing operation of the planting unit according to the first embodiment of the present invention;
Fig. 32 is a view for describing operation of the planting unit according to the first embodiment of the present invention;
Fig. 33 is a view for describing operation of the planting unit according to the first embodiment of the present invention;
Fig. 34 is a view for describing operation of the planting unit according to the first embodiment of the present invention;
Fig. 35 is a view for describing operation of the planting unit according to the first embodiment of the present invention;
Fig. 36 is a left side view illustrating the planting claw device, the groove forming arm in the groove forming posture, and the link mechanism according to the first embodiment of the present invention;
Fig. 37 is a left side view illustrating the planting claw device, the groove forming arm in the standby posture, and the link mechanism according to the first embodiment of the present invention;
Fig. 38 is a view for describing the operation mode of the groove forming arm according to the first embodiment of the present invention;
Fig. 39 is a view illustrating one example of the movement trajectories of the planting claw and the groove forming arm according to the first embodiment of the present invention;
Fig. 40 is a view illustrating one example of the movement trajectories of the planting claw and the groove forming arm according to the first embodiment of the present invention;
Fig. 41 is a view illustrating one example of the movement trajectories of the planting claw and the groove forming arm according to the first embodiment of the present invention;
Fig. 42 is a left side view illustrating a planting claw device, a groove forming arm in a groove forming posture, and a link mechanism according to a second embodiment of the present invention;
Fig. 43 is a plan view illustrating one example of a planting unit according to the second embodiment of the present invention;
Fig. 44 is a left side view illustrating the planting claw device, the groove forming arm in a standby posture, and the link mechanism according to the second embodiment of the present invention;
Fig. 45 is a perspective view illustrating the groove forming arm according to the second embodiment of the present invention;
Fig. 46 is a left side sectional view illustrating part of the groove forming arm according to the second embodiment of the present invention;
Fig. 47 is a view illustrating one example of the movement trajectories of a planting claw and a groove forming arm according to a third embodiment of the present invention; and
Fig. 48 is a left side view illustrating the configuration of a planting claw device according to a fourth embodiment of the present invention.

### DESCRIPTION OF EMBODIMENTS

The present invention is intended to achieve favorable planting performance by a planting claw by devising a configuration related to a groove forming arm for forming a groove in a field when a seedling is planted by the planting claw. Hereinafter, embodiments of the present invention will be described.

### [First Embodiment]

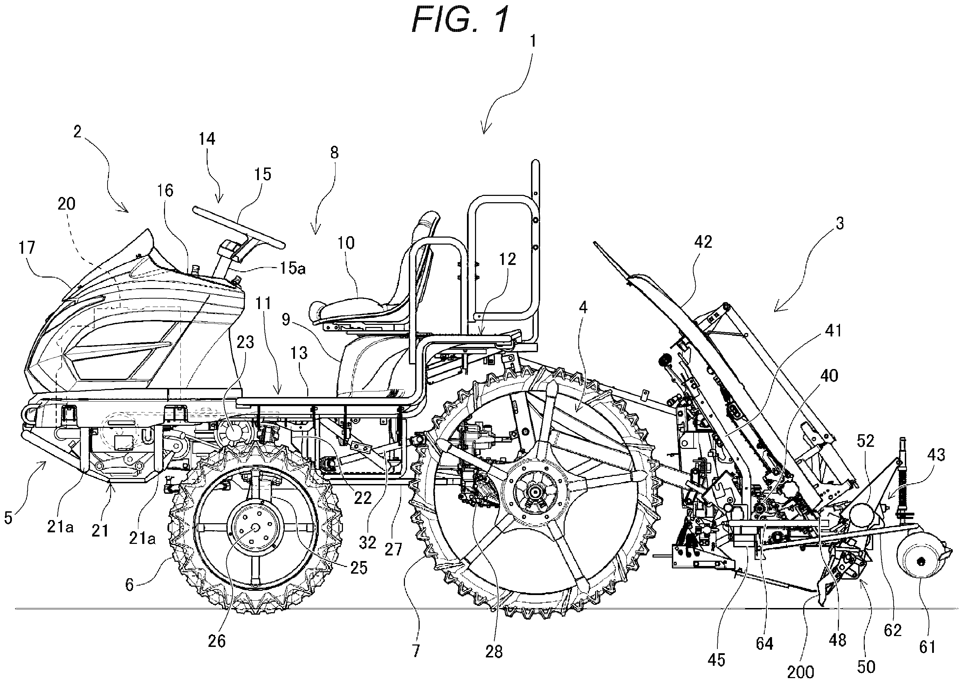

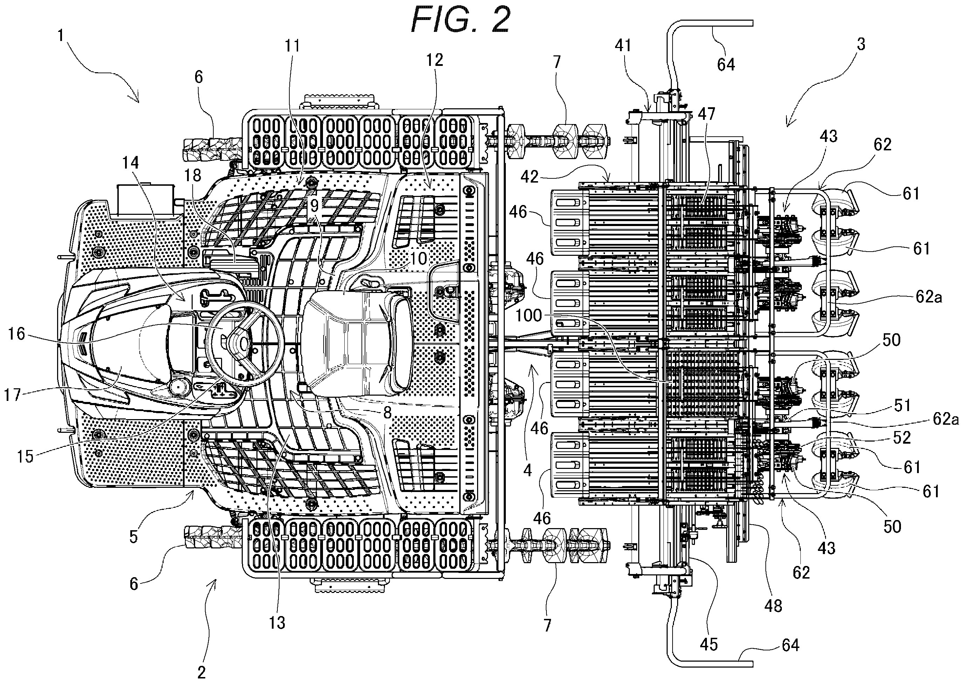

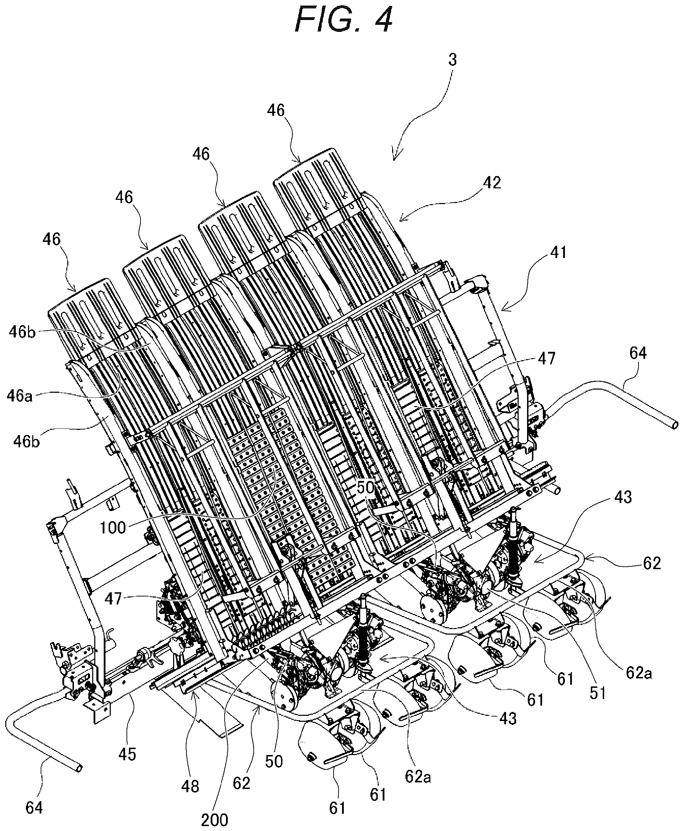

An overall configuration of a seedling transplanter 1 according to a first embodiment will be described with reference to Figs. 1 to 7. Note that in the following description, a left side (lower side in Fig. 2) and a right side (upper side in Fig. 2) when facing the front of the seedling transplanter 1 will be referred to as the left side and right side of the seedling transplanter 1, respectively.

As illustrated in Figs. 1 and 2, the seedling transplanter 1 according to the present embodiment is a ride-type seedling transplanter that performs a seedling planting operation while traveling with an operator who is a driver on board, and is used for sequentially transplanting seedlings of vegetables such as cabbages, onions, and tomatoes into a field, for example. The seedling transplanter 1 includes a traveling machine body 2 forming a traveling unit and a seedling transplanting device 3 forming a planting unit. The seedling transplanting device 3 is liftably connected to a rear portion of the traveling machine body 2 via a link device 4 including a plurality of links. The seedling transplanting device 3 moves up and down relative to the traveling machine body 2 by operation of a hydraulic cylinder (not shown).

The traveling machine body 2 includes a machine body frame 5, left and right front wheels 6, and left and right rear wheels 7. The machine body frame 5 is formed in a frame shape by a plurality of frame members, and has a front frame portion 11 forming a horizontal frame portion and a rear frame portion 12 forming a stepped portion one step higher on the rear side of the front frame portion 11. The left and right front wheels 6 are provided on the lower side of the front frame portion 11, and the left and right rear wheels 7 are provided on the rear lower side of the rear frame portion 12. The machine body frame 5 is supported on the field by the left and right front wheels 6 and the left and right rear wheels 7.

In the traveling machine body 2, a horizontal floor portion 13 formed of, e.g., a vehicle body cover is provided on the upper side of the front frame portion 11. A steering unit 8 for steering and operating the traveling machine body 2 and the seedling transplanting device 3 is provided on the floor portion 13. A seat support 9, which is a seat mount, is provided at a left-right center portion of the rear portion, and a driving seat 10 is provided on the seat support 9. A fuel tank (not shown) is provided below the seat 10.

An operation unit 14 to be operated by the operator seated on the seat 10 is provided at a front portion on the floor portion 13. The operation unit 14 is provided with a dashboard 16 on which a steering wheel 15 etc. located at the front of the seat 10 are arranged, various operation pedals such as a shift pedal 18, various operation levers such as a shift lever and a planting clutch lever, and the like. The steering wheel 15 is attached to an upper end portion of a wheel support shaft 15a protruding upward from the dashboard 16.

An engine 20 as a drive source is provided at a left-right center portion of the front portion of the floor portion 13 on the front lower side of the steering wheel 15 (see Fig. 1). The engine 20 is covered with a hood 17. The engine 20 is mounted on an engine support frame portion 21 provided on the lower side of a front portion of the front frame portion 11 via, e.g., a bracket or an anti-vibration rubber (see Fig. 1). The engine support frame portion 21 includes two front and rear support frames 21a having a U-shape in a front view. The engine 20 is, for example, a diesel engine, and is provided in such an orientation that the axial direction of an output shaft is the left-right direction.

A transmission case 22 incorporating a power transmission mechanism including a gear group, a clutch, a brake, and the like is provided at the rear of the engine 20. An HST 23, which is one example of a continuously variable transmission, is attached to the left side of the transmission case 22.

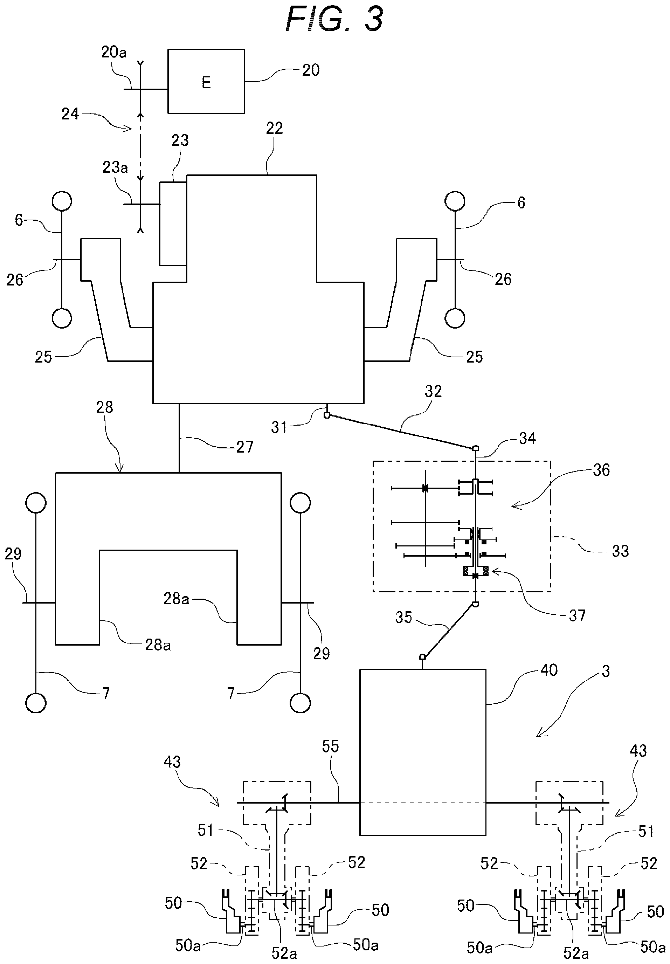

As illustrated in Fig. 3, the power of the engine 20 is transmitted from the output shaft 20a of the engine 20 to an input shaft 23a of the HST 23 via a belt transmission mechanism 24 including a pulley, a belt, and the like. The power transmitted to the input shaft 23a is input from the HST 23 to the power transmission mechanism in the transmission case 22. Here, "HST" is a hydraulic continuously variable transmission that adopts a method of converting hydraulic pressure generated by drive of a hydraulic pump into rotation force again by a hydraulic motor.

A front axle case 25 is attached to both left and right sides of the transmission case 22. A front axle 26 is rotatably supported at a lower end portion of the front axle case 25, and the front wheels 6 are attached to portions of the front axle 26 extending to the left and right outer sides from the front axle case 25. In the front axle case 25, a power transmission mechanism that transmits the rotation power of a front wheel drive shaft extending from the transmission case 22 to both left and right sides to the front axle 26 is provided.

A rear axle case 28 is attached to the rear of the transmission case 22. The rear axle case 28 receives the power of the transmission case 22 transmitted via a transmission shaft 27 extending from a rear portion of the transmission case 22. The power input from the HST 23 to the power transmission mechanism in the transmission case 22 rotatably drives the transmission shaft 27.

The rear axle case 28 has projecting case portions 28a protruding rearward with respect to a case body portion on both left and right sides. Rear axles 29 are rotatably supported by the left and right case portions 28a, and the rear wheels 7 are attached to portions of the rear axles 29 extending to the left and right outer sides from the projecting case portions 28a. In the rear axle case 28, a power transmission mechanism that transmits the rotation power input from the transmission case 22 via the transmission shaft 27 to the left and right rear axles 29 is provided.

Further, the transmission case 22 has a PTO output shaft 31, which is a power take-off shaft, extending rearward from a rear portion of the transmission case 22. After having received the power input from the HST 23, the power transmission mechanism in the transmission case 22 rotatably drives the PTO output shaft 31.

The rotation power of the PTO output shaft 31 is transmitted to an input shaft 34 of an intrarow transmission case 33 via a PTO transmission shaft 32. The PTO transmission shaft 32 is connected to each of the PTO output shaft 31 and the input shaft 34 via, e.g., a universal joint. A transmission 36 including a speed increasing/decreasing gear, a transmission mechanism, and the like is provided in the intrarow transmission case 33. The power transmitted to the input shaft 34 is shifted by the transmission 36 in the intrarow transmission case 33, and is transmitted to the seedling transplanting device 3 via a planting drive shaft 35 extending rearward from the intrarow transmission case 33.

The seedling transplanting device 3 includes a planting transmission case 40 incorporating a power transmission mechanism for receiving power transmitted via the planting drive shaft 35, a seedling mount 42 provided on a planting frame 41 connected to the rear side of the link device 4, and a seedling planting device 43 driven by the power transmitted from the planting transmission case 40. In the present embodiment, a pair of left and right seedling planting devices 43 is provided. Note that the number of seedling planting devices 43 may be one or three or more.

A plurality of seedling mats 100 is placed on the seedling mount 42. The seedling mount 42 has, on the front surface side (rear upper side) thereof, a mount surface on which the seedling mats 100 are placed, and is provided such that the mount surface is inclined rearward and downward. The seedling transplanter 1 according to the present embodiment has a four-line planting configuration, and has four seedling mount portions 46 arranged in the left-right direction. Note that although a state in which the seedling mat 100 is placed only on the second seedling mount portion 46 from the left is illustrated in the figure, the seedling mats 100 are placed on all the seedling mount portions 46 in an actual planting work.

Each seedling mount portion 46 has a mount body portion 46a formed of a plate-shaped member and forming a mount surface portion for the seedling mat 100, and low wall-shaped guide portions 46b provided along left and right edge portions of the mount body portion 46a. The guide portion 46b is a portion projecting with respect to the mount surface portion of the mount body portion 46a for the seedling mat 100, and is provided over the entire mount body portion 46a in the direction of extension thereof. The seedling mount 42 has a vertical feeding structure in which the seedling mat 100 set on the mount body portion 46a of each seedling mount portion 46 is intermittently moved in the vertical direction (downward).

Each seedling mount portion 46 is provided with a delivery belt 47. In the present embodiment, in each seedling mount portion 46, two lines of delivery belts 47 are provided side by side. The delivery belt 47 is an endless belt of which the feeding direction is a direction along the up-down direction in a rear view, and is provided so as to form a lower portion of the mount body portion 46a. The delivery belt 47 is configured to circularly drive so as to move a side on which the seedling mat 100 is placed to the lower side, and intermittently vertically feeds the seedling mat 100.

A guide rail 48 linearly extending in the left-right direction of the machine body is provided on the lower side of the seedling mount 42. The guide rail 48 is provided along a lower edge portion of the seedling mount 42, and has a dimension longer than the width of the seedling mount 42 in the left-right direction. In the seedling transplanting device 3, the guide rail 48 is supported in a fixed state by a predetermined support member on the planting frame 41. The guide rail 48 supports the seedling mat 100 placed on the seedling mount 42 from below.

The seedling mount 42 supplies the seedling mat 100 placed on each seedling mount portion 46 to each planting unit. The seedling mount 42 is configured to reciprocate in the left-right direction by a drive mechanism (not shown) in order to laterally feed the seedling mat 100 in the left-right direction (vehicle width direction). That is, the seedling mount 42 is provided to reciprocate in the left-right direction of the machine body relative to the guide rail 48. Further, the seedling mount 42 is configured to vertically feed the seedling mat 100 on each seedling mount portion 46 downward by feeding operation by the delivery belt 47 at the timing when the seedling mount 42 reaches a movement end in reciprocation in the left-right direction. In movement of the seedling mount 42 in the left-right direction, the seedling mat 100 placed on the seedling mount 42 moves along the guide rail 48 while supported by the guide rail 48 from below.

A horizontal frame 45 forming part of the planting frame 41 is provided at a position below the seedling mount 42. The horizontal frame 45 is a linear frame member having a rectangular tubular outer shape, and is horizontally provided so as to extend in the left-right direction. The horizontal frame 45 is provided over substantially the entire area in the left-right direction in the seedling transplanting device 3.

The planting transmission case 40 is provided at a center portion on the horizontal frame 45. The planting transmission case 40 is provided in a projecting shape such that a rear portion thereof is positioned on the rear side of the horizontal frame 45, and has a portion projecting to the rear side. The left and right seedling planting devices 43 are provided on the rear side of the horizontal frame 45. The left and right seedling planting devices 43 are formed symmetrically with respect to the center of the seedling transplanting device 3 in the left-right direction.

The seedling planting device 43 is a rotary planting device, and has a planting transmission case 51, two rotary cases 52 provided on both left and right sides of the planting transmission case 51, and planting claw devices 50 each provided for the rotary cases 52. That is, the seedling transplanting device 3 has four planting claw devices 50, and is applicable to the four-line planting configuration. On both left and right sides of the planting transmission case 51, the planting units are formed by the rotary cases 52 and the planting claw devices 50.

The planting transmission case 51 has a tubular outer shape with the front-rear direction as the longitudinal direction, has a front end portion fixed to a rear wall portion of the horizontal frame 45, and extends rearward from the rear side of the horizontal frame 45. A planting transmission shaft 55 of which the axial direction is the left-right direction is provided between the left and right planting transmission cases 51.

The planting transmission shaft 55 is a shaft configured such that a plurality of shaft bodies is coaxially connected via, e.g., joints, and is rotatably supported on the planting transmission case 40. The planting transmission shaft 55 extends from the rear portion of the planting transmission case 40 to both left and right sides, and is rotatably supported on each planting transmission case 51 at front portions of the left and right planting transmission cases 51. The planting transmission shaft 55 receives power transmitted by the power transmission mechanism provided in the planting transmission case 40. The planting transmission shaft 55 interlockingly connects the power transmission mechanisms in the planting transmission case 40 and the left and right planting transmission cases 51.

The pair of left and right rotary cases 52 is provided on both left and right sides of a rear portion of the planting transmission case 51. The rotary case 52 is rotatably attached to a rear end portion of the planting transmission case 51 via a drive shaft 52a of which the axial direction is the left-right direction. The rotary case 52 has an elongated outer shape, and a center portion thereof in the longitudinal direction is pivotally supported on the planting transmission case 51. The planting claw devices 50 are attached to the left and right outer sides of the rotary cases 52.

The planting claw device 50 is supported on a portion of the rotary case 52 on one end side in the longitudinal direction so as to rotate about a rotation shaft 50a of which the rotation axis direction is the left-right direction (see Fig. 3). The planting claw device 50 is connected to the rotary case 52 so as to interlock with rotation operation of the rotary case 52 relative to the planting transmission case 51. The planting claw device 50 is configured to perform predetermined planting operation as the rotary case 52 rotates. By performing the planting operation, the planting claw device 50 sequentially scrapes the seedling mat 100 placed on the seedling mount 42 one by one (one plant each), and plants the seedling mat 100 in the field. As the machine body of the seedling transplanter 1 moves forward, one planting claw device 50 plants one line of seedlings.

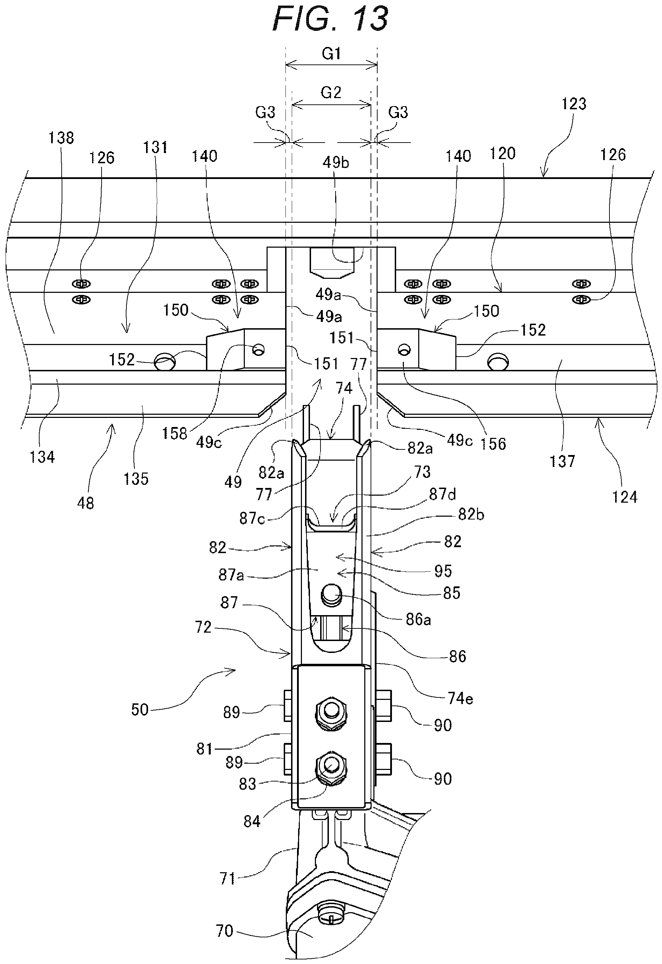

The guide rail 48 is provided with a scraping opening 49 configured such that a scraping target portion of the seedling mat 100 is positioned therein and ensuring a movement path for the planting claw device 50 (see Fig. 13). The scraping opening 49 is provided at a position corresponding to each planting claw device 50 in the longitudinal direction of the guide rail 48. Thus, the scraping openings 49 are provided at four locations on the guide rail 48. The scraping opening 49 is a notch-shaped portion opened on the rear side and having a shape along a rectangular shape in a plan view.

The seedling transplanting device 3 having the above-described configuration receives the power input from the planting drive shaft 35 in the planting transmission case 40. The drive force input to the planting transmission case 40 is transmitted to the planting transmission shaft 55 by the power transmission mechanism in the planting transmission case 40. The rotation drive force of the planting transmission shaft 55 is distributed to the left and right seedling planting devices 43, and is transmitted to the drive shafts 52a of the rotary cases 52 on both left and right sides of the planting transmission case 51 via the plurality of transmission shafts, gears, and the like provided in the planting transmission case 51. By rotary drive of the drive shaft 52a, the left and right rotary cases 52 rotate, and the planting units continuously plant the seedlings.

In a power transmission system of the seedling transplanter 1, the rotation power input to the drive shaft 52a of the rotary case 52 is shifted together with the traveling speed of the traveling machine body 2 by the HST 23 according to the operation amount of a shift operation member, such as the shift pedal 18, provided in the steering unit 8. Thus, the rotation speed of the rotary case 52, i.e., the planting speed of the seedling transplanting device 3, changes according to the traveling speed of the traveling machine body 2. Specifically, the rotation cycle of the rotary case 52 becomes shorter as the traveling speed of the machine body increases, and becomes longer as the traveling speed of the machine body decreases. Thus, regardless of the traveling speed of the traveling machine body 2, a seedling planting interval (intrarow spacing) is constant.

Further, regarding the intrarow spacing, as illustrated in Fig. 3, the rotation speed of the rotary case 52 can be changed by the transmission 36 in the intrarow transmission case 33, whereby the intrarow spacing can be changed. The intrarow spacing is changed according to, e.g., the type of crop to be planted or the state of the field. A planting clutch 37 is provided in the intrarow transmission case 33. ON/OFF of transmission of the rotation power from the transmission 36 to the planting drive shaft 35 is switched by operation of the planting clutch 37. An operation of switching connection/disconnection of the planting clutch 37 is performed by operation of the planting clutch lever provided in the steering unit 8. Note that operation of the planting clutch 37 can also be controlled by a controller included in the seedling transplanter 1.

A pair of left and right covering wheels 61 is provided at the rear of each of the four planting units included in the seedling transplanting device 3. The covering wheel 61 has a truncated cone-shaped outer shape, and is rotatably supported with an outer peripheral surface as an action surface on the field. The pair of covering wheels 61 is provided inclined such that the lower side of the outer peripheral surface of each covering wheel 61 is substantially horizontal in an orientation in which the bottom surface sides thereof face each other, and is arranged to form a substantially "V" shape in a rear view.

The covering wheel 61 is supported via a support member on a rear side portion 62a of a covering wheel support frame 62 formed in a frame shape so as to surround the seedling planting device 43 in a plan view. The covering wheel support frame 62 is provided in a state in which a front end portion thereof is supported on the horizontal frame 45. With the pair of covering wheels 61, a portion where the seedlings are planted by the planting claw device 50 is pressed immediately after planting by action of the covering wheels 61.

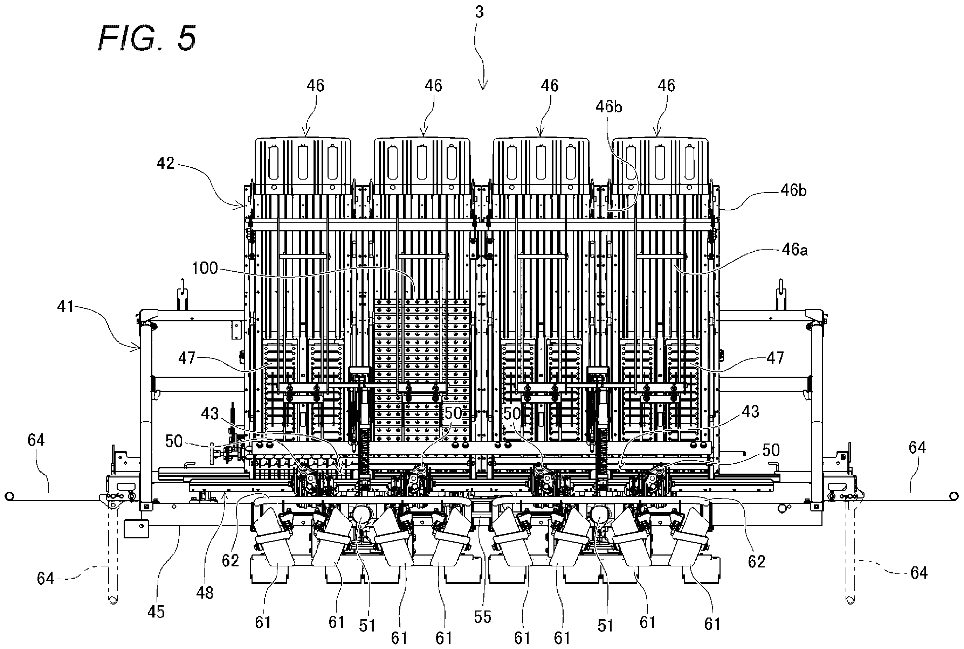

In the seedling transplanting device 3, stands 64 supporting the seedling transplanting device 3 on the ground are provided on both left and right sides of a lower portion of the planting frame 41. The stand 64 is formed of a pipe-shaped member bent into a substantially "L" shape, and a one-side end portion thereof is turnably supported on the horizontal frame 45 via, e.g., a support fitting with the front-rear direction as an axial direction. The stand 64 is brought into a use state of supporting the seedling transplanting device 3 on the ground by changing from a substantially horizontal storage state to a state of standing with one side portion along the ground. Note that in the figure, the stand 64 in the storage state is illustrated, and the stand 64 in the use state is indicated by a chain double-dashed line in Fig. 5.

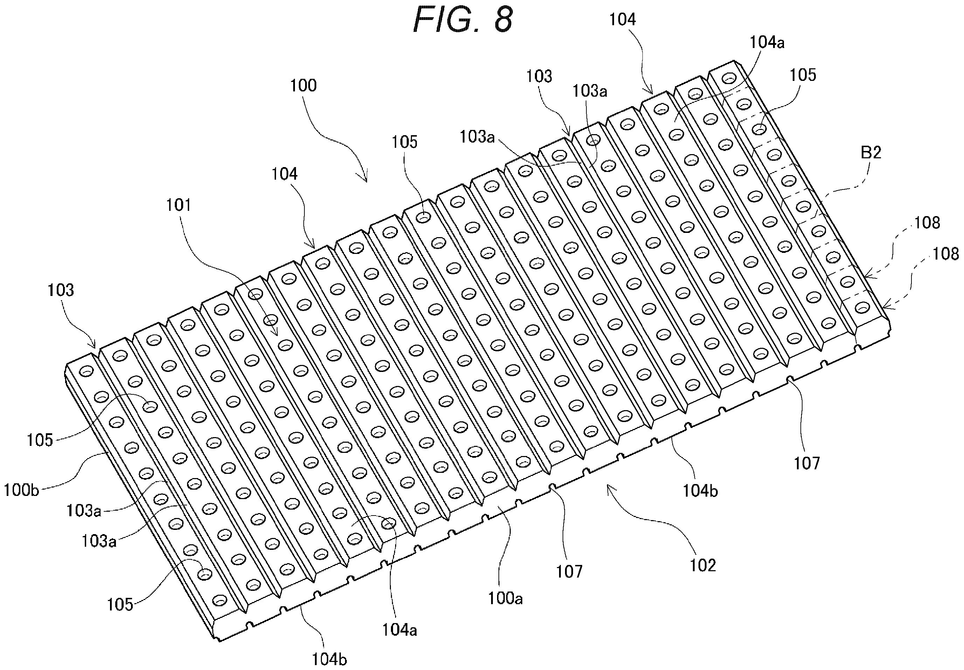

The seedling mat 100 will be described with reference to Figs. 8 to 10. The seedling mat 100 is obtained in such a manner that a plurality of seeds is sowed in a predetermined array. The seeds to be sowed in the seedling mat 100 are, for example, seeds of vegetables such as cabbages, onions, or tomatoes. Note that the seed may be a wet-field rice seed. When the seedling transplanter 1 plants the seedlings, the seedling mat 100 is used in a state in which the seedlings are grown from the seeds.

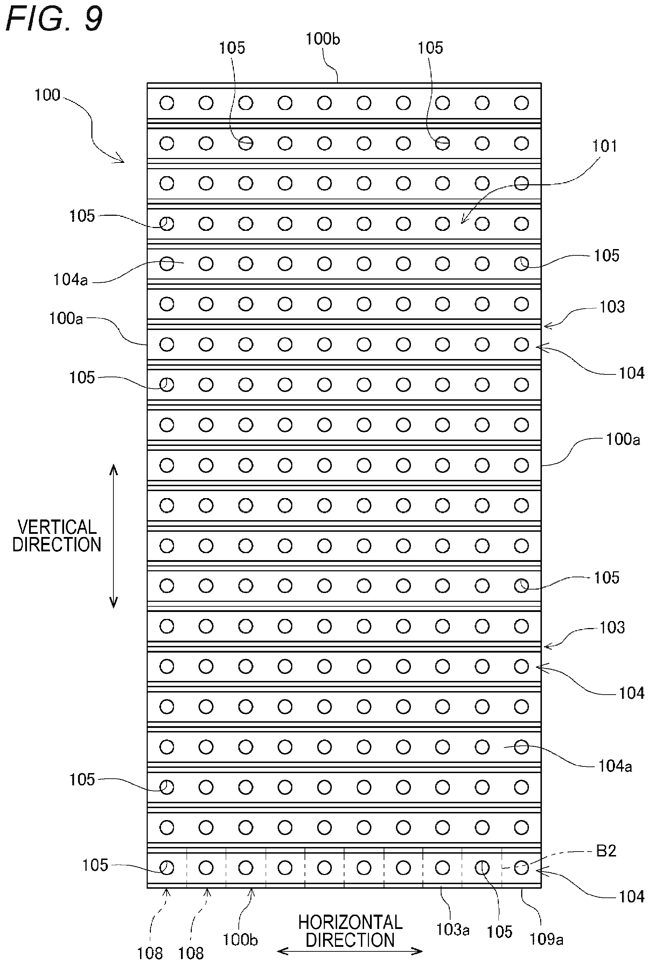

As illustrated in Figs. 8 to 10, the seedling mat 100 has a substantially rectangular plate-shaped outer shape, and as a whole, is formed in a flat plate shape. In the seedling mat 100, the longitudinal direction (up-down direction in Fig. 9) of the rectangular outer shape in a plan view is taken as the vertical direction, and the lateral direction (left-right direction in Fig. 9) of this outer shape is taken as the horizontal direction. The vertical direction and the horizontal direction are directions orthogonal to each other when the seedling mat 100 is viewed in plan.

Of the seedling mat 100, one plate surface side is a front surface portion 101, and the other plate surface side is a back surface portion 102. The seedling mat 100 has, at the front surface portion 101, a plurality of front surface side grooves 103 formed along the horizontal direction at predetermined intervals in the vertical direction. The seedling mat 100 has side surface portions 100a which are surface portions on both sides in the horizontal direction and end surface portions 100b which are surface portions on both sides in the vertical direction.

The front surface side groove 103 is a V-shaped groove, and is formed by a pair of groove forming surfaces 103a forming a V-shape when the seedling mat 100 is viewed from the side. The front surface side groove 103 is formed such that the depth D1 thereof is set to a dimension of, e.g., about 1/3 to 1/2 of the thickness T1 of the seedling mat 100. Note that the seedling mat 100 has a substantially constant outer shape as viewed in the horizontal direction (side view) as a whole, and both ends of the front surface side groove 103 are opened at the side surface portions 100a of the seedling mat 100.

In the seedling mat 100, a portion defined by the front surface side grooves 103 on the front surface portion 101 side is a row block portion 104. On the front surface portion 101 side, the row block portion 104 forms a relatively-protruding projection portion by the front surface side grooves 103 on both sides in the vertical direction. On the front surface portion 101 side, a plurality of sowing holes 105 is formed in the row block portion 104.

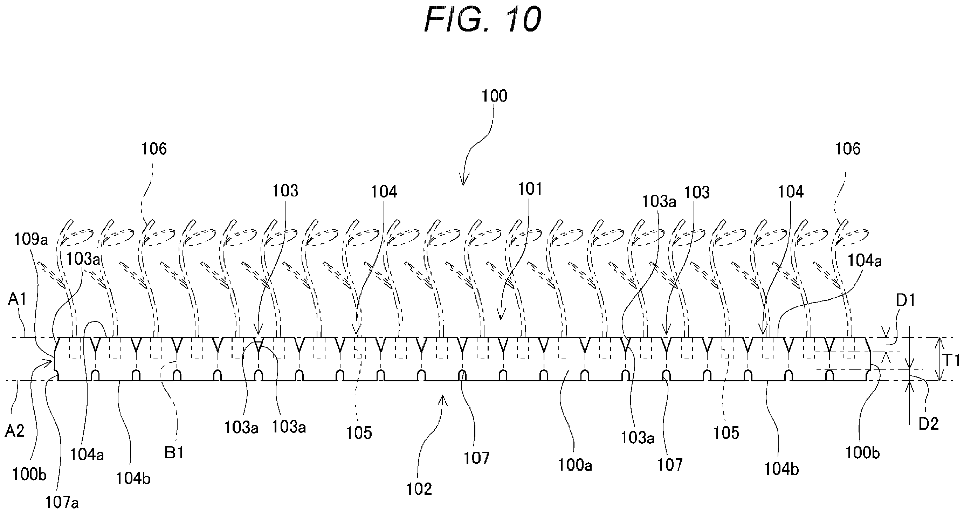

In the example illustrated in Figs. 8 to 10, the seedling mat 100 is configured such that 20 row block portions 104 along the horizontal direction are connected to each other in the vertical direction. Note that In Fig. 10, a boundary between adjacent ones of the row block portions 104 is indicated by a virtual line B1.

In each row block portion 104, the plurality of sowing holes 105 is provided in line at predetermined intervals along the horizontal direction. The sowing hole 105 is, for example, a substantially circular columnar hole. One or more seeds are placed in the sowing hole 105. Each row block portion 104 has an upper surface 104a along a virtual plane A1. The sowing hole 105 is opened facing the upper surface 104a of the row block portion 104.

A seedling 106 grown from the seed in the sowing hole 105 extends out from the sowing hole 105, and extends out from the front surface portion 101. In addition, the seedling mat 100 is made of a material that allows a root to extend from the seed in the sowing hole 105 on the back surface portion 102 side. The material forming the seedling mat 100 contains an organic fiber material which is a fiber material made of an organic substance. Examples of the organic fiber material include cocopite, peat moss, and rice hulls. In addition, the material forming the seedling mat 100 may contain a binder, a soil improving material, a fertilizer, soil, or the like. Note that no seedlings 106 are illustrated in Figs. 8 and 9.

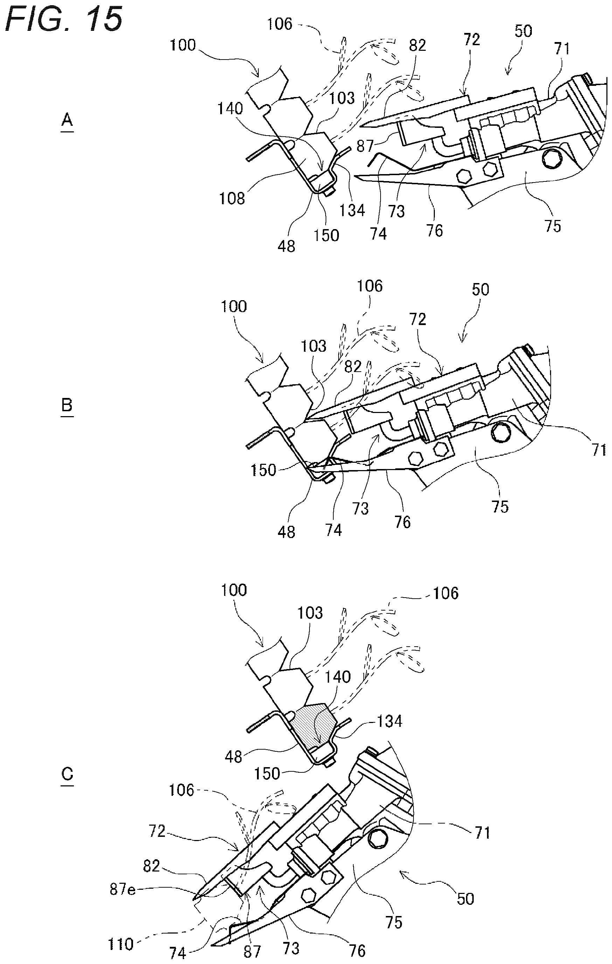

In the seedling mat 100, a portion where one sowing hole 105 is formed serves as one unit block portion 108 for one plant, the unit block portion 108 being scraped (cut) once by the planting operation by the planting claw device 50. The unit block portion 108 is a portion having a substantially square shape with the sowing hole 105 as the center in a plan view, and is separated into a seedling block 110 (see Fig. 15C) having a substantially rectangular parallelepiped shape or a substantially cubic shape from the seedling mat 100 by being scraped over the entire area in the thickness direction of the seedling mat 100 by the planting claw device 50. Although it is merely one example, the seedling block 110 has a substantially cubic shape in which the length of one side is about 30 mm.

In the example illustrated in Figs. 8 to 10, 10 sowing holes 105 are formed in the horizontal direction in each row block portion 104, and each row block portion 104 is a portion where 10 unit block portions 108 to be the seedling blocks 110 by scraping by the planting claw device 50 are connected to each other. Note that in Figs. 8 and 9, for one row block portion 104 positioned at the end of the seedling mat 100, a boundary between adjacent ones of the unit block portions 108 is indicated by a virtual line B2.

The seedling mat 100 has, at the back surface portion 102, a plurality of back surface side grooves 107 formed along the horizontal direction at predetermined intervals in the vertical direction. The back surface side groove 107 is formed at a position corresponding to the front surface side groove 103 in the vertical direction. With the back surface side groove 107 and the front surface side groove 103, a dimension in the thickness direction (up-down direction in Fig. 10) of the seedling mat 100 at a connection portion between adjacent ones of the row block portions 104 in the vertical direction is shortened.

The back surface side groove 107 is a U-shaped groove, and is formed by a pair of side surfaces and an upwardly-curved surface forming a U-shape when the seedling mat 100 is viewed from the side. The back surface side groove 107 is formed such that the depth D2 thereof is set to a dimension of, e.g., about 1/4 to 1/3 of the thickness T1 of the seedling mat 100. Both ends of the back surface side groove 107 are opened at the side surface portions 100a of the seedling mat 100. Note that the shape of the back surface side groove 107 is not limited to the U-shaped groove.

The plurality of row block portions 104 is defined, on the back surface portion 102 side of the seedling mat 100, at pitches similar to those on the front surface portion 101 side by the plurality of back surface side grooves 107. On the back surface portion 102 side, the row block portion 104 forms a relatively-protruding projection portion by the back surface side grooves 107 on both sides in the vertical direction. Each row block portion 104 has a lower surface 104b along a virtual plane A2 parallel with the virtual plane A1.

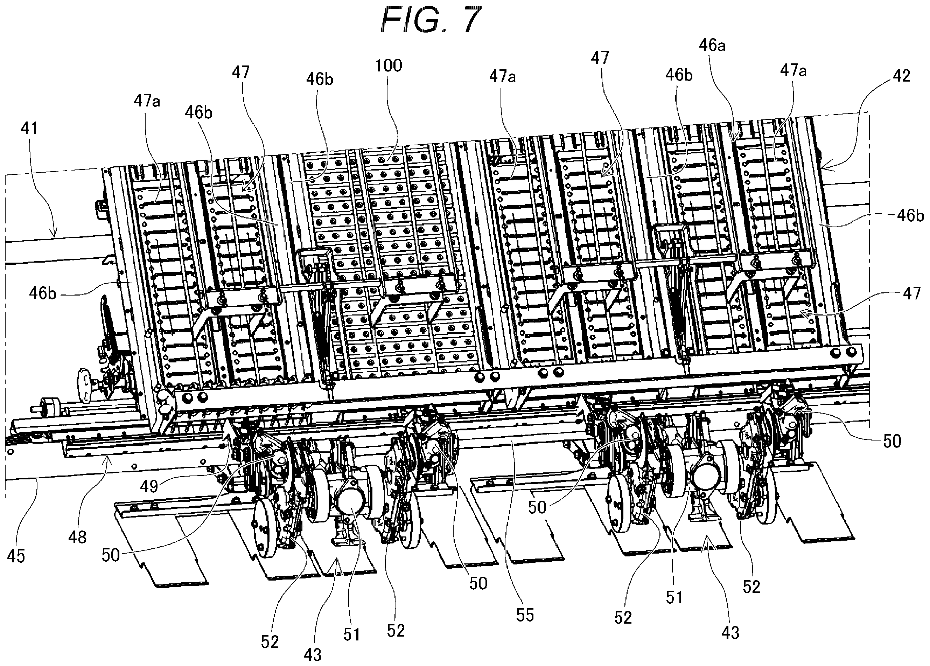

In the seedling mat 100 placed on the delivery belt 47, the back surface side groove 107 is a portion that receives a plurality of fitted locking projection portions 47a (see Fig. 7) provided on the delivery belt 47. The projection portion 47a is a portion protruding from the surface of the delivery belt 47, and is formed linearly along the left-right direction. The projection portion 47a has, for example, a rectangular cross-sectional shape. An interval between the plurality of projection portions 47a in the vertical direction corresponds to an interval between the plurality of back surface side grooves 107 in the vertical direction in the seedling mat 100. The back surface side groove 107 is formed slightly wider than the projection portion 47a such that the projection portion 47a is fitted therein.

The seedling mat 100 is locked to the delivery belt 47 by fitting the projection portion 47a in each back surface side groove 107 in a state of being placed on the delivery belt 47. Thus, the seedling mat 100 can reliably receive vertical feeding action by the delivery belt 47 without sliding on the delivery belt 47 circularly driven to perform the vertical feeding operation. That is, the seedling mount 42 can reliably vertically feed the seedling mat 100 to the guide rail 48 side by the delivery belt 47. Further, by locking of the seedling mat 100 to the delivery belt 47 by fitting the projection portion 47a in each back surface side groove 107, it is possible to prevent compression of the seedling mat 100 in the vertical direction by its own weight.

The seedling mat 100 as described above is scraped and planted in the field by the planting claw device 50 of the seedling transplanting device 3 as follows. That is, by movement of the seedling mount 42 to one side in the left-right direction, the seedling mat 100 is sequentially scraped to the other side in the left-right direction, starting from the unit block portion 108 positioned at a start end which is one end portion of the row block portion 104 in the left-right direction at the lower end supported on the guide rail 48. That is, the seedling mat 100 is moved along the guide rail 48 by a distance corresponding to one unit block portion 108 in the horizontal direction at a cycle of scraping the seedling mat 100 once by the planting claw device 50, and the next unit block portion 108 is sequentially positioned on the scraping opening 49 at a scraping target position.

At the timing when the row block portion 104 at the lower end is sequentially scraped from the start end side and the unit block portion 108 at a terminal end which is the other end portion of the row block portion 104 at the lower end in the left-right direction is scraped, the seedling mat 100 is fed (vertically fed) downward by one row of the row block portion 104 by operation of the delivery belt 47, and is brought into a state of being supported on the guide rail 48 on the end surface portion 100b side of the row block portion 104 newly positioned at the lower end. That is, the next row block portion 104 is positioned on the guide rail 48 as a scraping target portion. Then, the previous terminal end side turns into the start end side, and the unit block portion 108 is sequentially scraped while the seedling mat 100 is being moved by the seedling mount 42 moving to the other side in the left-right direction after having turned back.

In this manner, by horizontal feeding by left-right reciprocation of the seedling mount 42 and vertical feeding by intermittent operation of the delivery belt 47, the seedling mat 100 is scraped for each unit block portion 108 from the lower side to the upper side by the planting claw device 50 rotating along a predetermined trajectory in the order of reciprocation in the left-right direction.

In the seedling mat 100, the end surface portion 100b on the side supported by the guide rail 48 has the groove forming surface 103a, a groove forming surface 107a corresponding to the shape of the substantially half of the back surface side groove 107 in the width direction thereof, and an intermediate surface 109a between the groove forming surface 103a and the groove forming surface 107a. Since the seedling mat 100 has a periodic shape in units of the row block portion 104 in the vertical direction, the shape of the end surface portion 100b is substantially the same between the lower end surface portion 100b of the seedling mat 100 before scraped by the planting claw device 50 and the end surface portion 100b of the seedling mat 100 after at least one row block portion 104 has been scraped. At the end surface portion 100b scraped by the planting claw device 50, the intermediate surface 109a is a surface cut by the planting claw device 50.

As described above, the seedling mat 100 used by the seedling transplanter 1 has, on the front surface side (front surface portion 101 side) which is the surface opposite to the mount surface side of the seedling mount 42, the front surface side grooves 103 as grooves corresponding to the units of cutting by a planting claw 72 and extending in the direction orthogonal to the vertical feeding direction.

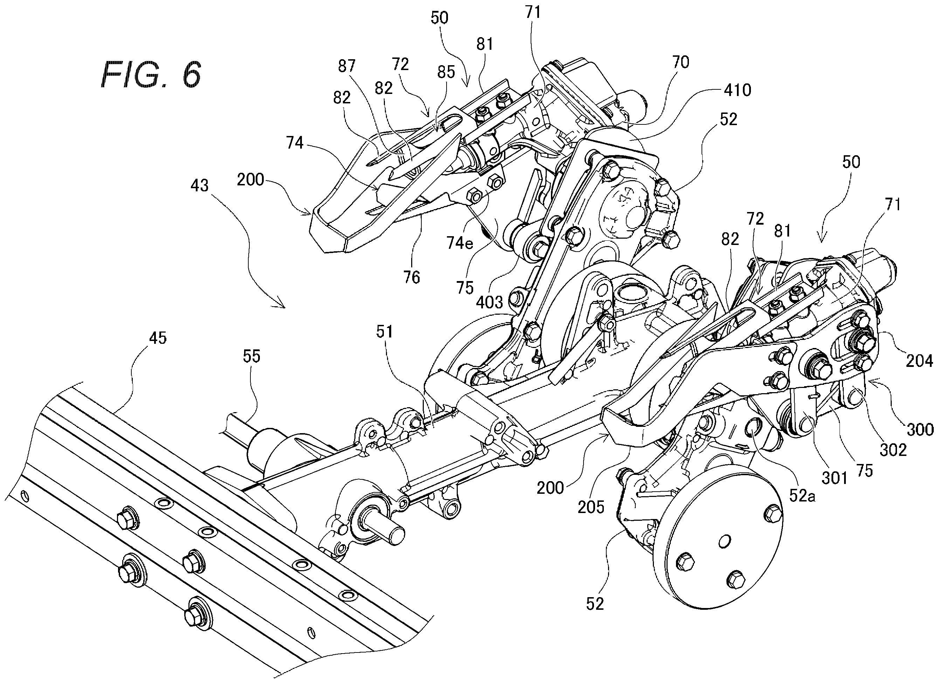

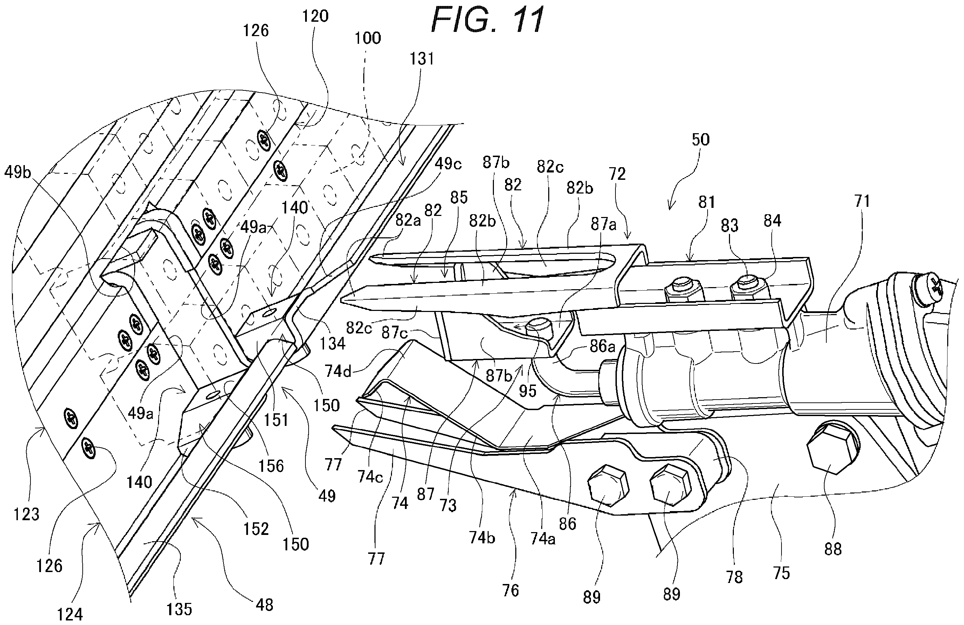

The configuration of the planting claw device 50 will be described with reference to Figs. 6 and 11 to 13. Note that in Figs. 11 to 13, for the sake of convenience in description, a groove forming arm 200, a support mechanism thereof, and the like which will be described later are not shown. As illustrated in Figs. 6 and 11 to 13, the planting claw device 50 has an arm portion 71, the planting claw 72 provided with fixed to the arm portion 71, a pushing member 73 provided movably relative to the arm portion 71, a holding plate 74 which is a holding member provided so as to face the planting claw 72, a holding plate support portion 75 supporting the holding plate 74, and an excavation claw 76 provided on the lower side of the holding plate 74.

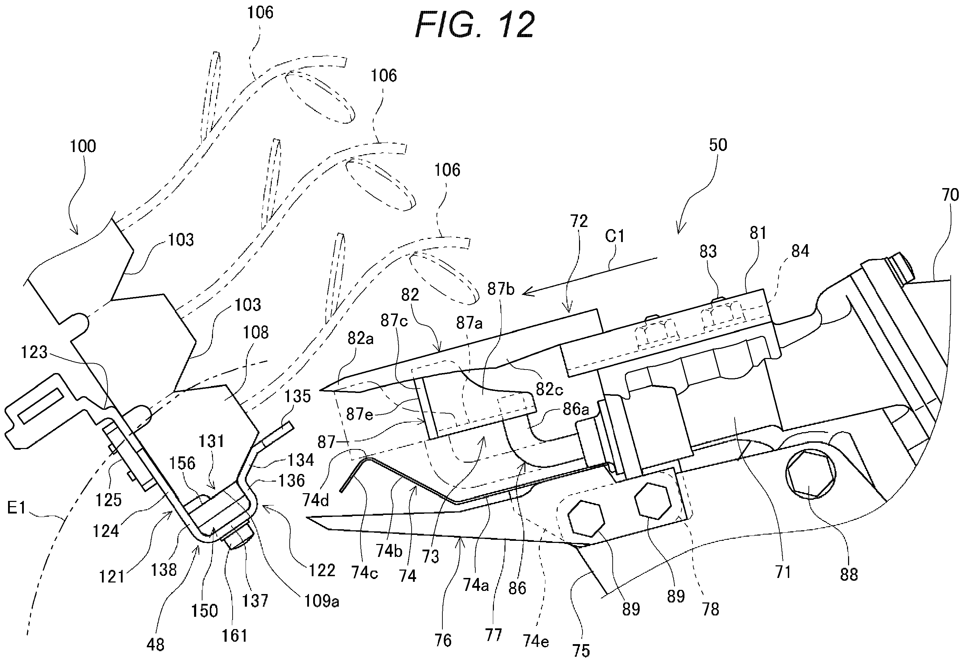

The planting claw device 50 has a portion connected to the rotary case 52 as a base portion 70, and has an extending portion in which the arm portion 71, the planting claw 72, and the like linearly extend from the base portion 70 in a predetermined direction. The tip end of the planting claw 72 is the tip end of the extending portion. Hereinafter, the direction along the direction of extension of the extending portion in the planting claw device 50 (direction of an arrow C1 in Fig. 12) will be referred to as a "claw extending direction." Moreover, in the planting claw device 50, the tip end side of the planting claw 72 in the claw extending direction is defined as a front side, and the opposite side thereof is defined as a rear side.

The arm portion 71 is a substantially tubular portion of which the tube axis direction is the claw extending direction of the planting claw device 50. The arm portion 71 extends in the claw extending direction from the base portion 70 as a portion integrated with the base portion 70.

The planting claw 72 has a substantially rectangular plate-shaped claw base portion 81 and two claw body portions 82 extending in the claw extending direction from one side of the claw base portion 81 in the longitudinal direction thereof, and has a configuration in which the tip end side is bifurcated. The planting claw 72 has a substantially constant width as a whole, and is provided in such an orientation that the width direction is the left-right direction and the longitudinal direction is along the claw extending direction.

The claw base portion 81 is a bent plate-shaped portion having a flat substantially "U" shaped cross-sectional shape, and has a flat portion and side wall portions on both left and right sides thereof. The claw body portion 82 extends in the claw extending direction from the upper side of a front end portion of the claw base portion 81.

The planting claw 72 is fixed to the upper side of the arm portion 71 by two fixing portions provided at intervals in the claw extending direction at the claw base portion 81. The fixing portion of the planting claw 72 is a fastening fixing portion configured such that a nut 84 is screwed to an external thread portion 83 protruding upward from the arm portion 71 and penetrating the flat portion of the claw base portion 81.

The pair of claw body portions 82 linearly extends from both edge portions of the claw base portion 81 in the width direction thereof along the claw extending direction. The pair of claw body portions 82 is formed in parallel with an interval of a substantially constant width therebetween, and a space 85 is formed between the pair of claw body portions 82.

Each claw body portion 82 has, as a tip end portion thereof, a sharpened portion 82a formed in a sharpened shape. The pair of claw body portions 82 has a substantially symmetrical shape in the left-right direction. Each claw body portion 82 has a substantially "L" shaped cross-sectional shape by an upper surface portion 82b and left and right outer side surface portions 82c. An interval between the side surface portions 82c of the left and right claw body portions 82 is substantially the same as the dimension of the seedling block 110 in the horizontal direction. That is, the dimension of the unit block portion 108 in the horizontal direction in the seedling mat 100 is substantially the same as the interval between the left and right side surface portions 82c.

The pushing member 73 is provided on the front side of the arm portion 71, and is provided so as to reciprocate along the claw extending direction relative to the arm portion 71. The pushing member 73 is provided on the lower side of the pair of claw body portions 82 of the planting claw 72. The pushing member 73 has a push rod 86 and a pressing piece 87 provided on the tip end side of the push rod 86.

The push rod 86 is a rod portion forming a cylinder mechanism together with the arm portion 71 with the arm portion 71 as a cylinder portion, and extends from the tip end of the arm portion 71 along the claw extending direction. The push rod 86 reciprocates relative to the arm portion 71 so as to change the amount of protrusion from the arm portion 71. The push rod 86 is a bent portion 86a in which a tip end portion is bent upward at a right angle with respect to a rod body.

The pressing piece 87 has a flat plate-shaped support plate portion 87a, left and right side wall portions 87b provided on both sides of the support plate portion 87a in the width direction thereof, and a front wall portion 87c. Corresponding to the shapes of the support plate portion 87a and the left and right side wall portions 87b as viewed in the axial direction of the push rod 86, the front wall portion 87c has a substantially "U" shape as viewed in the axial direction of the push rod 86 by a notch portion 87d (see Fig. 13) opened on the upper side.

In the pressing piece 87, the front wall surface of the front wall portion 87c serves as a pressing surface 87e for the seedling block 110. In the pressing piece 87, a space 95 of which the front side is opened by the notch portion 87d is formed between the left and right side wall portions 87b on the support plate portion 87a. The pressing piece 87 moves integrally with the push rod 86 relative to the arm portion 71.

The pressing piece 87 is fixed to the push rod 86 by, e.g., welding in a state in which the bent portion 86a of the push rod 86 penetrates the support plate portion 87a. The pressing piece 87 has a shape in which a dimension in the up-down direction is greater in a front portion than in a rear portion in the side wall portion 87b. The pressing piece 87 is configured such that upper edge portions of the front portions of the left and right side wall portions 87b are positioned along the claw body portion 82 and inside the claw body portion 82 having a substantially "L" shaped cross-sectional shape.

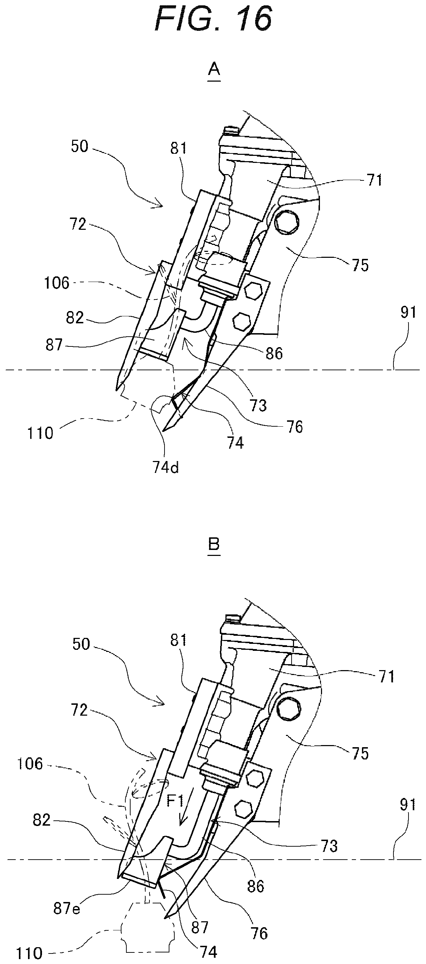

The pushing member 73 reciprocates between a holding position (see Fig. 16A), which is a rear end position, and a pushing position (see Fig. 16B), which is a front end position, in movement relative to the arm portion 71.

The holding position of the pushing member 73 is the standby position of the pushing member 73 in the planting claw device 50, and is a position in a state in which the planting claw device 50 holds the seedling block 110. In a state in which the pushing member 73 is at the holding position, the pressing piece 87 is positioned at an intermediate portion of the claw body portion 82 in the claw extending direction.

The pushing position of the pushing member 73 is the position of the forward end of the pushing member 73 with respect to the arm portion 71, and is a position in a state in which the planting claw device 50 pushes out (releases) the seedling block 110. In a state in which the pushing member 73 is at the pushing position, the pressing piece 87 is positioned such that the front end thereof is at substantially the same position as that of the sharpened portion 82a of the claw body portion 82 in the claw extending direction.

The holding plate 74 is a plate-shaped member having a predetermined bent shape in a side view, and can be elastically deformed. The holding plate 74 extends in the claw extending direction from the lower side opposite to the fixing side of the planting claw 72 on the arm portion 71 in such an orientation that the width direction is the left-right direction. The holding plate 74 is provided on the lower side of the pair of claw body portions 82 so as to face the claw body portions 82. The holding plate 74 is formed of, e.g., a sheet metal having a thickness of about several millimeters.

The holding plate 74 has, as portions forming the bent shape in a side view, a base plate portion 74a, an inclined plate portion 74b, and a tip end bent portion 74c in this order from the rear side (arm portion 71 side) to the front side (tip end side of the claw body portion 82). The position of the tip end of the holding plate 74 substantially coincides with the position of the tip end of the claw body portion 82 in the claw protruding direction.

The base plate portion 74a is a portion extending along the claw extending direction, and is a portion parallel with the claw body portion 82. The base plate portion 74a forms the substantially half of the holding plate 74 in the longitudinal direction thereof. The inclined plate portion 74b is a portion bent at an obtuse angle with respect to the base plate portion 74a. In a side view, the angle between the base plate portion 74a and the inclined plate portion 74b is, for example, about 140°. With the inclined plate portion 74b, an interval between the holding plate 74 and the claw body portion 82 gradually decreases from the rear side to the front side.

The tip end bent portion 74c is a portion bent at a right angle or an obtuse angle with respect to the inclined plate portion 74b. In a side view, the angle between the inclined plate portion 74b and the tip end bent portion 74c is, for example, about 100°. With the tip end bent portion 74c, an interval between the holding plate 74 and the claw body portion 82 gradually increases from the rear side to the front side.

In the holding plate 74, a ridge portion 74d raised upward (toward the claw body portion 82 side) and formed by the inclined plate portion 74b and the tip end bent portion 74c is positioned near a tip end portion of the claw body portion 82. An interval between each of the left and right claw body portions 82 and the ridge portion 74d of the holding plate 74 is slightly smaller than the dimension of the seedling block 110 in the vertical direction. That is, the dimension of the unit block portion 108 in the vertical direction in the seedling mat 100 is slightly greater than the interval between the claw body portion 82 and the ridge portion 74d.

The holding plate 74 functions as a plate spring that sandwiches and holds the seedling block 110 scraped by the claw body portion 82 together with the claw body portion 82. That is, the holding plate 74 sandwiches the seedling block 110 together with the pair of claw body portions 82 with biasing force in a state in which the interval between the holding plate 74 and the claw body portion 82 is increased by elastic deformation as compared to a natural state. The holding plate 74 is supported with fixed to the holding plate support portion 75.

The holding plate support portion 75 is formed of a plate-shaped member of which the plate thickness direction is the left-right direction, and is attached to the base portion 70 of the planting claw device 50 on the side opposite to the planting transmission case 51 side in the left-right direction. The holding plate support portion 75 is fastened and fixed to the base portion 70 with a bolt 88.

An upper edge portion of the holding plate support portion 75 is positioned near the lower side of the arm portion 71. The holding plate 74 is fixed to an upper edge portion of a front portion of the holding plate support portion 75. The holding plate 74 has, on one side (planting transmission case 51 side) of the base plate portion 74a in the left-right direction, a fixing surface portion 74e bent at a right angle to the base plate portion 74a. The holding plate 74 is fastened and fixed to the holding plate support portion 75 at two front and rear locations with bolts 89 penetrating the excavation claw 76 and the holding plate support portion 75 and nuts 90 screwed thereto in a state in which the fixing surface portion 74e is along one side of the holding plate support portion 75 in the left-right direction. Note that the holding plate 74 may be directly attached to the arm portion 71.

The excavation claw 76 is positioned on the lower side of the holding plate 74, and in the left-right direction, is positioned on the side opposite to the planting transmission case 51 side with respect to the holding plate support portion 75. The excavation claw 76 has a pair of claw bodies 77 and a connection portion 78 provided between the pair of claw bodies 77.

The claw body 77 is a plate-shaped member of which the plate thickness direction is the left-right direction, and extends forward in the claw extending direction from the holding plate support portion 75. The claw body 77 has a sharpened shape gradually narrowed from the base side to the tip end side in a side view. In the claw body 77, the position of a rear end portion is at substantially the same position as that of a rear end portion of the holding plate 74 in the claw extending direction, and a tip end portion is positioned at the front of the tip end of the holding plate 74.

The excavation claw 76 is provided in a state in which rear portions of the pair of claw bodies 77 are arranged along the lower side of the base plate portion 74a of the holding plate 74. In the excavation claw 76, the pair of claw bodies 77 is positioned slightly inside the left and right edges of the holding plate 74 in the left-right direction. The connection portion 78 is interposed between the rear portions of the pair of claw bodies 77, and functions as a spacer between the left and right claw bodies 77.

The excavation claw 76 is provided with a rear portion thereof fixed to the holding plate support portion 75. The excavation claw 76 is fixed to the holding plate support portion 75 in a state of being fastened together with the holding plate 74 with the two bolts 89 used for fixing the holding plate 74 to the holding plate support portion 75. The bolt 89 penetrates the pair of claw bodies 77 and the connection portion 78 interposed therebetween, penetrates the holding plate support portion 75 and the fixing surface portion 74e of the holding plate 74, and is screwed to the nut 90.

The excavation claw 76 has a function of excavating, when the planting claw device 50 plants the seedling block 110, the field prior to the holding plate 74 and protecting the holding plate 74 by reducing the contact resistance of the holding plate 74 against the field. In addition, the excavation claw 76 has a function of reducing entanglement of a multifilm with the holding plate 74 by reaching the field prior to the holding plate 74. The multifilm has a film thickness of 0.004 to 0.02 mm, for example.

The configuration of the guide rail 48 will be described with reference to Figs. 11 to 14. The guide rail 48 is provided on the lower side of the seedling mount 42, and supports the seedling mat 100 by contact with the lower end surface portion 100b of the seedling mat 100 placed on the seedling mount 42, thereby defining the position of the seedling mat 100 with respect to the trajectory of the planting claw 72.

The guide rail 48 is formed of a plate-shaped member having a predetermined bent shape so as to have the same constant cross-sectional shape as the shapes of the end surfaces on both sides (shape in a side view) over substantially the entire longitudinal direction. The guide rail 48 schematically has, as portions forming the shape in a side view, a front inclined surface portion 121 inclined rearward and downward along the mount surface of the seedling mount 42 and a rear inclined surface portion 122 having a substantially "V" shape in a side view together with the front inclined surface portion 121, and is formed in a gutter shape by these surface portions.

The guide rail 48 has a configuration in which a first rail member 123 forming a front portion in a plan view and a second rail member 124 forming a rear portion in a plan view are connected by a plurality of connection members 125. An upper portion of the front inclined surface portion 121 is formed by the first rail member 123, and a lower portion of the front inclined surface portion 121 and the rear inclined surface portion 122 are formed by the second rail member 124.

The connection member 125 is positioned on the back side (side opposite to the mount side of the seedling mat 100) of the front inclined surface portion 121 so as to extend over a connection portion 120 between the end surfaces of the first rail member 123 and the second rail member 124. The connection member 125 is a narrow plate-shaped member of which the longitudinal direction is the left-right direction, and the plurality of the connection members 125 is provided in the left-right direction. The connection member 125 connects the first rail member 123 and the second rail member 124 to each other by screwing of fixing screws 126 penetrating each of a rear edge portion of the first rail member 123 and a front edge portion of the second rail member 124. Note that the guide rail 48 may be formed of an integrated rail member.

The guide rail 48 has, at plural locations (four locations) in the longitudinal direction, the notch-shaped scraping openings 49 for positioning portions (unit block portions 108) of the seedling mat 100 to be cut by the planting claw 72. As illustrated in Fig. 13, the scraping opening 49 has, as portions forming the notch shape opened on the rear side, left and right side edge portions 49a facing each other in the left-right direction and a front edge portion 49b along the left-right direction. In addition, chamfered portions 49c inclined with respect to the side edge portions 49a are formed at both left and right corner portions of an opening edge portion of the scraping opening 49. The left and right chamfered portions 49c widen the left-right width of the opening end portion of the scraping opening 49. The scraping opening 49 is formed in a notch shape in an area over the entire front inclined surface portion 121 and rear inclined surface portion 122 in the front-rear direction in a plan view.

As illustrated in Fig. 13, the left-right width dimension G1 of the scraping opening 49, i.e., an interval between the left and right side edge portions 49a, is substantially the same as the width dimension G2 of the planting claw 72 having a predetermined width. Specifically, the guide rail 48 is configured such that the width dimension G1 of the scraping opening 49 is slightly greater than the width dimension G2 of the planting claw 72. As illustrated in Fig. 13, the planting claw device 50 is provided such that the left and right side surfaces of the planting claw 72 are positioned inside the left and right side edge portions 49a of the scraping opening 49 by a predetermined gap G3 in the left-right direction. The size of the gap G3 is, for example, several millimeters (e.g., 3 mm). Note that the planting claw device 50 is configured to perform the planting operation while maintaining a predetermined position in the left-right direction, and the size of the gap G3 is maintained in the planting operation by the planting claw device 50.

The guide rail 48 has a contact support surface portion 130 that contacts the lower end surface portion 100b of the seedling mat 100, and a groove forming portion 133 that forms a recessed groove 131 with respect to the contact support surface portion 130 and forms a space 132 from the lower end surface portion 100b of the seedling mat 100. The contact support surface portion 130 has a shape along the groove forming surface 103a forming the front surface side groove 103 of the seedling mat 100. The contact support surface portion 130 has an inclined support surface portion 134 as a portion along the groove forming surface 103a.

The contact support surface portion 130 is a portion of the rear inclined surface portion 122 on the rear side in the width direction (direction along the front-rear direction in a plan view) of the guide rail 48. The contact support surface portion 130 is provided as a rear upper portion of the rear inclined surface portion 122 schematically forming a surface portion inclined rearward and upward.

In the contact support surface portion 130, the inclined support surface portion 134 is a portion that contacts the groove forming surface 103a of the lower end surface portion 100b of the seedling mat 100 set and placed on the seedling mount 42. The inclined support surface portion 134 is inclined parallel or substantially parallel with the groove forming surface 103a of the lower end surface portion 100b of the set seedling mat 100 according to, e.g., the shape of the front surface side groove 103 of the seedling mat 100.

The contact support surface portion 130 has an edge surface portion 135 forming a rear edge portion of the guide rail 48 on the rear side of the inclined support surface portion 134. The contact support surface portion 130 is formed as a bent surface portion having an obtuse angle in a side view by the inclined support surface portion 134 and the edge surface portion 135.

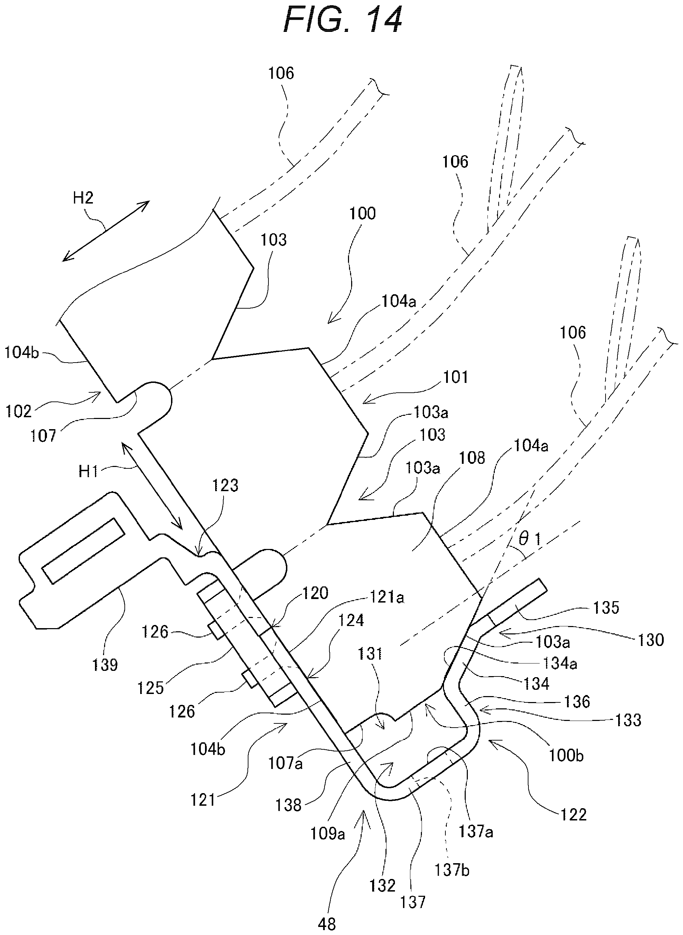

In the example illustrated in Fig. 14, the inclined support surface portion 134 is inclined such that an angle θ1 with respect to a direction orthogonal to the inclination direction (see an arrow H1, hereinafter referred to as a "mount surface inclination direction") of the mount surface of the seedling mount 42 in a side view is about 30°. Note that the inclination angle of the inclined support surface portion 134 is not limited and is appropriately determined according to, e.g., the shape of the front surface side groove 103 of the seedling mat 100.

Hereinafter, a direction orthogonal to the mount surface inclination direction in a side view will be referred to as a mount surface orthogonal direction (see Fig. 14, an arrow H2). The mount surface inclination direction corresponds to the vertical feeding direction of the seedling mat 100. In addition, the vertical direction of the set seedling mat 100 corresponds to the mount surface inclination direction, and the thickness direction of the set seedling mat 100 corresponds to the mount surface orthogonal direction.

The groove forming portion 133 is formed by a front lower portion of the rear inclined surface portion 122 and a rear lower portion of the front inclined surface portion 121. The groove forming portion 133 has, as portions formed by the rear inclined surface portion 122, a rear groove side surface portion 136 which is a surface portion along the mount surface inclination direction in a side view, and a groove bottom surface portion 137 which is a surface portion along the mount surface orthogonal direction in a side view.

In addition, the groove forming portion 133 has, as a portion formed by the front inclined surface portion 121, a front groove side surface portion 138 along the mount surface inclination direction in a side view. The front groove side surface portion 138 is a portion on the lower end side of the front inclined surface portion 121, and is a portion facing the rear groove side surface portion 136 in the mount surface orthogonal direction. The rear groove side surface portion 136 and the front groove side surface portion 138 are, as curved surface portions (round portions), corner portions bent at a right angle with respect to the groove bottom surface portion 137 on both sides of the groove bottom surface portion 137 in the mount surface orthogonal direction.

As described above, in the groove forming portion 133, the rear groove side surface portion 136, the front groove side surface portion 138, and the groove bottom surface portion 137 form a substantially U-shaped groove portion opened on the set seedling mat 100 side and having a substantially rectangular shape in a side view. The lower side of the inclined support surface portion 134 is connected to the upper side of the rear groove side surface portion 136. The rear groove side surface portion 136 and the inclined support surface portion 134 form a bent surface portion having an obtuse angle in a side view.

The upper side of the front groove side surface portion 138 extends, as an upper portion of the front inclined surface portion 121, along the mount surface inclination direction in a side view. A support edge portion 139 having a corner portion as a curved surface portion and formed in a shape bent forward at a right angle is provided at an upper edge portion of the front inclined surface portion 121.

As illustrated in Fig. 14, the seedling mat 100 supported on the guide rail 48 is supported on the guide rail 48 in a state in which the groove forming surface 103a of the end surface portion 100b contacts an inner surface 134a of the inclined support surface portion 134 and a portion on the lower side (lower surface 104b side) of the groove forming surface 103a faces the inside of the recessed groove 131. That is, the end surface portion 100b of the seedling mat 100 is supported on the guide rail 48 by the groove forming surface 103a contacting the inclined support surface portion 134, and the intermediate surface 109a and groove forming surface 107a of the seedling mat 100 face the groove bottom surface portion 137 via the space 132. The inner surface 134a of the inclined support surface portion 134 serves as a sliding surface, i.e., a guide surface, on the horizontally-fed seedling mat 100.

In the guide rail 48, the edge surface portion 135 forming a rear edge portion is, in a side view, a portion extending upward from the upper surface 104a of the seedling mat 100 in the mount surface orthogonal direction. In the guide rail 48, the surface 121a of the front inclined surface portion 121 is a surface that contacts the lower surface 104b of the row block portion 104 at the low end. The front inclined surface portion 121 has, in the mount surface inclination direction, a length (width) including the entire row block portion 104 of at least one row.

As described above, the guide rail 48 has, as portions forming the bent shape in a side view, the front inclined surface portion 121 having the front groove side surface portion 138 as the lower portion, the rear groove side surface portion 136 and the groove bottom surface portion 137 forming the recessed groove 131 together with the front groove side surface portion 138, and the inclined support surface portion 134 and the edge surface portion 135 forming the contact support surface portion 130.

In the guide rail 48, an auxiliary cutting portion 140 in which the recess of the recessed groove 131 is eliminated or reduced is provided at an opening end portion of the recessed groove 131 for the scraping opening 49. The auxiliary cutting portions 140 are provided on both left and right sides of each scraping opening 49, and the auxiliary cutting portions 140 on both left and right sides of each scraping opening 49 are formed symmetrically in the left-right direction. Note that no auxiliary cutting portions 140 are illustrated in Fig. 14.

The auxiliary cutting portions 140 are portions formed by partially raising the recessed groove 131 by the depth of the recessed groove 131 on both left and right sides of the scraping opening 49. The auxiliary cutting portion 140 is provided by attaching an auxiliary cutting member 150 to the opening end portion of the recessed groove 131 for the scraping opening 49 in the guide rail 48. The auxiliary cutting member 150 is a substantially rectangular plate-shaped or block-shaped metal member, and is fixed to the guide rail 48 with fitted in the recessed groove 131.

As illustrated in Figs. 11 and 13, the auxiliary cutting member 150 has a rectangular outer shape in a plan view, and is provided in an orientation that the longitudinal direction thereof is the direction of extension of the recessed groove 131. The auxiliary cutting member 150 has a first end surface 151 which is an end surface on one side in the longitudinal direction and a second end surface 152 which is an end surface on the other side in the longitudinal direction. The dimension of the auxiliary cutting member 150 in the width direction thereof is substantially the same as the width dimension of the recessed groove 131, and is provided with fitted between the rear groove side surface portion 136 and the front groove side surface portion 138 of the recessed groove 131. The auxiliary cutting member 150 also has a horizontal upper surface 156.

The auxiliary cutting member 150 is fixed to the guide rail 48 with one screw 161. The screw 161 penetrates the groove bottom surface portion 137 of the recessed groove 131 from the lower side of the guide rail 48, and is screwed into a screw hole 158 formed in the auxiliary cutting member 150. The screw hole 158 is formed to penetrate the auxiliary cutting member 150 in the thickness direction thereof. A hole 137b through which the screw 161 penetrates is formed in the groove bottom surface portion 137 (see Fig. 14).

The auxiliary cutting member 150 is provided in such an orientation that the first end surface 151 faces the scraping opening 49 side of the guide rail 48. The auxiliary cutting member 150 is provided such that the first end surface 151 is flush with an end surface forming the side edge portion 49a of the scraping opening 49.

In the configuration in which the auxiliary cutting member 150 is attached to the recessed groove 131 of the guide rail 48 as described above, the upper surface 156 forms an auxiliary cutting surface obtained by raising the bottom surface 137a of the recessed groove 131 by the groove depth. That is, the auxiliary cutting portion 140 is a portion in which the recess is eliminated in the recessed groove 131, and in the auxiliary cutting portion 140, the auxiliary cutting member 150 forms the upper surface 156 as a raised surface with respect to the bottom surface 137a of the recessed groove 131 by the thickness of the auxiliary cutting member 150. Note that the bottom surface 137a is the inner surface of the groove bottom surface portion 137.

In the present embodiment, the auxiliary cutting member 150 has substantially the same thickness as the depth of the recessed groove 131, and at the arrangement location of the auxiliary cutting member 150 in the recessed groove 131, substantially the entire recessed groove 131 in the depth direction thereof is filled with the auxiliary cutting member 150. That is, at the arrangement location of the auxiliary cutting member 150, the opening end portion of the recessed groove 131 is closed by the auxiliary cutting member 150, and the recess of the recessed groove 131 is eliminated. Note that the auxiliary cutting portion 140 may be provided as a portion of the shape of the guide rail 48 itself instead of the configuration in which the auxiliary cutting member 150 is attached to the guide rail 48.

Operation of the planting claw device 50 having the above-described configuration will be described with reference to Figs. 15 and 16. Note that in Figs. 15 and 16, for the sake of convenience in description, the groove forming arm 200, the support mechanism thereof, and the like which will be described later are not shown. As illustrated in Figs. 15A to 15C and Figs. 16A and 16B, the planting claw device 50 is continuously turned, in response to rotation of the rotary case 52 (see Fig. 6) via the drive shaft 52a, so as to repeatedly perform a process of taking out (scraping) the seedling block 110 from the seedling mat 100 supported on the guide rail 48, delivering the seedling block 110 in a state of being temporarily held, and planting the seedling block 110.

Fig. 15A illustrates a state immediately before the planting claw device 50 scrapes the seedling mat 100. As illustrated in Fig. 15A, the planting claw device 50 moves, from the upper rear side, the claw body portion 82 closer to the guide rail 48 supporting the seedling mat 100 from the lower side. The planting claw device 50 sets one unit block portion 108 of the row block portion 104 at the lower end of the seedling mat 100 supported on the guide rail 48 as a scraping target, and moves the claw body portion 82 closer to such a unit block portion 108. The unit block portion 108 as the scraping target is positioned on the scraping opening 49 of the guide rail 48.

As illustrated in Fig. 15B, the planting claw device 50 cuts the tip end of the claw body portion 82 into the seedling mat 100 from the upper front surface side groove 103 of the unit block portion 108 as the scraping target.

Then, as the planting claw device 50 moves forward and downward so as to be swung down, the unit block portion 108 is scraped by the planting claw 72 and is held by the planting claw device 50 as the seedling block 110 as illustrated in Fig. 15C. Here, the unit block portion 108 is scraped with sandwiched between the pair of claw body portions 82 and the holding plate 74. In scraping of the unit block portion 108, guide action is obtained by the tip end bent portion 74c expanding the interval between the tip end portions of the claw body portion 82 and the holding plate 74. In addition, the unit block portion 108 as the scraping target is guided by the groove shape of the front surface side groove 103 that receives the tip end of the claw body portion 82.

In scraping of the seedling mat 100, the planting claw device 50 acts on the seedling mat 100 while drawing a predetermined trajectory E1 (see Fig. 12) with respect to the guide rail 48 as the movement trajectory of the tip end portion of the claw body portion 82 in a side view. The trajectory E1 has an upwardly-raised curved shape near the guide rail 48, and has a loop shape as a whole. The tip end portion of the claw body portion 82 passes near the boundary (Fig. 10, virtual line B1) between adjacent ones of the row block portions 104 in a side view.

In scraping of the seedling mat 100, since the auxiliary cutting portion 140 is provided at the opening end portion of the guide rail 48 for the scraping opening 49, favorable cutting performance can be obtained. That is, the auxiliary cutting portion 140 can fill the space 132 of the recessed groove 131, which is a clearance space for the seedling mat 100, on the lower side of the seedling mat 100 receiving action of the planting claw 72 from the upper side, and the seedling mat 100 can be supported from the lower side also at the formation location of the recessed groove 131, so that relief of the seedling mat 100 can be prevented and favorable shearing action can be obtained. Accordingly, stable scraping can be performed.

As illustrated in Fig. 15C, the seedling block 110 scraped by the planting claw 72 is sandwiched and held between the pair of claw body portions 82 and the holding plate 74. In the holding plate 74 holding the seedling block 110 together with the pair of claw body portions 82, the ridge portion 74d is a main contact portion for the seedling block 110. For example, in a state of holding the seedling block 110, due to elastic deformation of the holding plate 74, the interval between the pair of claw body portions 82 and the holding plate 74 is increased as compared to that in a state before the seedling block 110 is held.

The pressing piece 87 is positioned on the rear side of the seedling block 110 held by the planting claw device 50. In addition, in the planting claw device 50, the space 85 between the left and right claw body portions 82 and the space 95 (see Fig. 11) of the pressing piece 87 form a space where the seedling 106 of the held seedling block 110 is positioned, and contact of the seedling 106 with the planting claw device 50 is avoided.

As illustrated in Fig. 16A, the planting claw device 50 holding the seedling block 110 moves downward while directing a tip end portion of the planting claw 72 downward. Then, as illustrated in Fig. 16B, the planting claw device 50 pushes out (releases) the seedling block 110 by the pushing member 73 at predetermined timing when the tip end portion of the planting claw 72 is positioned in the field lower than a field surface 91 which is the surface of the field. The planting claw device 50 pushes out the seedling block 110 in the claw extending direction by the pushing member 73 by moving the pushing member 73 to the front side with respect to the arm portion 71 (see an arrow F1). The seedling block 110 is released with the force of pushing by the pushing member 73, and is planted at a predetermined planting depth in the field.

In pushing of the seedling block 110 by the pushing member 73, the pushing member 73 presses the pressing surface 87e of the pressing piece 87 as a contact surface for the seedling block 110 against the seedling block 110. The contact surface of the pressing surface 87e for the seedling block 110 is a surface corresponding to the upper surface 104a of the seedling mat 100. In addition, the pushing member 73 moves to the front side with biasing force with respect to the arm portion 71, and pushes out the seedling block 110 such that the seedling block 110 is popped out. Further, since the seedling block 110 is covered with the holding plate 74 from the rear side when planted in the field, the seedling block 110 is protected from collision with the field.

In addition, when acting on the field surface 91, the planting claw device 50 excavates the field surface 91 with the excavation claw 76 prior to the holding plate 74. As a result, the contact resistance of the holding plate 74 against the field surface 91 is reduced, the holding plate 74 is protected, and entanglement of the multifilm with the holding plate 74 is reduced.

The planting claw device 50 having planted the seedling block 110 in the field moves upward from the field surface 91 while gradually returning the pushing member 73 at the pushing position to the holding position. Then, the planting claw device 50 returns to the position at which the planting claw 72 is on the rear upper side of the guide rail 48, and scrapes the next unit block portion 108 as the scraping target and plants the seedling. In this manner, the planting claw device 50 performs a process of scraping one unit block portion 108 and planting the seedling block 110 in one cycle while turning so as to draw the loop-shaped trajectory E1 with the tip end portion of the claw body portion 82, and continuously plants the seedlings in line with the predetermined intrarow spacing as the machine body moves forward.

In the seedling mat 100, the row block portion 104 positioned at the lower end, i.e., the row block portion 104 positioned on the guide rail 48, is the scraping target in one step of horizontal feeding of the seedling mat 100 in any of the left and right directions. By the continuous planting operation by the planting claw device 50 while the seedling mat 100 is being horizontally fed in one of the left and right directions, the seedling mat 100 is vertically fed by one row by the delivery belt 47 at predetermined timing when all the unit block portions 108 of the row block portion 104 positioned at the lower end are scraped.

After the seedling mat 100 has been vertically fed, for the row block portion 104 positioned at the lower end next, the unit block portion 108 is sequentially and continuously scraped while the seedling mat 100 is being horizontally fed to the other one of the right and left directions. In this manner, the seedling mat 100 is intermittently vertically fed while reciprocating in the left-right direction by horizontal feeding, and is sequentially scraped from the lower row block portion 104 by the planting claw device 50.

As described above, the seedling transplanter 1 is configured such that the seedling mat 100 placed on the seedling mount 42 is cut with the planting claw 72 one by one and the seedlings 106 are continuously planted in the field while feeding the seedling mat 100 in the horizontal feeding direction along the left-right direction of the machine body and intermittently feeding the seedling mat 100 in the vertical feeding direction along the front-rear direction of the machine body in a plan view.

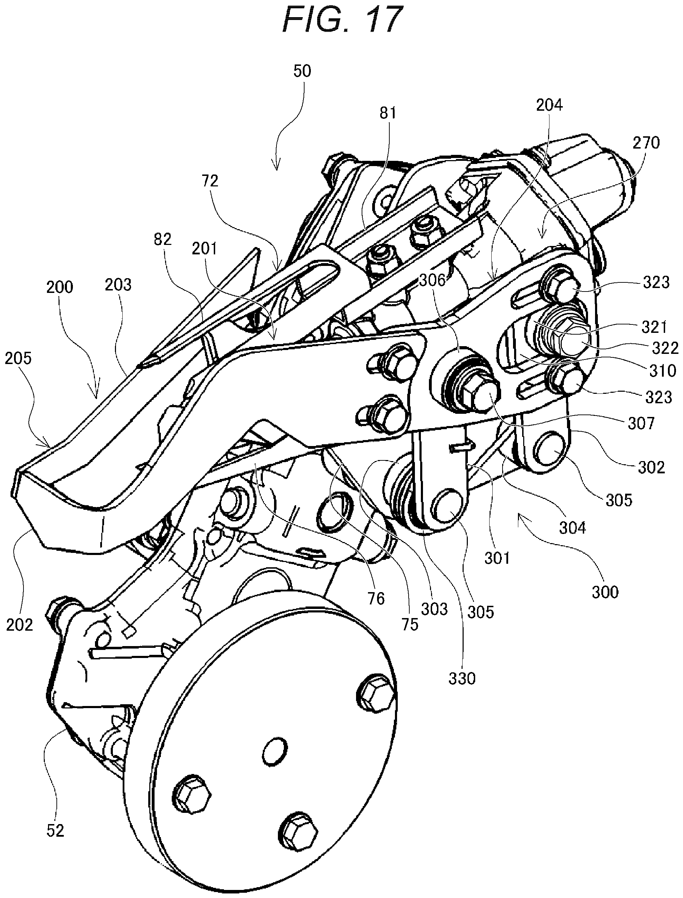

As illustrated in Fig. 6 and Figs. 17 to 21, the seedling transplanter 1 having the above-described configuration includes the groove forming arm 200 as a configuration for performing pretreatment on the field, such as forming a groove in the field or cutting the multifilm when planting the seedlings by the planting claw 72 of the seedling transplanting device 3. The groove forming arms 200 are each provided corresponding to the four planting claw devices 50, and the seedling transplanting device 3 has four groove forming arms 200. The groove forming arm 200 and a later-described link mechanism 300 and a later-described cam mechanism 400 provided for the groove forming arm 200 are bilaterally symmetrical with respect to the planting transmission case 51 side as the center in a configuration in which the planting claw devices 50 are arranged on both left and right sides of the planting transmission case 51.

The groove forming arm 200 is provided with attached to the planting claw device 50. The groove forming arm 200 is formed in an elongated shape, and is provided such that the longitudinal direction thereof is along the claw extending direction. The groove forming arm 200 is provided near the planting claw 72 for the planting claw device 50.

The groove forming arm 200 is provided with movably supported on the planting claw device 50 by the link mechanism 300. With this configuration, the groove forming arm 200 is provided so as to move relative to the planting claw 72.

The groove forming arm 200 has, as a whole, a substantially "U" shape opened on the rear side, and is provided so as to surround the planting claw device 50 from the left and right sides and the front side. The groove forming arm 200 has, as portions forming the substantially "U" shaped outer shape, an arm body portion 201, an arm tip end portion 202, and an auxiliary arm portion 203. These portions forming the groove forming arm 200 are provided as plate-shaped portions having predetermined shapes.

The groove forming arm 200 has, as components thereof, a support plate 204 and a cutter member 205. The support plate 204 and the cutter member 205 are connected and fixed to each other to form the integrated groove forming arm 200.

The support plate 204 is a substantially rectangular plate-shaped member of which the longitudinal direction is the direction of extension of the groove forming arm 200 in a side view, and forms a support base portion of the groove forming arm 200. Specifically, the support plate 204 has a front portion narrower than a rear portion, and has a gently-tapered shape from the rear side to the front side as a shape (plate surface shape) in a side view.

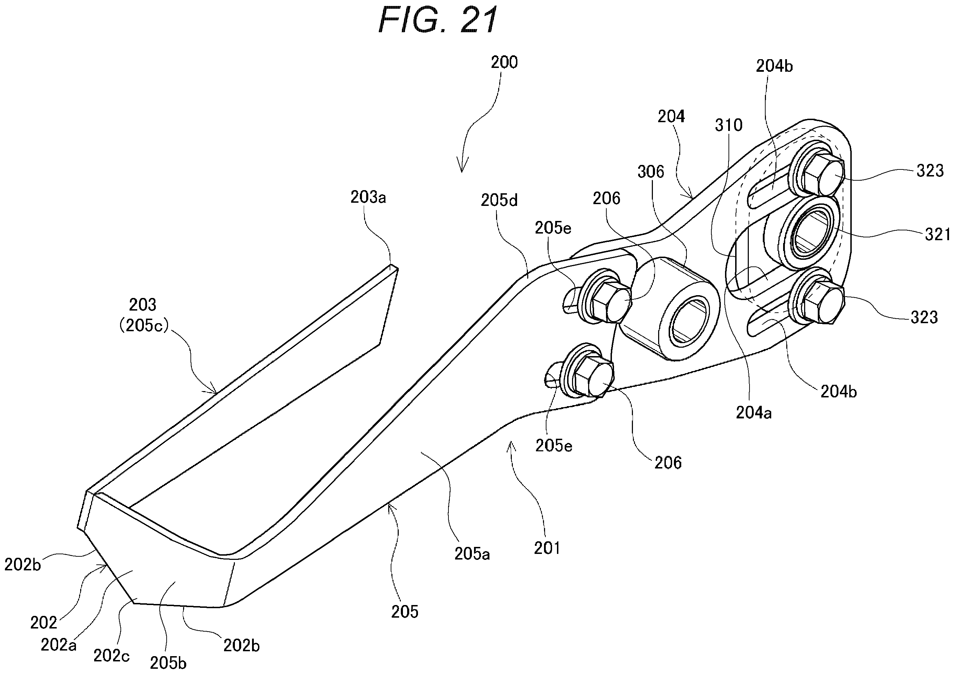

The cutter member 205 is a bent plate-shaped member having a substantially "U" shape in a plan view, and forms a body portion of the groove forming arm 200. The cutter member 205 has, as surface portions forming the substantially "U" shape, an outer surface portion 205a, a front surface portion 205b, and an inner surface portion 205c (see Fig. 21).

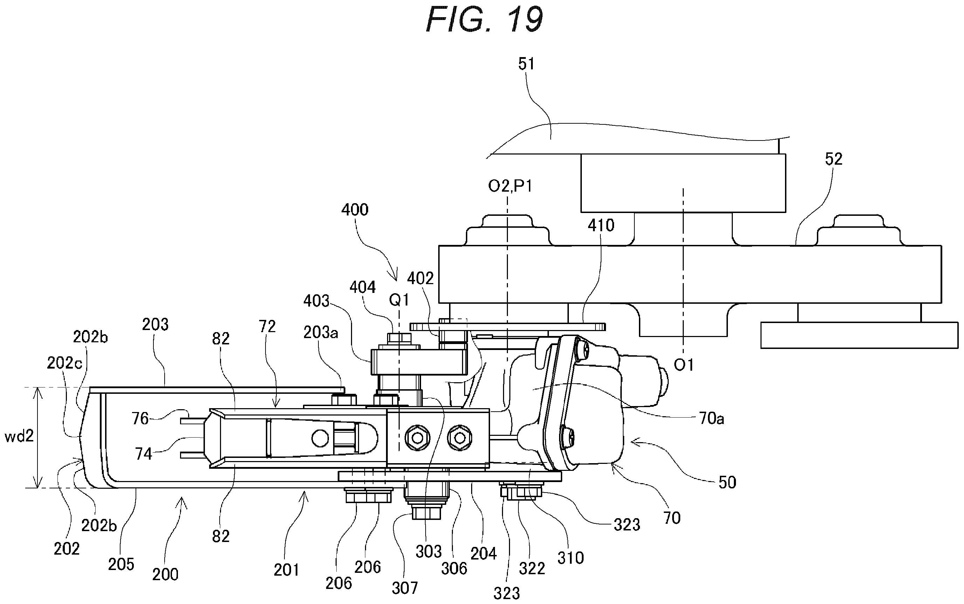

The arm body portion 201 is provided at a position shifted to one side in the left-right direction with respect to the planting claw 72. Regarding arrangement of the arm body portion 201, one side in the left-right direction with respect to the planting claw 72 is opposite to the planting transmission case 51 side in the left-right direction. Note that in description of the groove forming arm 200, in the left-right direction, the planting transmission case 51 side (upper side in Fig. 19) is defined as the inside, and the side (lower side in Fig. 19) opposite to the planting transmission case 51 side is defined as the outside. The arm body portion 201 is a plate-shaped portion of which the plate thickness direction is the left-right direction, and is formed by the support plate 204 and the outer surface portion 205a of the cutter member 205.

The cutter member 205 is fixed to the support plate 204 in a state in which a rear end portion of the outer surface portion 205a overlaps with a front end portion of the support plate 204 from the outside. The outer surface portion 205a has, at the rear end portion thereof, substantially the same width as that of the front end portion of the support plate 204, and has a continuous shape together with the support plate 204 at a front-rear intermediate portion of the arm body portion 201.

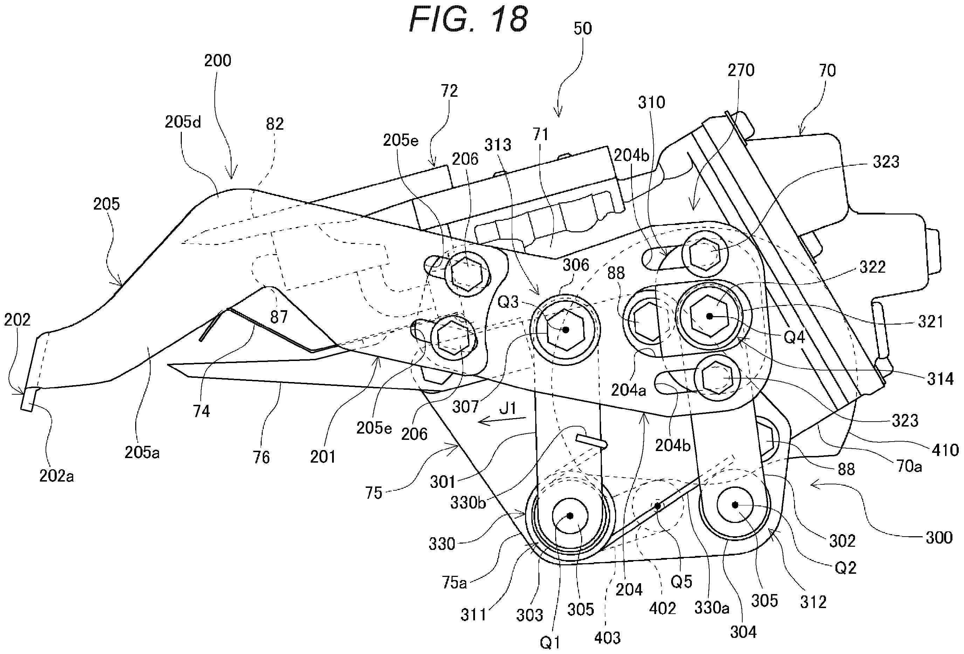

In addition, the outer surface portion 205a of the cutter member 205 forming a front portion of the arm body portion 201 has a substantially mountain-shaped bent shape forming a top portion 205d at a front-rear center portion in a side view (see Fig. 18). In a side view, the outer surface portion 205a has a shape narrower on the front side than the base side which is the side connected to the support plate 204.

The arm tip end portion 202 is provided on the tip end side of the arm body portion 201. The arm tip end portion 202 is positioned at the front with respect to the tip end of the excavation claw 76 of the planting claw device 50. The arm tip end portion 202 is a plate-shaped portion bent inward in the left-right direction at a right angle to the outer surface portion 205a of the cutter member 205, and is formed by the front surface portion 205b of the cutter member 205. As described above, the arm tip end portion 202 is a portion where the outside in the left-right direction as one end side in the left-right direction is connected to a tip end portion of the arm body portion 201 and is continuous to the tip end portion of the arm body portion 201.

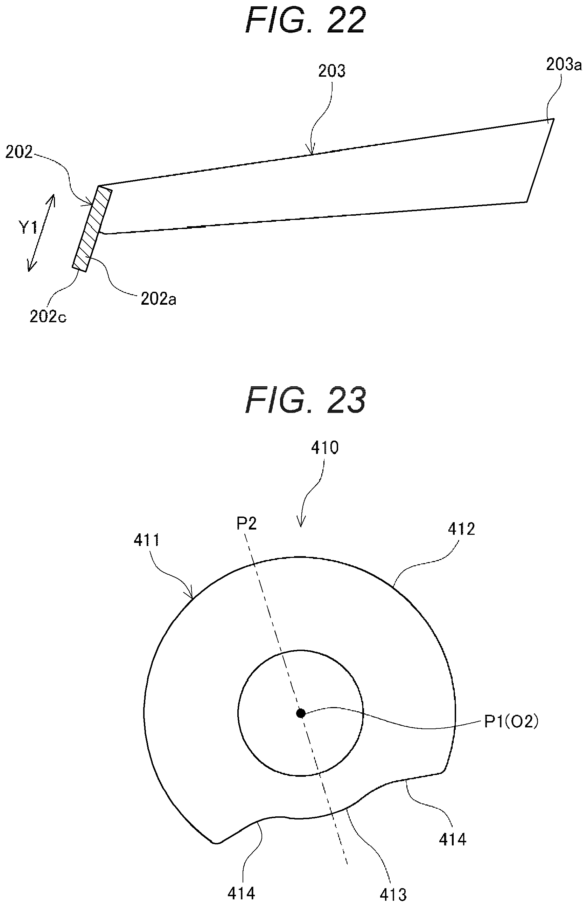

The arm tip end portion 202 is an inclined surface portion inclined forward and downward with respect to the direction orthogonal to the claw extending direction in a side view. The arm tip end portion 202 is a plate-shaped portion having a linear shape in a side cross-sectional view (see Fig. 22). Fig. 22 is a left side cross-sectional view of the left-right center position of the groove forming arm 200. As illustrated in Fig. 22, the arm tip end portion 202 has a linear shape with a predetermined direction (see an arrow Y1) as an extending direction in a side cross-sectional view.

A lower edge portion of the arm tip end portion 202 is a tip end protruding portion 202a protruding downward with respect to tip end portions of the arm body portion 201 and the auxiliary arm portion 203. The arm tip end portion 202 has, at the lower edge portion thereof, a downwardly-raised mountain shape forming a top portion 202c by a pair of inclined side portions 202b. The top portion 202c is an obtuse corner portion formed by the pair of inclined side portions 202b.

The auxiliary arm portion 203 is provided at a position shifted to the other side in the left-right direction with respect to the planting claw 72, i.e., the planting transmission case 51 side (inside). That is, the auxiliary arm portion 203 is positioned on the opposite side of the planting claw 72 from the arm body portion 201 side in the left-right direction. The auxiliary arm portion 203 is a plate-shaped portion bent, with the left-right direction as a plate thickness direction, rearward at a right angle to the front surface portion 205b of the cutter member 205, and is formed by the inner surface portion 205c of the cutter member 205. As described above, the auxiliary arm portion 203 is a portion where the front end side as one end side is connected to the inside in the left-right direction as the other end side of the arm tip end portion 202 in the left-right direction and is continuous to the inside of the arm tip end portion in the left-right direction.

The auxiliary arm portion 203 is a relatively-narrow portion as compared to the outer surface portion 205a of the cutter member 205, has a substantially constant width, is inclined in substantially the same direction as that of a front portion of the outer surface portion 205a, and extends substantially in a linear shape in a side view. The auxiliary arm portion 203 has a sharpened portion 203a having an acute angle on the upper side of a rear end portion. In the state illustrated in Fig. 19, in the auxiliary arm portion 203, the sharpened portion 203a is positioned near an inner (upper side in Fig. 19) rear portion of the claw body portion 82 of the planting claw 72 in the left-right direction

The cutter member 205 is fixed to the support plate 204 with two bolts 206 as fixing members. The two bolts 206 are positioned on both sides of the arm body portion 201 in the width direction thereof at an overlapping portion of the outer surface portion 205a of the cutter member 205 and the support plate 204. The bolt 206 penetrates a hole 205e formed in a rear end portion of the outer surface portion 205a, and is screwed into a screw hole formed in a front end portion of the support plate 204.

The hole 205e through which the bolt 206 penetrates is a long hole of which the longitudinal direction is a direction along the direction of extension of the cutter member 205 from the support plate 204. With this configuration, it is possible to adjust a position at which the cutter member 205 is fixed to the support plate 204 in the direction of extension of the cutter member 205. Adjustment of the fixing position of the cutter member 205 on the support plate 204 is position adjustment in a direction of approaching/separating the arm tip end portion 202 with respect to a tip end portion of the planting claw 72.

The link mechanism 300 will be described. The link mechanism 300 supports the groove forming arm 200 such that the groove forming arm 200 reciprocates in the front-rear direction on the holding plate support portion 75 forming the planting claw device 50. The holding plate support portion 75 is fixed to a case body 70a forming the base portion 70 of the planting claw device 50 at plural locations with the bolts 88. The holding plate support portion 75 has a substantially rectangular or substantially trapezoidal outer shape in a side view, and a lower edge portion thereof is a downwardly-protruding portion 75a protruding downward from the case body 70a forming the base portion 70 (see Fig. 18). The holding plate support portion 75 is positioned below the arm portion 71.

The link mechanism 300 includes, as two link arms, a front arm 301 as a first link arm positioned on the front side and a rear arm 302 as a second link arm positioned on the rear side. The front arm 301 and the rear arm 302 are linear plate-shaped members of which the plate thickness directions are the left-right direction.

Of the front arm 301 and the rear arm 302, one end side in the longitudinal direction is turnably supported on the holding plate support portion 75 on the planting claw device 50 side, and the other end side is turnably supported on the groove forming arm 200 side. Both the arms 301, 302 have substantially the same length, and are provided substantially parallel with each other. Both the arms 301, 302 are provided at positions outside the holding plate support portion 75 in the left-right direction and positions inside the support plate 204 forming the groove forming arm 200 in the left-right direction. That is, both the arms 301, 302 are positioned between the holding plate support portion 75 and the support plate 204 in the left-right direction.

The front arm 301 and the rear arm 302 are turnably supported, at lower end portions of the arms, with, e.g., shaft-shaped shaft support members 305 via bearing members (not shown) on a front boss portion 303 and a rear boss portion 304 provided at the front and rear of the downwardly-protruding portion 75a of the holding plate support portion 75. The front boss portion 303 and the rear boss portion 304 are portions protruding in a cylindrical shape to both left and right sides with respect to a plate-shaped body portion of the holding plate support portion 75. A shaft support portion of a lower end portion of the front arm 301 on the front boss portion 303 is a front fixing shaft support portion 311, and a shaft support portion of a lower end portion of the rear arm 302 on the rear boss portion 304 is a rear fixing shaft support portion 312 (see Fig. 18).

The front arm 301 is turnably supported, at an upper end portion of the arm, with, e.g., a shaft support bolt 307 as a shaft support member via a bearing member (not shown) on a boss portion 306 provided at a substantially center portion of the support plate 204. The boss portion 306 is a portion protruding in a cylindrical shape to both left and right sides with respect to the plate-shaped body portion of the support plate 204, and is provided at a position at the rear of a portion of the support plate 204 fixed to the outer surface portion 205a of the cutter member 205. A shaft support portion of an upper end portion of the front arm 301 on the boss portion 306 is a front movement shaft support portion 313 (see Fig. 18).

The rear arm 302 is turnably supported, at an upper end portion of the arm, on a connection plate 310 attached to the support plate 204. That is, the upper end portion of the rear arm 302 is pivotally supported on the support plate 204 via the connection plate 310.

The connection plate 310 is a plate-shaped member having a substantially rounded rectangular shape or a substantially oval shape, is positioned inside a rear end portion of the support plate 204 in the left-right direction, and is provided in such an orientation that the longitudinal direction thereof is the width direction of the support plate 204. The connection plate 310 is provided so as to be entirely positioned within the area of the outer shape of the support plate 204 in a side view. The connection plate 310 has a boss portion 321 at a substantially center portion.

The rear arm 302 is turnably supported, at an upper end portion of the arm, with, e.g., a shaft support bolt 322 as a shaft support member via a bearing member (not shown) on the boss portion 321 of the connection plate 310. The boss portion 321 is a portion protruding in a cylindrical shape to both left and right sides with respect to a plate-shaped body portion of the connection plate 310. A clearance hole 204a for avoiding contact with the boss portion 321 of the connection plate 310 is formed so as to penetrate the support plate 204. A shaft support portion of the upper end portion of the rear arm 302 on the boss portion 321 is a rear movement shaft support portion 314 (see Fig. 18).

The connection plate 310 is fixed, at both end portions in the longitudinal direction thereof, to the support plate 204 at two locations with bolts 323 as fixing members. The bolt 323 penetrates a hole 204b formed in a rear portion of the support plate 204, and is screwed into a screw hole formed in the connection plate 310. The portions fixed with the bolts 323 are positioned on both sides of the boss portion 321 in the longitudinal direction of the connection plate 310.

The hole 204b through which the bolt 323 penetrates is a long hole of which the longitudinal direction is a direction along the longitudinal direction of the groove forming arm 200 in a side view. With this configuration, it is possible to adjust a position at which the connection plate 310 is fixed to the support plate 204. Adjustment of the fixing position of the connection plate 310 on the support plate 204 is adjustment of the position of the rear movement shaft support portion 314 on the support plate 204.

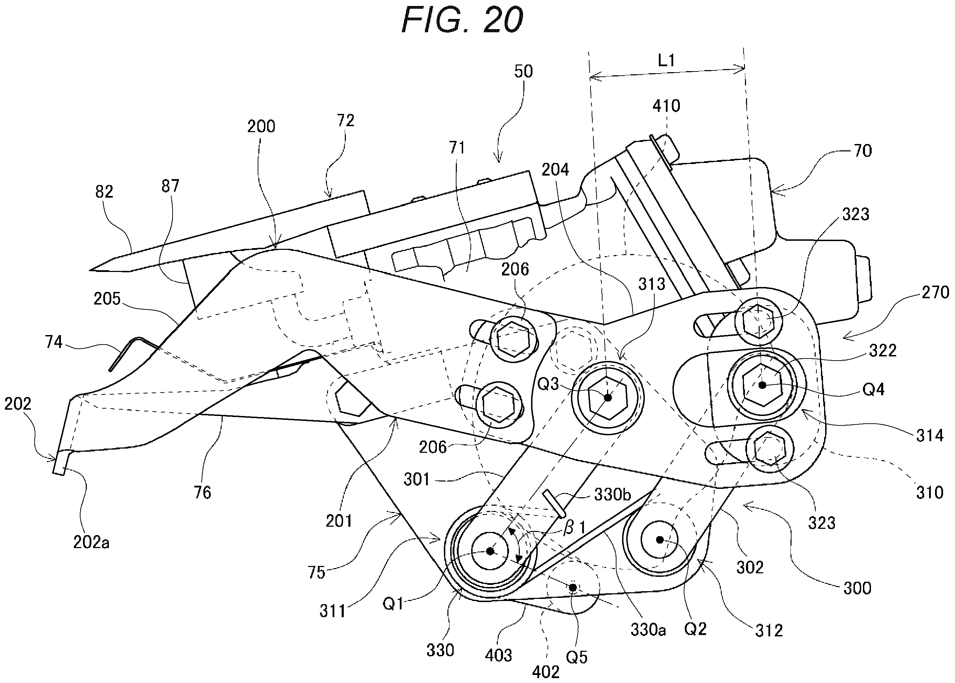

That is, by adjustment of the fixing position of the connection plate 310 on the support plate 204, an inter-axis distance L1 (see Fig. 20) between the turn axis Q3 of the front movement shaft support portion 313 and the turn axis Q4 of the rear movement shaft support portion 314 is adjusted. The clearance hole 204a for the boss portion 321 is formed as a long hole having such a length that the boss portion 321 does not contact the support plate 204 in an area where the position of the connection plate 310 on the support plate 204 is adjusted by the hole 204b and having a longitudinal direction aligned with the hole 204b.

As described above, the link mechanism 300 including the two arms of the front arm 301 and the rear arm 302 movably connects and supports the groove forming arm 200 on the holding plate support portion 75 in a four-node link form in which the axes of the four shaft support portions of the front fixing shaft support portion 311, the rear fixing shaft support portion 312, the front movement shaft support portion 313, and the rear movement shaft support portion 314 are set as nodes. The link mechanism 300 turns both the front arm 301 and the rear arm 302 relative to the front fixing shaft support portion 311 and the rear fixing shaft support portion 312 of which positions on the planting claw device 50 side are fixed, thereby moving the front movement shaft support portion 313 and the rear movement shaft support portion 314 provided on the groove forming arm 200 side.

The front arm 301 and the rear arm 302 turn about the shaft support portions of the front fixing shaft support portion 311 and the rear fixing shaft support portion 312 to reciprocate the groove forming arm 200 back and forth relative to the planting claw device 50. In reciprocation of the groove forming arm 200, a distance between the axes of the front fixing shaft support portion 311 and the rear fixing shaft support portion 312 (distance between the turn axis Q1 of the front fixing shaft support portion 311 and the turn axis Q2 of the rear fixing shaft support portion 312) and a distance between the axes of the front movement shaft support portion 313 and the rear movement shaft support portion 314 (distance between the turn axis Q3 and the turn axis Q4) are constant.

The groove forming arm 200 movably supported by the link mechanism 300 as described above has a standby posture (see Fig. 20) and a groove forming posture (see Fig. 18) as a position posture in reciprocation, i.e., a position posture relative to the planting claw 72. The standby posture of the groove forming arm 200 is a position posture at the timing when the planting claw 72 cuts the seedling mat 100. The groove forming posture of the groove forming arm 200 is a position posture moved forward with respect to the planting claw 72 in planting of the seedlings (seedling block 110) in the field. Note that Fig. 19 illustrates a state in which the groove forming arm 200 is in the groove forming posture.

The link mechanism 300 biases the groove forming arm 200 toward the groove forming posture side by a groove forming arm return spring 330. The groove forming arm return spring 330 is a so-called torsion spring, and has extending portions 330a, 330b on both end sides of a coiled portion (see Fig. 18). The groove forming arm return spring 330 is provided, at the front fixing shaft support portion 311, in a state in which the coiled portion is fitted onto the front boss portion 303.

Of the groove forming arm return spring 330, one extending portion 330a extends rearward to contact the rear boss portion 304 from above, and the other extending portion 330b is locked to the front arm 301. The other extending portion 330b is locked to the front arm 301 in such a manner that a tip end portion thereof is bent to contact the rear side of an intermediate portion of the front arm 301.

The groove forming arm return spring 330 biases, with biasing force in a direction of moving away the extending portions 330a, 330b from each other, the front arm 301 on the holding plate support portion 75 in a direction in which the groove forming arm 200 moves forward, i.e., in the counterclockwise rotation direction in a left side view (see Fig. 18, an arrow J1). Accordingly, the groove forming arm 200 is biased to the groove forming posture side with respect to the planting claw device 50.

The groove forming arm 200 reciprocates relative to the planting claw device 50 in conjunction with rotation of the planting claw device 50, which performs the predetermined planting operation in association with rotation of the rotary case 52, relative to the rotary case 52. The groove forming arm 200 performs periodic reciprocation operation with one rotation in rotation of the planting claw device 50 relative to the rotary case 52 as one cycle. Fig. 19 illustrates a case side rotation axis O1 as a rotation axis which is the center of rotation of the rotary case 52 relative to the planting transmission case 51 and coincides with the axis of the drive shaft 52a (see Fig. 3), and a claw side rotation axis O2 as a rotation axis which is the center of rotation of the planting claw device 50 relative to the rotary case 52 and coincides with the axis of the rotation shaft 50a (see Fig. 3).

The groove forming arm 200 reciprocates in conjunction with rotation (hereinafter, referred to as "relative rotation of the planting claw device 50") of the planting claw device 50 relative to the rotary case 52 about the claw side rotation axis O2 by the cam mechanism 400. That is, the cam mechanism 400 converts relative rotation of the planting claw device 50 into reciprocating turn of the front arm 301 and the rear arm 302 of the link mechanism 300, thereby reciprocating the groove forming arm 200.

The groove forming arm 200 changes, by the cam mechanism 400 including a cam plate 410 as a cam, the position posture relative to the planting claw 72 in conjunction with operation of the planting claw 72. The cam plate 410 is provided on the rotary case 52 rotatably supporting the planting claw device 50 including the planting claw 72, and changes the position of the groove forming arm 200 relative to the planting claw 72 with rotation of the planting claw device 50.

The cam plate 410 is a substantially discoid member, and is provided in a fixed state on the rotary case 52 by a fixing member (not shown). That is, the cam plate 410 is a portion that rotates integrally with the rotary case 52. The cam plate 410 is interposed, in such an orientation that the plate thickness direction thereof is the left-right direction, between the rotary case 52 and the case body 70a of the planting claw device 50 (see Fig. 19).

As illustrated in Fig. 23, the cam plate 410 has an outer shape (plate surface shape) in which a part of the circular outer peripheral side is cut out in a substantially linear shape. In the cam plate 410, an outer peripheral surface forming the outer shape of the cam plate 410 as viewed in the axial direction of the center axis P1 along the left-right direction is a cam surface 411 serving as an action surface on a later-described guide roller 402. The position of the center axis P1 of the cam plate 410 coincides with the claw side rotation axis O2 (see Fig. 19) of the planting claw device 50. Note that Fig. 23 illustrates one example of the shape of the cam surface 411.

As illustrated in Fig. 23, the cam surface 411 has a first arc cam surface portion 412 and a second arc cam surface portion 413 provided on the opposite side of the position of the center axis P1 from the first arc cam surface portion 412. Each of the first arc cam surface portion 412 and the second arc cam surface portion 413 has an arc shape centered on the position of the center axis P1 of the cam plate 410. The cam plate 410 has a line-symmetrical shape with respect to a predetermined line P2 passing through the center axis P1.

In the present embodiment, the radius of a circumferential shape along which the second arc cam surface portion 413 extends is about 1/3 of the radius of a circumferential shape along which the first arc cam surface portion 412 extends. The first arc cam surface portion 412 is formed over an angular range of about 260° in the circumferential direction about the center axis P1. The second arc cam surface portion 413 is formed over an angular range of about 45° in the circumferential direction about the center axis P1.

In the cam surface 411, a linear cam surface 414, which is a linear cam surface portion, is formed between end portions of the first arc cam surface portion 412 and the second arc cam surface portion 413. The linear cam surfaces 414 are positioned on both sides of the line P2. The linear cam surfaces 414 smoothly connect the end portions of the first arc cam surface portion 412 and the second arc cam surface portion 413 to each other.

In addition, the cam mechanism 400 has, as a configuration provided on the planting claw device 50 side, the guide roller 402 acting on the cam plate 410 and a roller support arm 403 supporting the guide roller 402 on the holding plate support portion 75.

The roller support arm 403 is provided inside the holding plate support portion 75 in the left-right direction. The roller support arm 403 is an arm-shaped member, and one end side thereof is turnably supported by, e.g., a bolt-shaped shaft support member 404 via a bearing member (not shown) on the front boss portion 303 supporting the front arm 301 (see Fig. 19).

The roller support arm 403 is provided such that the turn axis thereof coincides with the front arm 301 and a positional relationship with the front arm 301 in the turn direction is maintained. That is, the roller support arm 403 and the front arm 301 are coaxially pivotally supported on the front fixing shaft support portion 311 on the front boss portion 303, and are provided in a fixed state so as to integrally turn about the turn axis Q1.

The guide roller 402 is a cylindrical rotating body, is positioned on the right side of a tip end portion of the roller support arm 403, and is rotatably supported on the roller support arm 403 by a predetermined shaft support member with the left-right direction as a rotation axis direction. The guide roller 402 is supported by the roller support arm 403 at a position at which the guide roller 402 contacts the cam plate 410 from below.

As illustrated in Fig. 18, the roller support arm 403 extends rearward with respect to the front arm 301 extending upward from the front boss portion 303. The front arm 301 and the roller support arm 403 are provided so as to form an angle of about 80 to 90° as viewed in the axial direction of the turn axis Q1. The angle between the front arm 301 and the roller support arm 403 is an angle β1 between a line connecting the turn axis Q1 of the front fixing shaft support portion 311 and the turn axis Q3 of the front movement shaft support portion 313 and a line connecting the turn axis Q1 and a turn axis Q5 which is the center of rotation of the guide roller 402 (see Fig. 20).

The guide roller 402 is biased in a direction of being pressed against the cam plate 410 via the roller support arm 403 by biasing force of the groove forming arm return spring 330 against the front arm 301. Accordingly, the guide roller 402 moves along the cam surface 411 with relative rotation of the planting claw device 50.

According to the above-described configuration, the contact position of the guide roller 402 on the cam plate 410 moves in a direction of the guide roller 402 approaching or separating from the center axis P1 of the cam plate 410 according to a change in a distance from the center axis P1 of the cam plate 410 on the cam surface 411 with relative rotation of the planting claw device 50. Such movement of the guide roller 402 leads to integral turn of the roller support arm 403 and the front arm 301 about the turn axis Q1. When the front arm 301 turns, the link mechanism 300 operates, and the groove forming arm 200 performs predetermined operation. As described above, in the link mechanism 300, the front arm 301 serves as a drive arm that reciprocatably turns in response to the power transmitted by the cam mechanism 400 in association with relative rotation of the planting claw device 50, and operates the link mechanism 300 to reciprocate the groove forming arm 200.

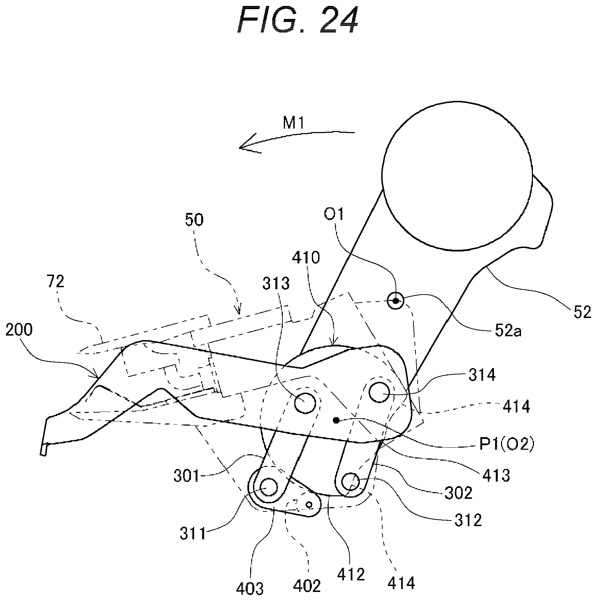

Operation of the cam mechanism 400, the link mechanism 300, and the groove forming arm 200 in association with relative rotation of the planting claw device 50 will be described with reference to Figs. 24 to 28. In Figs. 24 to 28, for the sake of convenience, as relative rotation of the planting claw device 50, rotation of the rotary case 52 relative to the planting claw device 50 at the fixed position, i.e., a change in the angular position of the rotary case 52 with respect to the planting claw device 50 about the claw side rotation axis O2 (center axis P1 of the cam plate 410) is illustrated. As illustrated in Figs. 24 to 28, in relative rotation of the planting claw device 50, the rotary case 52 rotates counterclockwise with respect to the planting claw device 50 in a left side view (see an arrow M1).

A state in which the guide roller 402 contacts the first arc cam surface portion 412 of the cam plate 410 corresponds to the standby posture of the groove forming arm 200, and a state in which the guide roller 402 contacts the second arc cam surface portion 413 of the cam plate 410 corresponds to the groove forming posture of the groove forming arm 200. That is, in relative rotation of the planting claw device 50, the guide roller 402 comes into contact with the first arc cam surface portion 412, whereby the groove forming arm 200 is brought into the standby posture. The guide roller 402 comes into contact with the second arc cam surface portion 413, whereby the groove forming arm 200 is brought into the groove forming posture.

Fig. 24 illustrates a state in which the groove forming arm 200 is in the standby posture. In the state illustrated in Fig. 24, the guide roller 402 contacts a position near a start end portion of the first arc cam surface portion 412 in the rotation direction of the cam plate 410 relative to the planting claw device 50.

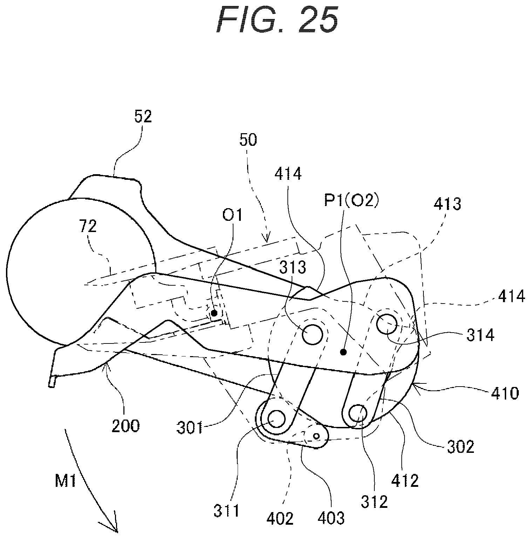

Fig. 25 illustrates a state in which the rotary case 52 has turned about 100° relative to the planting claw device 50 from the state illustrated in Fig. 24. As illustrated in Fig. 25, in relative rotation of the planting claw device 50, while the guide roller 402 contacts the first arc cam surface portion 412, the turn position of the link mechanism 300 is maintained, and the state of the standby posture of the groove forming arm 200 is maintained.

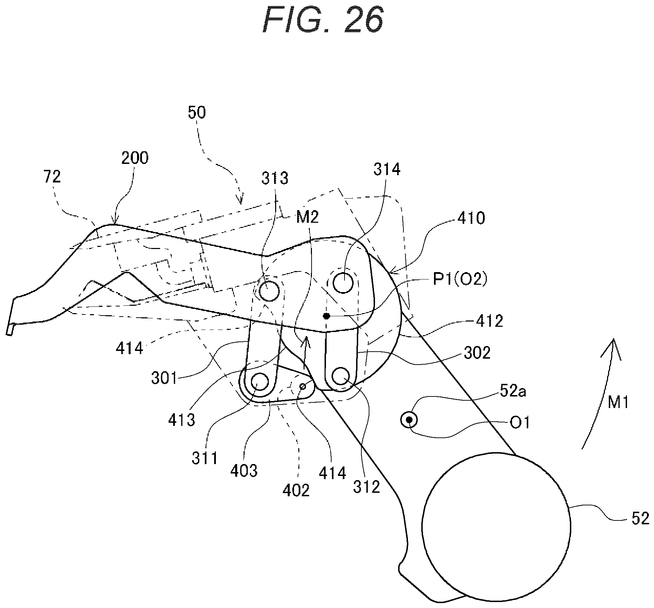

As relative rotation of the planting claw device 50 progresses and the contact position of the guide roller 402 on the cam plate 410 moves from the first arc cam surface portion 412 to one linear cam surface 414 (linear cam surface 414 on the rear side in a direction of the guide roller 402 moving on the cam plate 410), the groove forming arm 200 starts moving to the groove forming posture side. That is, the guide roller 402 relatively moves from the first arc cam surface portion 412 to the linear cam surface 414, whereby the guide roller 402 comes closer to the center axis P1 (claw side rotation axis O2) of the cam plate 410 and the roller support arm 403 turns in a direction of lifting the guide roller 402 (see Fig. 26, an arrow M2). Accordingly, the link mechanism 300 turns in a direction of tilting the front arm 301 forward, and the groove forming arm 200 gradually moves to the front side, i.e., the groove forming posture side.

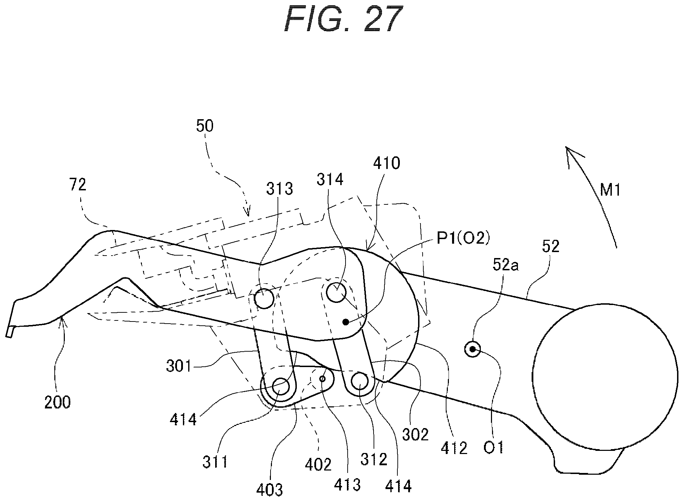

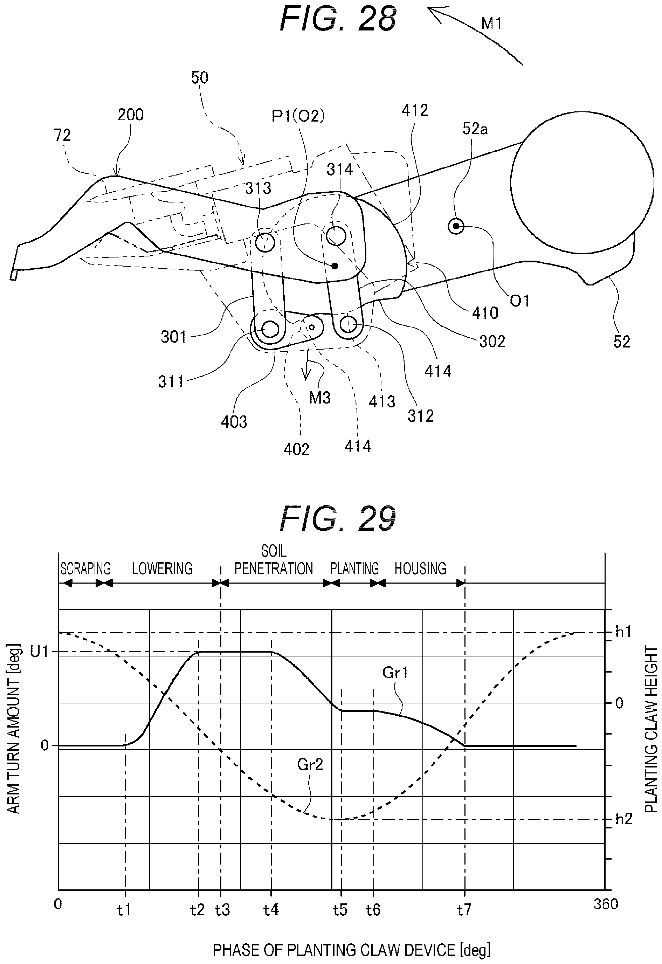

Then, as illustrated in Fig. 27, the guide roller 402 reaches the second arc cam surface portion 413 from a terminal end portion of the linear cam surface 414, and accordingly, the groove forming arm 200 is brought into the groove forming posture. As illustrated in Figs. 27 and 28, in a state in which the guide roller 402 is positioned on the second arc cam surface portion 413, the groove forming arm 200 maintains the groove forming posture.

Then, as relative rotation of the planting claw device 50 progresses and the contact position of the guide roller 402 on the cam plate 410 moves from the second arc cam surface portion 413 to the other linear cam surface 414 (linear cam surface 414 on the front side in a direction of the guide roller 402 moving on the cam plate 410), the groove forming arm 200 starts moving to the standby posture side. That is, the guide roller 402 relatively moves from the linear cam surface 414 to the first arc cam surface portion 412, whereby the guide roller 402 moves away from the center axis P1 (claw side rotation axis O2) of the cam plate 410 and the roller support arm 403 turns in a direction of lowering the guide roller 402 (see Fig. 28, an arrow M3). Accordingly, the link mechanism 300 turns in a direction of tilting the front arm 301 rearward, and the groove forming arm 200 gradually moves to the rear side, i.e., the standby posture side.

Then, the guide roller 402 reaches the first arc cam surface portion 412 from a terminal end portion of the linear cam surface 414, and accordingly, the groove forming arm 200 returns to the standby posture (see Fig. 24). The above-described operation is repeatedly performed with relative rotation of the planting claw device 50.

As described above, the groove forming arm 200 is provided such that by the link mechanism 300 and the cam mechanism 400, the position posture with respect to the planting claw 72 changes in conjunction with relative rotation of the planting claw device 50, which is operation of the planting claw 72. According to such a configuration, the operation mode of the groove forming arm 200 in conjunction with relative rotation of the planting claw device 50 is adjusted by the shape of the cam surface 411 of the cam plate 410. Specifically, by adjustment of the shape of the cam surface 411, for example, the timing at which the groove forming arm 200 starts moving from the standby posture to the groove forming posture side, the timing at which the groove forming arm 200 returns to the standby posture, and the like can be adjusted.

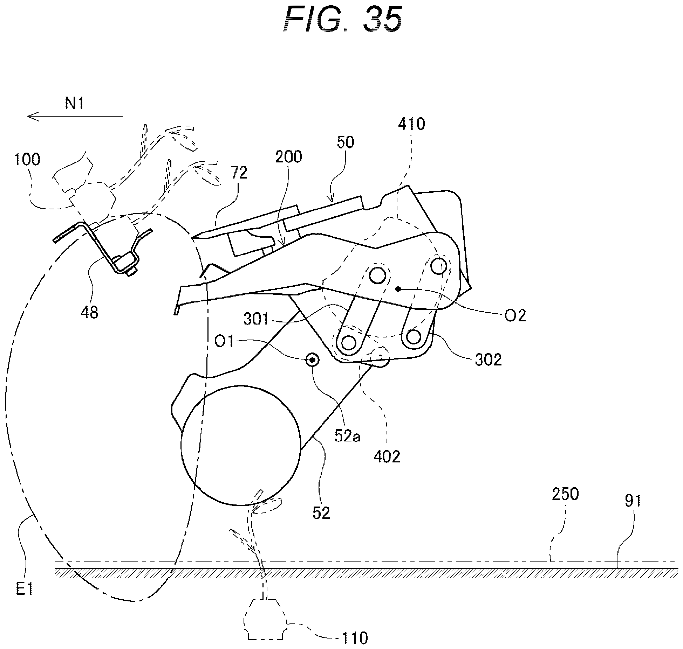

Operation of the planting unit having the above-described configuration will be described with reference to Figs. 29 and 35. Operation of the planting unit includes an operation of planting the seedling block 110 by the planting claw device 50, and an operation of forming grooves and cutting a multifilm 250 by the groove forming arm 200 in conjunction with the planting operation.

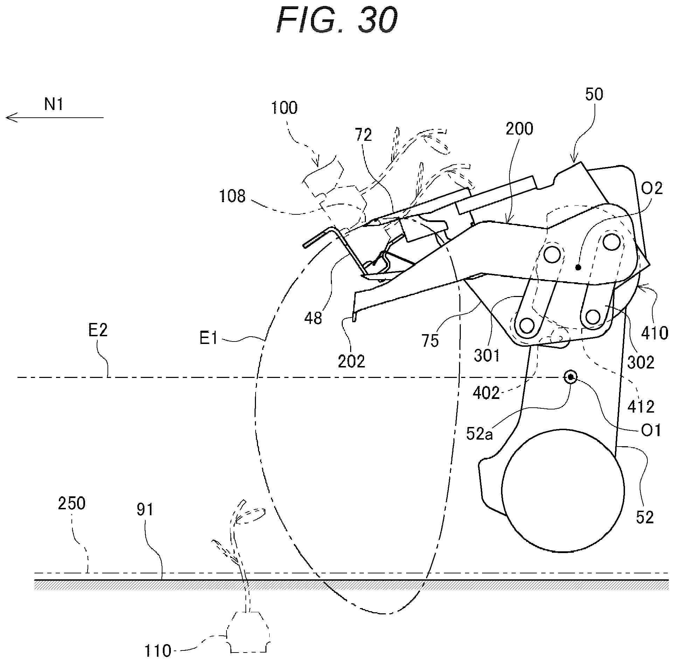

Figs. 30 to 35 are left side views of the planting unit, and the traveling direction of the machine body is the left direction (see an arrow N1) in each figure. In addition, in each of Figs. 30 to 35, in order to illustrate displacement of the planting unit in the machine body traveling direction on the field, only a state in which the seedling block 110 is planted in the field is illustrated for the sake of convenience.

The trajectory E1 indicated by a chain line in each of Figs. 30 to 35 is the trajectory of the tip end portion of the planting claw 72, i.e., the tip end portion of the claw body portion 82. The trajectory E1 is a vertically-long substantially oval closed (loop-shaped) trajectory. Specifically, the trajectory E1 has a substantially oval shape in which the front side bulges in a raised shape and the rear side is flat.

The trajectory E1 of the planting claw 72 is the trajectory of the machine body of the seedling transplanter 1 moving forward on the field. That is, the trajectory E1 does not take movement of the planting claw 72 on the field in association with forward movement of the machine body into consideration, and is the trajectory of a static system with reference to the machine body side.

As illustrated in Figs. 30 to 35, in the planting unit moving forward as the machine body moves forward, the drive shaft 52a of the rotary case 52 maintains a substantially constant height position on the field surface 91. That is, during operation of the planting unit in association with forward movement of the machine body, the case side rotation axis O1 draws a trajectory E2 parallel with the field surface 91 (see Fig. 30).

Fig. 29 is a graph for describing operation of the planting claw device 50 and the groove forming arm 200. In the graph illustrated in Fig. 29, the horizontal axis indicates the phase [deg] of the planting claw device 50 in relative rotation of the planting claw device 50 about the claw side rotation axis O2, i.e., the relative angular positions of the planting claw device 50 and the rotary case 52.

In Fig. 29, a graph Gr1 indicated by a solid line indicates one example of a change in the position of the groove forming arm 200 with a change in the phase of the planting claw device 50, i.e., the amount of turn (arm turn amount) [deg] of the roller support arm 403 by the cam plate 410. In addition, a graph Gr2 indicated by a dashed line indicates one example of a change in the height of the planting claw 72 with a change in the phase of the planting claw device 50. Here, the height (planting claw height) of the planting claw 72 is the height of the tip end portion of the planting claw 72 with respect to a predetermined reference height corresponding to the field surface 91, and is expressed by, for example, a numerical value of ± with reference to a predetermined height position (0 [mm]).

First, as illustrated in Fig. 30, along with rotation of the rotary case 52 about the case side rotation axis O1 and relative rotation of the planting claw device 50, the unit block portion 108 is scraped by the planting claw 72. The state of the planting unit illustrated in Fig. 30 is a state in a range of "SCRAPING" in the phase of the planting claw device 50 in the graph illustrated in Fig. 29.

In the range of "SCRAPING," the groove forming arm 200 is in the standby posture. That is, the guide roller 402 contacts the first arc cam surface portion 412 of the cam plate 410. In operation of the cam mechanism 400, the position of the roller support arm 403 in a state in which the groove forming arm 200 is in the standby posture is set as the reference position, i.e., a turn amount of 0 [deg]. In this manner, the seedling mat 100 is scraped by the planting claw 72 at predetermined timing in a state in which the groove forming arm 200 is in the standby posture.

Regarding the planting claw height in the range of "SCRAPING," the planting claw 72 is positioned at the height position h1 of a lifting end in a lifting/lowering range or in the vicinity thereof. Note that the graph Gr2 illustrating the change in the planting claw height shows a curve such as a sine wave.

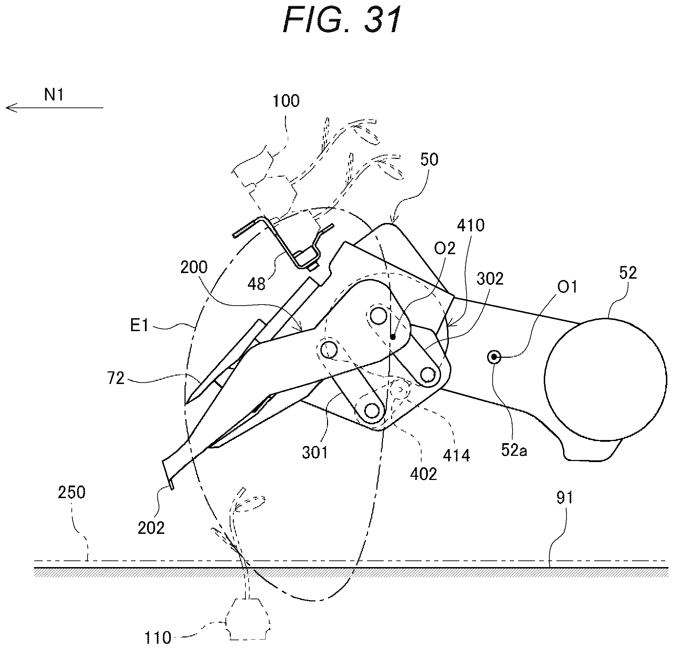

After the unit block portion 108 has been scraped by the planting claw 72, the planting claw device 50 turns so as to move the planting claw 72 to the front lower side of the guide rail 48 as illustrated in Fig. 31. The state of the planting unit illustrated in Fig. 31 is a state in a range of "LOWERING" in the phase of the planting claw device 50 in the graph illustrated in Fig. 29.

In the range of "LOWERING," the planting claw height gradually lowers as illustrated in the graph Gr2. Moreover, in the range of "LOWERING," the groove forming arm 200 in the standby posture starts moving to the groove forming posture side at the timing when the phase of the planting claw device 50 reaches a predetermined first phase t1. That is, the guide roller 402 moves from the first arc cam surface portion 412 to the one linear cam surface 414, and the arm turn amount starts increasing as illustrated in the graph Gr1.

In the process of the range of "LOWERING," the arm turn amount gradually increases, and reaches the maximum value U1 at the timing when the phase of the planting claw device 50 reaches a predetermined second phase t2. That is, the groove forming arm 200 is brought into the groove forming posture.

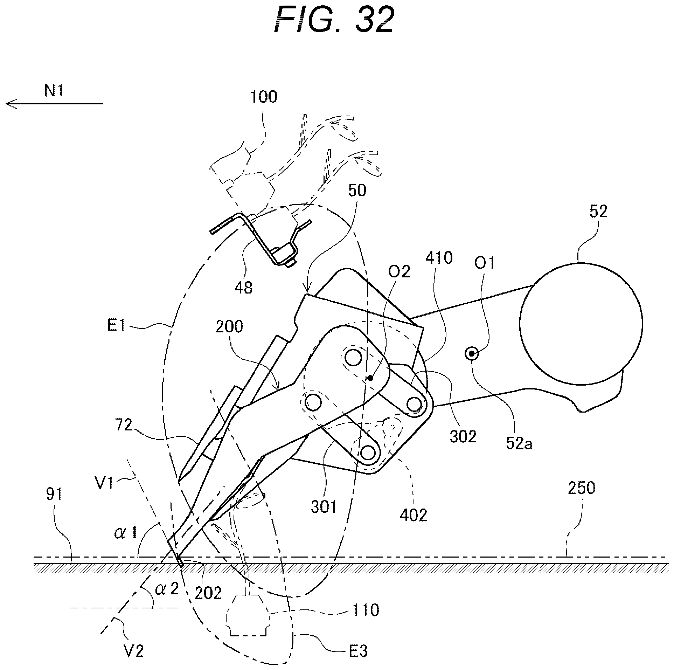

As relative turn of the planting claw device 50 progresses in a state in which the groove forming arm 200 is in the groove forming posture, a tip end portion of the groove forming arm 200 in the groove forming posture reaches the field surface 91, and penetration (groove formation) of the groove forming arm 200 is started, as illustrated in Fig. 32. The timing of penetration of the groove forming arm 200 corresponds to the timing when the phase of the planting claw device 50 reaches a predetermined third phase t3 in the graph illustrated in Fig. 29. From the third phase t3, the phase of the planting claw device 50 is in a range of "SOIL PENETRATION." In the range of "SOIL PENETRATION," when the planting claw device 50 plants the seedlings, the groove forming arm 200 cuts the multifilm 250 and forms grooves at seedling planting locations in the field.

As illustrated in Fig. 32, the groove forming arm 200 comes into contact with the field surface 91 from the lower edge portion of the arm tip end portion 202 forming the tip end portion of the groove forming arm 200 at the time of penetration into the field. As described above, the arm tip end portion 202 is the plate-shaped portion having the linear shape in a side cross-sectional view (see Fig. 22). Then, the groove forming arm 200 inserts the arm tip end portion 202 into the field surface 91 in a standing state.

As described above, the groove forming arm 200 is provided such that the arm tip end portion 202 stands on the field surface 91 at the timing of entering the field surface 91. Here, the state in which the arm tip end portion 202 stands on the farm field surface 91 is a state in which an angle α1 between the field surface 91 and the direction V1 of extension of the arm tip end portion 202 in a linear shape in a side cross-sectional view is 45° or more as illustrated in Fig. 32. In the example illustrated in Fig. 32, the angle α1 is about 60°.

In addition, the groove forming arm 200 is configured such that in a side view, the direction of extension of the tip end portion is inclined forward and downward with respect to the field surface 91 at the timing of the groove forming arm 200 entering the field surface 91. As illustrated in Fig. 32, the direction V2 of extension of the tip end portion of the groove forming arm 200 in a side view is the direction extension of a tip end portion of a tip-end-side side portion of the outer surface portion 205a (see Fig. 18) having the substantially mountain-shaped bent shape in a side view in the groove forming arm 200. Note that the extending direction V2 coincides with or substantially coincides with the direction of extension of the inner surface portion 205c (see Fig. 21) of the groove forming arm 200 in a side view.

Regarding the inclination of the direction V2 of extension of the tip end portion of the groove forming arm 200, an angle α2 between the field surface 91 and the direction V2 of extension of the tip end portion of the groove forming arm 200 is preferably 50° or less, as illustrated in Fig. 32. In the example illustrated in Fig. 32, the angle α2 is about 50°.

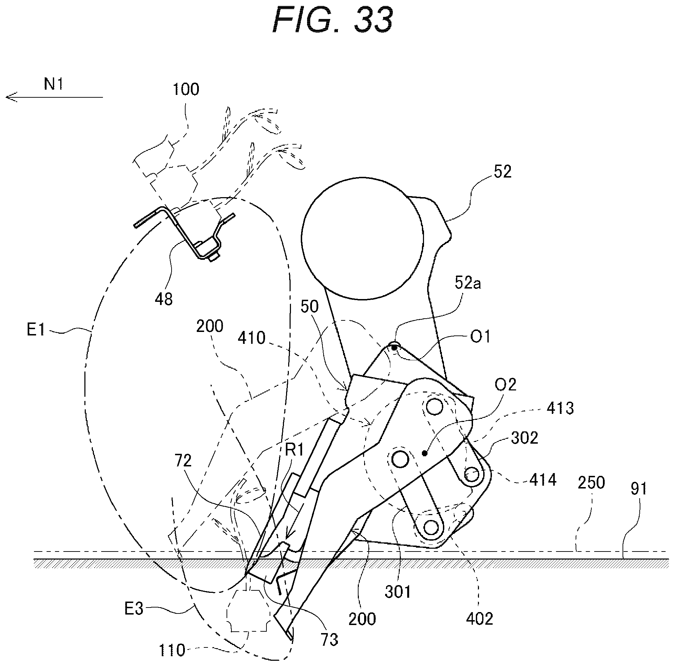

In the range of "SOIL PENETRATION," as illustrated in the graph Gr2, the planting claw height gradually decreases continuously from the range of "LOWERING," and the planting claw device 50 plants the seedling block 110 at the timing when the planting claw 72 reaches the height position h2 of a lowering end in the lifting/lowering range or in the vicinity thereof. The state of the planting unit illustrated in Fig. 33 is a state in a range of "PLANTING" in the phase of the planting claw device 50 in the graph illustrated in Fig. 29.

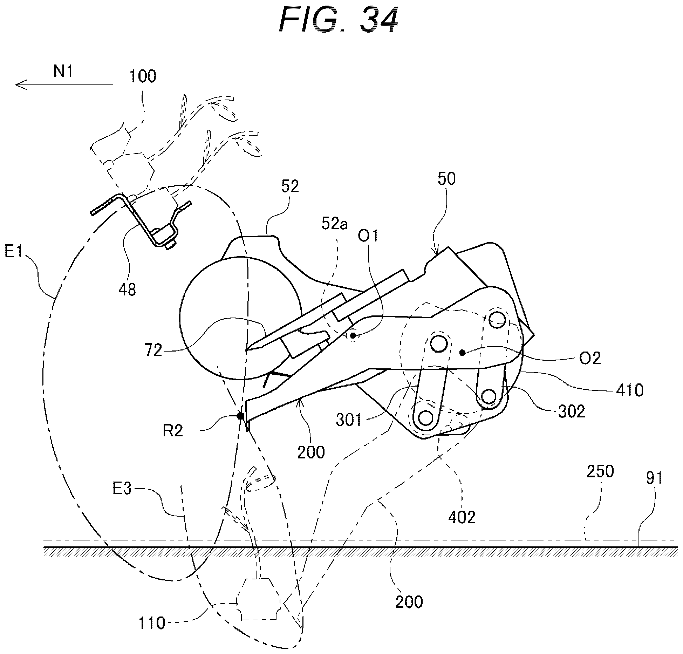

That is, as illustrated in Fig. 33, by the planting claw device 50 holding the seedling block 110, the seedling block 110 is pushed out by the pushing member 73 at the predetermined timing when the tip end portion of the planting claw 72 is positioned in the field below the field surface 91 (see an arrow R1). After having planted the seedling block 110, the planting claw device 50 gradually lifts until the planting claw 72 reaches the height position h1 of the lifting end (see Figs. 34 and 35).

On the other hand, in the range of "SOIL PENETRATION," the groove forming arm 200 in the groove forming posture starts moving to the standby posture side at the timing when the phase of the planting claw device 50 reaches a predetermined fourth phase t4. That is, the guide roller 402 moves from the second arc cam surface portion 413 to the other linear cam surface 414, and the arm turn amount starts decreasing as illustrated in the graph Gr1. Regarding the phase of the planting claw device 50, the arm turn amount decreases from the middle of "SOIL PENETRATION" to a range of "HOUSING" through "PLANTING," and the groove forming arm 200 returns to the standby posture at the timing when the phase of the planting claw device 50 reaches a predetermined seventh phase t7. The timing of the seventh phase t7 is the end point of "HOUSING" in the phase of the planting claw device 50.

Then, the planting claw 72 returns to the height position h1 of the lifting end, and the unit block portion 108 is scraped by the planting claw 72 as described above from the state in which the groove forming arm 200 returns to the standby state. Operation of the planting unit as described above is continuously performed as cycle operation as the machine body moves forward.

In the example illustrated in the graph Gr1 of Fig. 29, the groove forming arm 200 gradually moves to the housing position side from the timing of the fourth phase t4, and is temporarily stopped in the range of "PLANTING" at the timing when the phase of the planting claw device 50 reaches a predetermined fifth phase t5. Thereafter, movement to the housing position side is started from the timing of a predetermined sixth phase t6 after planting has ended.

As described above, the groove forming arm 200 is provided so as to return from the groove forming posture to the standby posture through a groove forming end posture which is a stop state between the fifth phase t5 and the sixth phase t6. That is, the groove forming arm 200 is provided so as to perform two-stage retreat operation of first retreat operation from the fourth phase t4 to the fifth phase t5 and second retreat operation from the sixth phase t6 to the seventh phase t7 as retreat operation for returning from the groove forming posture to the standby posture.

In a case where the groove forming arm 200 performs such two-stage retreat operation, a third arc cam surface portion (not shown) is provided at a portion of the cam plate 410 where the other (left in Fig. 23) linear cam surface 414 is formed, in terms of the phase of the cam surface 411. The third arc cam surface portion is a surface portion having an arc shape centered on the position of the center axis P1 of the cam plate 410. The radius of a circumferential shape along which the third arc cam surface portion extends is smaller than the radius of the circumferential shape along which the first arc cam surface portion 412 extends, and is greater than the radius of the circumferential shape along which the second arc cam surface portion 413 extends.

In operation of the planting unit as described above, the groove forming arm 200 is provided so as to perform a circulation operation of returning from the groove forming posture to the standby posture after planting of the seedling in the field by the planting claw 72 has ended. That is, the planting claw device 50 plants the seedlings between the timing when the groove forming arm 200 starts moving from the standby posture to the groove forming posture side and the timing when the groove forming arm 200 returns to the standby posture.

Further, in operation of the planting unit, the groove forming arm 200 is provided such that in the groove forming posture, the tip end thereof protrudes forward with respect to the planting claw 72 and enters the field surface 91 prior to the planting claw 72. When the planting claw device 50 plants the seedlings, the planting unit first causes the groove forming arm 200 to act on the field and form the grooves, and then, causes the planting claw 72 to act on the field, as illustrated in Fig. 32. Moreover, as illustrated in Fig. 33, the planting unit plants the seedlings, i.e., pushes out the seedling block 110, at the timing when groove formation by the groove forming arm 200 ends.

In an operation of forming the grooves by the groove forming arm 200, the groove forming arm 200 is provided so as not to contact the seedling block 110, which is the seedlings planted in the field, in an operation area where at least the tip end portion is positioned below the field surface 91. Specifically, as illustrated in Figs. 32, 33, and 34, the arm tip end portion 202 of the groove forming arm 200 is provided so as to pass under the seedling block 110 (virtually-arranged seedling block 110) to be planted at a predetermined planting position in the field by the planting claw device 50 or the seedling block 110 planted in the field.

In Figs. 32, 33, and 34, the trajectory E3 of the arm tip end portion 202 of the groove forming arm 200 is indicated by a chain double-dashed line. The trajectory E3 indicates the trajectory of the lower edge portion of the arm tip end portion 202. As indicated by the trajectory E3, the groove forming arm 200 causes the arm tip end portion 202 to penetrate the field surface 91 from a position at the front of the virtually-arranged seedling block 110 (Figs. 32 and 33). Thereafter, the arm tip end portion 202 moves to the lower side of the virtually-arranged seedling block 110, and the seedling block 110 is actually planted at the timing when the arm tip end portion 202 reaches the rear side of the virtually-arranged seedling block 110 (see Fig. 33, an arrow R1).

According to the trajectory E3, the groove forming arm 200 of which the tip end of the arm tip end portion 202 is positioned on the rear lower side of the planted seedling block 110 moves the arm tip end portion 202 upward to separate the arm tip end portion 202 from the field surface 91 (Fig. 34). Thereafter, the groove forming arm 200 gently moves the arm tip end portion 202 to the front side of the seedling block 110 above the seedling block 110 while moving the arm tip end portion 202 upward. The trajectory E3 is directed inward with respect to the trajectory E1 of the planting claw 72 above the seedling block 110, and crosses the trajectory E1 (see Fig. 34, an intersection R2).

As described above, in a side view, the groove forming arm 200 moves the arm tip end portion 202 so as to pass from the front side to the rear side of a seedling block corresponding portion through the lower side of the seedling block corresponding portion with a gap therefrom, the seedling block corresponding portion being a portion where the seedling block 110 to be planted in the field is positioned and the actuallyplanted seedling block 110. That is, the groove forming arm 200 moves the arm tip end portion 202 in a manner of making a U-turn around the seedling block corresponding portion so as not to contact the trajectory E3 with the seedling block corresponding portion at a turning point from lowering operation to lifting operation. In the example illustrated in the graph of Fig. 29, the groove forming arm 200 reliably avoids contact with the seedling block 110 by performing the two-stage retreat operation as described above.

Regarding operation of the groove forming arm 200, the groove forming arm 200 is provided so as to draw, as the movement trajectory of the tip end portion, the trajectory E3 for ensuring, for the planting claw 72 positioned at the lowermost end, a space for pushing out the seedling block 110 which is the seedling held by the planting claw 72 together with the holding plate 74.

According to the groove forming arm 200, the soil of the field is removed and the groove is formed along the trajectory of the arm tip end portion 202. Then, the groove forming arm 200 acts on the field such that the soil removed portion, i.e., the groove formed portion, of the field formed by action of the groove forming arm 200 forms a space where the seedling block 110 released from the planting claw device 50 is to be positioned. On the trajectory E3 of the arm tip end portion 202 of the groove forming arm 200, a position within an area surrounded by the turning point having a substantially "U" shape on the lower end side is ensured as the space to which the seedling block 110 is released at the timing when groove formation by the groove forming arm 200 ends.

The seedling transplanter 1 having the above-described configuration includes, in the planting unit, a trajectory changing device 270 that changes the movement trajectory of the groove forming arm 200 with respect to the planting claw 72 according to the planting pitch of the seedling by the planting claw 72. Note that the planting pitch of the seedling by the planting claw 72 is an interval between the seedlings continuously planted into the field at predetermined intervals in the front-rear direction, i.e., the intrarow spacing.

As described above, the intrarow spacing is changed by the rotation speed of the rotary case 52 shifted by the transmission 36 (see Fig. 3) in the intrarow transmission case 33. In the present embodiment, the transmission 36 is configured to switch the intrarow spacing between two levels of a relatively-great intrarow spacing dimension (e.g., 40 cm) and a relatively-small intrarow spacing dimension (e.g., 24 cm). When the trajectory of the groove forming arm 200 is constant regardless of the intrarow spacing, there might be a case where seedling planting performance is degraded or a load increases due to an increase in torque in groove formation on the soil. Thus, the trajectory changing device 270 changes the trajectory of the groove forming arm 200 according to the intrarow spacing.

The trajectory changing device 270 includes the link mechanism 300 that supports the groove forming arm 200 on the planting claw device 50 including the planting claw 72. As described above, the link mechanism 300 is configured to operate in the four-node link form in which the axes (turn axes) of the four shaft support portions are taken as the nodes, and is configured to change the movement trajectory of the groove forming arm 200 reciprocating between the standby posture and the groove forming posture in association with operation of the link mechanism 300 by changing the distance between the axes of the shaft support portions in the link mechanism 300.

The link mechanism 300 as the trajectory changing device 270 is configured to change the movement trajectory of the groove forming arm 200 with respect to the planting claw 72 by changing the distance between the support portions of the two link arms of the front arm 301 and the rear arm 302 on the groove forming arm 200 side. In the present embodiment, the inter-axis distance L1 (see Fig. 20) between the turn axis Q3 of the front movement shaft support portion 313 and the turn axis Q4 of the rear movement shaft support portion 314 corresponds to the distance between the support portions of the two link arms on the groove forming arm 200 side.

The inter-axis distance L1 is changed by adjustment of the position of the rear movement shaft support portion 314 with respect to the front movement shaft support portion 313. The position of the rear movement shaft support portion 314 is steplessly adjusted within the area of the length of the hole 204b through which the bolt 323 penetrates at the two upper and lower locations of the rear movement shaft support portion 314 by the fixed position of the connection plate 310 on the support plate 204 as described above. The position adjustment mechanism for the rear movement shaft support portion 314 functions as a mechanism for changing the trajectory of the groove forming arm 200 in the link mechanism 300 as the trajectory changing device 270.

In the planting unit illustrated in Figs. 18 and 20, the bolt 323 for fixing the connection plate 310 to the support plate 204 is positioned at a rear end portion of the hole 204b, and the rear movement shaft support portion 314 is separated from the front movement shaft support portion 313 (most-separated state). That is, the planting unit illustrated in Figs. 18 and 20 is in a state in which the inter-axis distance L1 is maximized. Note that Fig. 18 illustrates a state in which the groove forming arm 200 is in the groove forming posture, and Fig. 20 illustrates a state in which the groove forming arm 200 is in the standby posture. The inter-axis distance L1 is maintained at a constant value regardless of the posture of the groove forming arm 200.

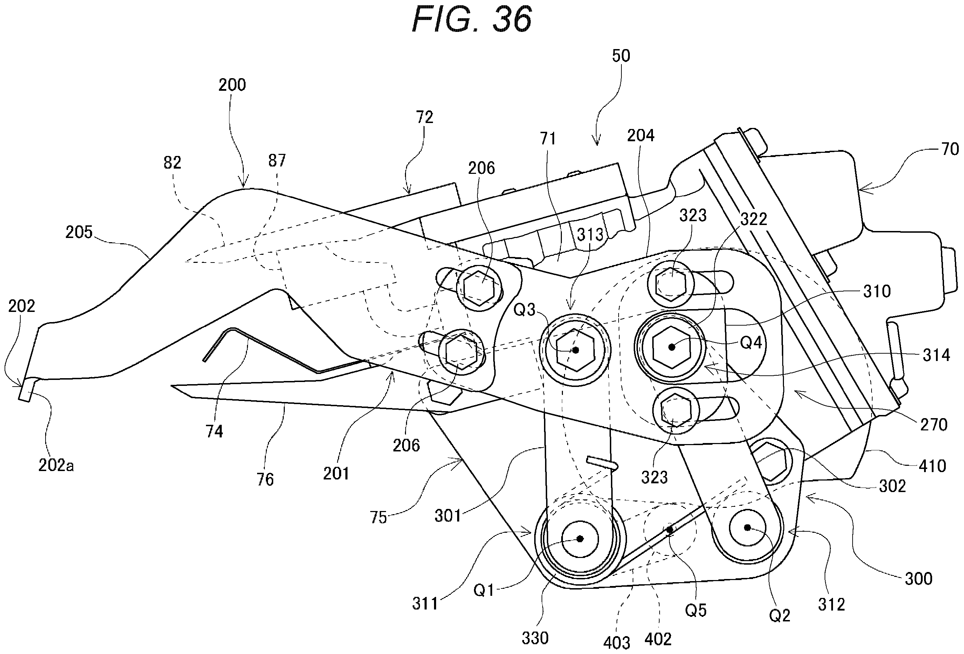

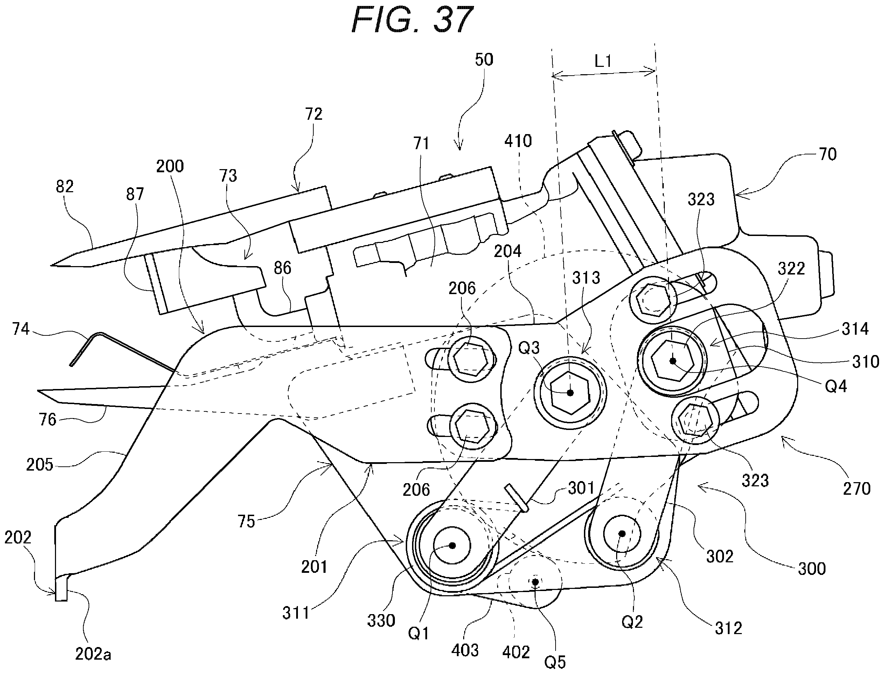

On the other hand, In the planting unit illustrated in Figs. 36 and 37, the bolt 323 is positioned at a front end portion of the hole 204b, and the rear movement shaft support portion 314 is positioned close to the front movement shaft support portion 313 (closest state). That is, the planting unit illustrated in Figs. 36 and 37 is in a state in which the inter-axis distance L1 is minimized. Note that Fig. 36 illustrates a state in which the groove forming arm 200 is in the groove forming posture, and Fig. 37 illustrates a state in which the groove forming arm 200 is in the standby posture. Hereinafter, a state in which the inter-axis distance L1 is increased as illustrated in Figs. 18 and 20 will be referred to as a "shaft support portion separated state," and a state in which the inter-axis distance L1 is decreased as illustrated in Figs. 36 and 37 will be referred to as a "shaft support portion close state."

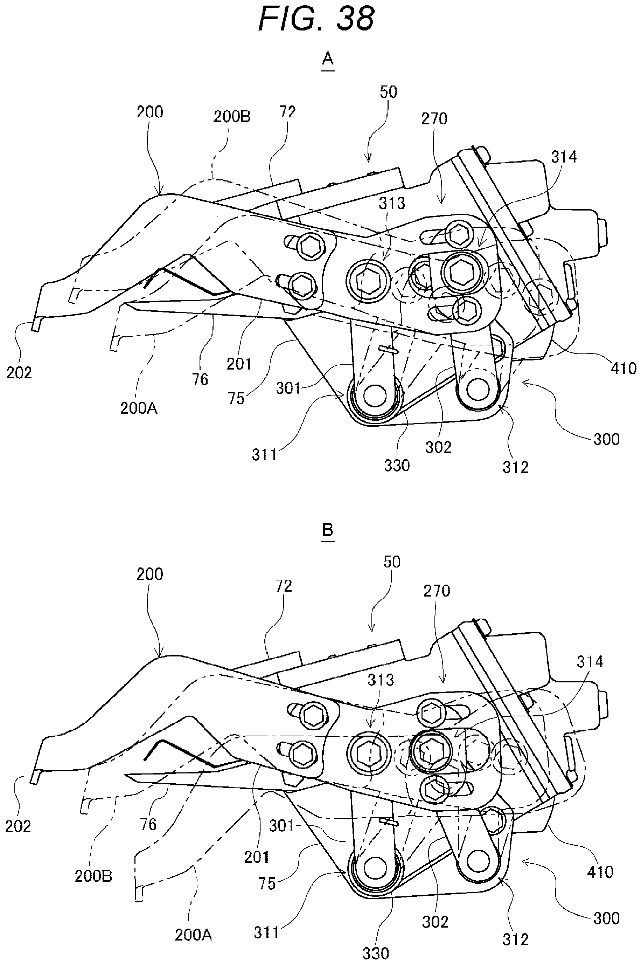

When the inter-axis distance L1 changes, the operation mode of the groove forming arm 200 reciprocating in the planting unit changes. Fig. 38A illustrates the operation mode of the groove forming arm 200 in the shaft support portion separated state, and Fig. 38B illustrates the operation mode of the groove forming arm 200 in the shaft support portion close state. In each of Figs. 38A and 38B, the groove forming arm 200 in the groove forming posture is indicated by a solid line, the groove forming arm 200A in the standby posture is indicated by a chain line, and the groove forming arm 200B between the standby posture and the groove forming posture is indicated by a chain double-dashed line.

When the inter-axis distance L1 changes as illustrated in Figs. 38A and 38B, the operation area of the groove forming arm 200 reciprocating in the planting unit changes. That is, the shaft support portion separated state illustrated in Fig. 38A changes to the shaft support portion close state illustrated in Fig. 38B, whereby the operation area of the groove forming arm 200 in a side view is expanded. In the shaft support portion close state, the operation area of the groove forming arm 200 is mainly expanded in the up-down direction in the figure. In this manner, either the shaft support portion separated state or the shaft support portion close state in which the operation mode of the groove forming arm 200 is changed is used according to the intrarow spacing.

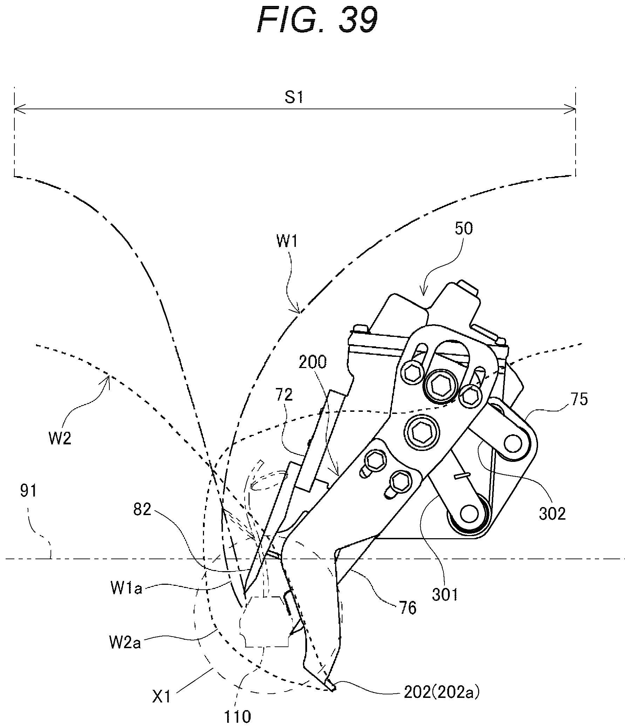

Fig. 39 illustrates the movement trajectories of the planting claw 72 and the groove forming arm 200 in a case where the planting unit is in the shaft support portion close state and the intrarow spacing is a relatively-great intrarow spacing dimension S1 (e.g., 40 cm). A trajectory W1 indicated by a chain line in Fig. 39 is the trajectory of the tip end portion of the planting claw 72, i.e., the tip end portion of the claw body portion 82. Further, a trajectory W2 indicated by a dashed line is the trajectory of the tip end protruding portion 202a of the arm tip end portion 202 of the groove forming arm 200.

The trajectory W1 of the planting claw 72 and the trajectory W2 of the groove forming arm 200 are the trajectories of the planting claw 72 and the groove forming arm 200 performing predetermined operation while moving forward on the field together with the machine body of the seedling transplanter 1 moving forward. That is, the trajectory W1 and the trajectory W2 take movement of the planting claw 72 and the groove forming arm 200 on the field in association with forward movement of the machine body into consideration, and are trajectories with reference to the field side.

As described above, the planting claw 72 drawing a loop-shaped trajectory (see Fig. 30, the trajectory E1) with reference to the machine body side moves forward on the field, and accordingly, as indicated by the trajectory W1 of Fig. 39, repeatedly draws a trajectory forming a forward-downward curve by lowering operation during forward movement and a trajectory forming a forward-upward curve by lifting operation during forward movement. The trajectory W1 has a vertically-elongated loop-shaped trajectory portion W1a at the turning point from lowering operation to lifting operation.

For the planting claw 72 periodically operating so as to draw the loop-shaped trajectory with reference to the machine body side, a distance for one cycle on the trajectory W1 in consideration of forward movement on the field corresponds to the intrarow spacing dimension S1. That is, the planting claw 72 repeats an operation of drawing the trajectory W1 illustrated in Fig. 39 by performing predetermined planting operation as the machine body moves forward.

The trajectory W2 of the groove forming arm 200 is a trajectory including, in operation of the planting claw 72, periodic reciprocation which is operation of the groove forming arm 200 relative to the planting claw 72. Schematically, similarly to the trajectory W1 of the planting claw 72, the trajectory W2 of the groove forming arm 200 has a forward-downward trajectory portion, a forward-upward trajectory portion, and a loop-shaped trajectory portion W2a at the turning point. As described above, the loop-shaped trajectory portion W2a of the trajectory W2 includes a portion corresponding to the trajectory E3 of the groove forming arm 200 on which the arm tip end portion 202 moves in a manner of making the U-turn around the seedling block corresponding portion so as not to contact the seedling block corresponding portion (see Figs. 33 and 34).

Thus, on the trajectory W2 of the groove forming arm 200, the seedling block corresponding portion is positioned in the loop-shaped trajectory portion W2a. The loop-shaped trajectory portion W2a of the trajectory W2 of the groove forming arm 200 preferably passes near the seedling block corresponding portion to such an extent that the loop-shaped trajectory portion W2a does not contact the seedling block corresponding portion. That is, the trajectory portion W2a of the trajectory W2 of the groove forming arm 200 at the turning point is preferably in the minimum necessary loop shape so as not to contact the seedling block corresponding portion (see a portion surrounded by a dashed circle X1 in Fig. 39).

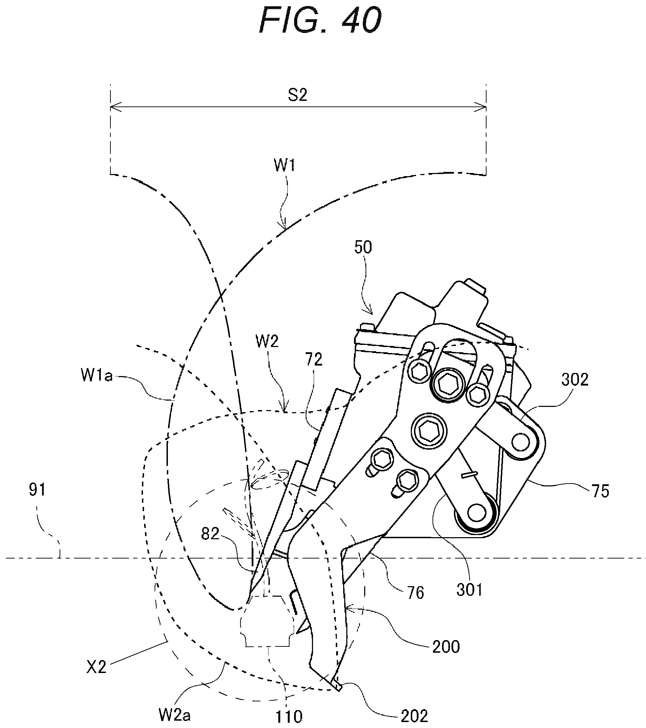

Fig. 40 illustrates the movement trajectories of the planting claw 72 and the groove forming arm 200 in a case where the planting unit is in the shaft support portion close state and the intrarow spacing is a relatively-small intrarow spacing dimension S2 (e.g., 24 cm).

In a case where the intrarow spacing is relatively small, the amount of movement in planting operation by the planting claw 72 with respect to the amount of movement in forward movement of the machine body increases (operation becomes faster). Thus, as illustrated in Fig. 40, as compared to the case where the intrarow spacing is relatively great (Fig. 39), the distance for one cycle corresponding to the intrarow spacing dimension S2 is shorter, and the loop-shaped trajectory portion W1a of the trajectory W1 of the planting claw 72 is greater.

Thus, as illustrated in Fig. 40, the loop-shaped trajectory portion W2a, where the seedling block corresponding portion is positioned inside, of the trajectory W2 of the groove forming arm 200 in the case where the intrarow spacing is relatively small is greater. That is, the trajectory W2 of the groove forming arm 200 is a trajectory bypassing the seedling block corresponding portion (see a portion surrounded by a dashed circle X2 in Fig. 40).

An increase in the trajectory portion of the trajectory W2 of the groove forming arm 200 around the seedling block corresponding portion corresponds to an increase in a portion of the field excavated by the groove forming arm 200, i.e., a transplantation hole for transplanting the seedling. When the transplantation hole becomes larger, there may be a problem that the seedling planting performance is degraded or the load increases due to an increase in the torque in groove formation by the groove forming arm 200.

Thus, in the case where the intrarow spacing is relatively small, the state of the planting unit is switched, by the portion adjustment mechanism for the rear movement shaft support portion 314 in the link mechanism 300, from the shaft support portion close state (see Fig. 38B) in which the operation area of the groove forming arm 200 is relatively broad to the shaft support portion separated state (see Fig. 38A) in which the operation area of the groove forming arm 200 is relatively narrow. Accordingly, the trajectory portion of the trajectory W2 of the groove forming arm 200 around the seedling block corresponding portion becomes smaller.

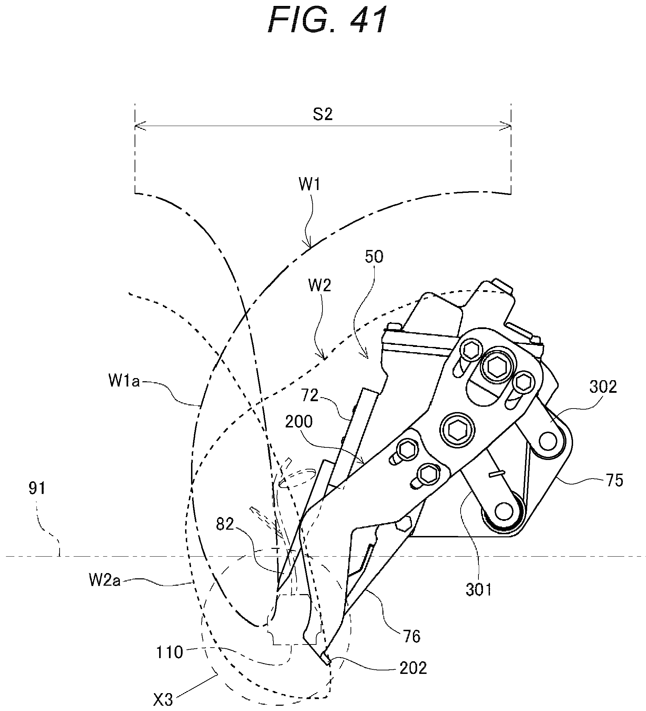

Fig. 41 illustrates the movement trajectories of the planting claw 72 and the groove forming arm 200 in a case where the planting unit is in the shaft support portion separated state and the intrarow spacing is a relatively-small intrarow spacing dimension S2 (e.g., 24 cm). As illustrated in Fig. 41, since the planting unit is in the shaft support portion separated state, the loop-shaped trajectory portion W2a of the trajectory W2 of the groove forming arm 200 in the case where the intrarow spacing is relatively small is smaller. That is, as in the trajectory W2 of the groove forming arm 200 illustrated in Fig. 39, the trajectory portion W2a of the trajectory W2 of the groove forming arm 200 at the turning point is in the minimum necessary loop shape so as not to contact the seedling block corresponding portion, and expansion of the transplantation hole more than necessary is prevented (see a portion surrounded by a dashed circle X3 in Fig. 41).

As described above, by using either the shaft support portion close state or the shaft support portion separated state of the planting unit according to the size of the intrarow spacing changed by the transmission 36 (see Fig. 3) in the intrarow transmission case 33, the trajectory W2 of the groove forming arm 200 is optimized. Note that when the planting unit is in the shaft support portion separated state in the case where the intrarow spacing is the relatively-great intrarow spacing dimension S1 (e.g., 40 cm), the loop-shaped portion of the trajectory W2 of the groove forming arm 200 becomes smaller, and contact with the seedling block corresponding portion easily occurs.

According to the seedling transplanter 1 of the present embodiment having the above-described configuration, in the seedling transplanter 1, it is possible to reduce contact of the groove forming arm 200 with the planted seedling and to achieve favorable planting performance.

The planting unit included in the seedling transplanter 1 is configured to be, as the position posture of the groove forming arm 200, in the standby posture at the timing of cutting the seedling mat 100 and the groove forming posture moved forward with respect to the planting claw 72. According to such a configuration, by changing the posture of the groove forming arm 200, it is possible to start groove formation by the groove forming arm 200 before the timing of planting the seedling by the planting claw 72 while avoiding contact with the guide rail 48. With this configuration, the degree of freedom in the position of the groove forming arm 200 relative to the planting claw 72 can be improved, and therefore, it is possible to respond to a change in a seedling planting condition. Thus, seedling planting accuracy can be improved, problems such as an increase in the torque in groove formation in the soil and contact of the groove forming arm 200 with the planted seedling can be solved, and favorable planting performance can be achieved.

The groove forming arm 200 is provided so as to perform the circulation operation of returning from the groove forming posture to the standby posture after planting of the seedling by the planting claw has ended. According to such a configuration, the position posture of the groove forming arm 200 relative to the planting claw 72 can be changed after planting of the seedling has ended, and groove forming operation suitable for planting the seedling can be performed. In particular, by configuring the groove forming arm 200 to perform the two-stage retreat operation as described above, it is possible to perform groove forming operation more suitable for planting the seedling. In addition, when the groove forming arm 200 returns to the standby posture after the end of groove formation, it is possible to prevent the groove forming arm 200 from getting in the way, for example, interfering with the guide rail 48 in next scraping of the unit block portion 108 by the planting claw 72.

Further, the groove forming arm 200 is provided such that in the groove forming posture, the tip end thereof protrudes forward with respect to the planting claw 72 and enters the field surface prior to the planting claw 72. According to such a configuration, since the groove is formed by the groove forming arm 200 when the seedling is planted by the planting claw 72, it is possible to reliably plant the seedling in the portion where the groove is formed by the groove forming arm 200 and to reduce planting resistance. By reducing the seedling planting resistance, it is possible to easily ensure strength necessary for the planting resistance for the planting claw 72 and the support configuration thereof. Thus, the size and weight of the planting unit and therefore the size and weight of the seedling planting device 43 can be reduced. In addition, in the case of the field of which the field surface 91 is covered with the multifilm 250, the multifilm 250 is cut and the groove is formed by the groove forming arm 200 before the planting claw 72 enters the field surface, so that it is possible to plant the seedling smoothly and stably.

In the operation area when the arm tip end portion 202 is positioned below the field surface, the groove forming arm 200 is provided so as to draw the trajectory (see Fig. 32, the trajectory E3) passing near the seedling block 110 without contacting the seedling block 110 planted in the field. According to such a configuration, since the tip end of the groove forming arm 200 forms the groove at the minimum depth at which the tip end does not contact the seedling block 110, it is possible to reduce the torque in groove formation and the drive torque of the planting claw device 50 and to reduce the size and weight of the planting unit and therefore the size and weight of the seedling planting device 43. In addition, by reducing such torque, it is possible to easily ensure the drive force of the planting claw device 50 and the strength of a drive system of the planting claw device 50. Since it is possible to reduce formation of the groove with the depth more than necessary by the groove forming arm 200, the posture in planting of the seedling block 110 on the field can be stabilized, and favorable planting performance can be achieved.

The groove forming arm 200 is provided so as to change the position posture in conjunction with operation of the planting claw 72. According to such a configuration, since operation of the groove forming arm 200 is also automatically shifted in association with shift of operation of the planting claw 72 by a change in the intrarow spacing by the transmission 36 in the intrarow transmission case 33, it is possible to make it unnecessary to adjust the operation timing of the groove forming arm 200 when the intrarow spacing is changed.

The groove forming arm 200 is provided so as to change the position posture in conjunction with operation of the planting claw 72 by the cam mechanism 400 including the cam plate 410. According to such a configuration, relative rotation of the planting claw device 50 can be used, with a simple configuration, as operation for interlocking the groove forming arm 200 with operation of the planting claw 72. With this configuration, the groove forming arm 200 can be interlocked with operation of the planting claw 72 while the configuration of the seedling planting device 43 can be compactified without the need for separately providing, e.g., a drive source.

The groove forming arm 200 is configured such that the arm tip end portion 202, which is the plate-shaped portion, stands on the field surface at the timing of entering the field surface. According to such a configuration, since the area of contact of the groove forming arm 200 with the field surface when the groove forming arm 200 enters the field can be decreased, it is possible to reduce the torque in groove formation by the groove forming arm 200 and the drive torque of the planting claw device 50 and to reduce the size and weight of the seedling planting device 43. In particular, the groove forming arm 200 can effectively reduce the torque in groove formation by the groove forming arm 200 and the drive torque of the planting claw device 50 by causing the linear direction of extension (see Fig. 22, the arrow Y1) of the arm tip end portion 202 to follow the trajectory of the tip end protruding portion 202a in the groove forming operation in a side sectional view. In addition, in the case of the field of which field surface 91 is covered with the multifilm 250, the multifilm 250 can be smoothly cut by the arm tip end portion 202 so that it is possible to plant the seedling smoothly and stably.

The groove forming arm 200 has the downwardly-raised mountain shape at the lower portion of the arm tip end portion 202. According to such a configuration, the multifilm 250 can be cut with the contact portion of the lower end portion of the arm tip end portion 202 on the multifilm 250 as a start point, and smooth cutting action on the multifilm 250 by the groove forming arm 200 can be achieved.

The groove forming arm 200 is provided so as to draw, as the movement trajectory of the arm tip end portion 202, the trajectory for ensuring, for the planting claw 72 positioned at the lowermost end, the space for pushing out the seedling block 110 held by the planting claw 72. According to such a configuration, by setting the depth of the groove formed by the groove forming arm 200 to the minimum depth necessary for pushing out the seedling block 110, the torque in groove formation by the groove forming arm 200 can be reduced, and the strength of the groove forming arm 200 can be easily ensured. Since the seedling block 110 can be reliably planted in the portion where the groove is formed by the groove forming arm 200, favorable planting performance can be achieved.

The groove forming arm 200 has the arm body portion 201 provided at the position shifted to one side in the left-right direction with respect to the planting claw 72, and the arm tip end portion 202 provided on the tip end side of the arm body portion 201. According to such a configuration, since the arm body portion 201 of the groove forming arm 200 is shifted in the left-right direction with respect to the planting claw 72, the layout of the groove forming arm 200 can be designed such that the arm body portion 201 overlaps with the planting claw 72 in a side view. With this configuration, the volume of the portion of the groove forming arm 200 entering the soil can be reduced, and therefore, the torque in groove formation by the groove forming arm 200 can be reduced and the strength of the groove forming arm 200 can be easily ensured. Since the arm body portion 201 does not contact the planting claw 72 in an operation of forming the groove by the groove forming arm 200, the degree of freedom in movement of the groove forming arm 200 can be increased in relation to the planting claw 72, and an operation of forming the groove by the groove forming arm 200 can be close to ideal operation.

The groove forming arm 200 has the auxiliary arm portion 203 provided at the position shifted to the opposite side of the planting claw 72 from the arm body portion 201 in the left-right direction, and is configured in the substantially "U" shape by the arm body portion 201, the arm tip end portion 202, and the auxiliary arm portion 203. According to such a configuration, it is possible to achieve favorable groove formation action by the groove forming arm 200. In the case of the field of which the field surface 91 is covered with the multifilm 250, the multifilm 250 can be cut from both left and right sides of the planting claw 72 by the arm body portion 201 and the auxiliary arm portion 203. With this configuration, the multifilm 250 at the planted portion by the planting claw 72 can be reliably cut and removed (peeled), so that the cutting residue of the multifilm 250 can be reduced and favorable planting performance can be achieved.

The seedling transplanter 1 includes, in order to respond to a change in the intrarow spacing, the trajectory changing device 270 as a unit for changing the movement trajectory of the groove forming arm 200 on the planting claw 72. According to such a configuration, since the trajectory of the groove forming arm 200 can be adjusted to an optimum trajectory according to a soil condition, a seedling condition, and the like, the planting performance can be ensured under various conditions.

According to the trajectory changing device 270, the trajectory can also be changed such that the arm tip end portion 202 of the groove forming arm 200 draws a substantially constant trajectory by switching the length of the intrarow spacing to, e.g., the intrarow spacing dimension S1 (e.g., 40 cm) or the intrarow spacing dimension S2 (e.g., 24 cm) as described above. With this configuration, since it is possible to suppress an excessive increase in the size of the transplantation hole, it is possible to obtain favorable planting performance and planting accuracy and to suppress an unnecessary increase in a load in groove formation by the groove forming arm 200. As described above, according to the trajectory changing device 270, the trajectory of the groove forming arm 200 can be set to an optimum trajectory according to the intrarow spacing. Thus, for example, in the case where the intrarow spacing is relatively small as described above, it is possible to reduce a problem such as the unnecessarily-large trajectory of the groove forming arm 200 (see Fig. 40, the portion surrounded by the dashed circle X2).

The trajectory changing device 270 includes the link mechanism 300 that supports the groove forming arm 200 on the planting claw device 50. According to such a configuration, since the trajectory of the groove forming arm 200 can be changed by changing the link ratio of the link mechanism, the trajectory can be easily changed.

The link mechanism 300 as the trajectory changing device 270 is configured to change the trajectory of the groove forming arm 200 by changing the inter-axis distance L1 (see Fig. 20) which is the distance between the support portions of the front arm 301 and the rear arm 302 on the groove forming arm 200 side. According to such a configuration, the trajectory changing device 270 can be achieved with a simple configuration. In addition, the trajectory of the groove forming arm 200 can be changed by an easy operation of changing the support position of one link arm. According to the adjustment mechanism for the inter-axis distance L1, it is possible to easily confirm the state of change in the trajectory of the groove forming arm 200 by visually checking the support position of the link arm.

The link mechanism 300 is configured such that the inter-axis distance L1 is adjusted by the fixed position of the connection plate 310 provided with the rear movement shaft support portion 314 on the groove forming arm 200. According to such a configuration, the trajectory of the groove forming arm 200 can be easily changed without the need for replacing a component. Since the bolt 323 for fixing the connection plate 310 to the groove forming arm 200 is provided, on the planting claw device 50, operable from the outside in the left-right direction, favorable operability can be obtained for the bolt 323, and the trajectory of the groove forming arm 200 can be easily changed.

Note that in the present embodiment, the adjustment mechanism for the inter-axis distance L1 can perform stepless adjustment using the hole 204b through which the bolt 323 penetrates in the groove forming arm 200 as the long hole, but is not limited to such a configuration. For example, a plurality of holes through which the bolts 323 penetrate may be provided in the groove forming arm 200 at predetermined intervals in a direction of adjusting the position of the rear movement shaft support portion 314. Specifically, for example, in the case of the intrarow spacings of 40 cm and 24 cm as described above, two holes of a hole corresponding to the shaft support portion close state and a hole corresponding to the shaft support portion separated state are formed as the hole through which the bolt 323 penetrates in the support plate 204. According to such a configuration, the inter-axis distance L1 can be adjusted to a preset value in a stepwise manner, and it is possible to set the inter-axis distance L1 to an appropriate inter-axis distance L1 corresponding to a state of switching the intrarow spacing to the long or short length.

The planting claw device 50 has the excavation claw 76 on the lower side of the holding plate 74. According to such a configuration, since the excavation claw 76 excavates the field prior to the holding plate 74, for example, even when the field has relatively-hard soil, the contact resistance of the holding plate 74 on the field can be reduced and deformation and damage of the holding plate 74 can be reduced. In the case where the multifilm 250 is provided on the field, the excavation claw 76 can reduce entanglement of the multifilm with the holding plate 74.

The groove forming arm 200 is configured such that the direction of extension of the tip end portion is inclined forward and downward with respect to the field surface 91 at the timing of the groove forming arm 200 entering the field surface. According to such a configuration, for example, as compared to a configuration in which the groove forming arm 200 penetrates the field surface 91 with the tip end portion standing orthogonal to the field surface 91, it is possible to reduce lifting of the soil at the time of groove formation by the groove forming arm 200 and to reduce movement of the soil at the time of groove formation. With this configuration, it is possible to suppress a decrease in the soil around the seedling due to groove formation by the groove forming arm 200 and to make the hole formed by groove formation relatively small, so that a sufficient amount of covering soil can be ensured for the planted seedling.

### [Second Embodiment]

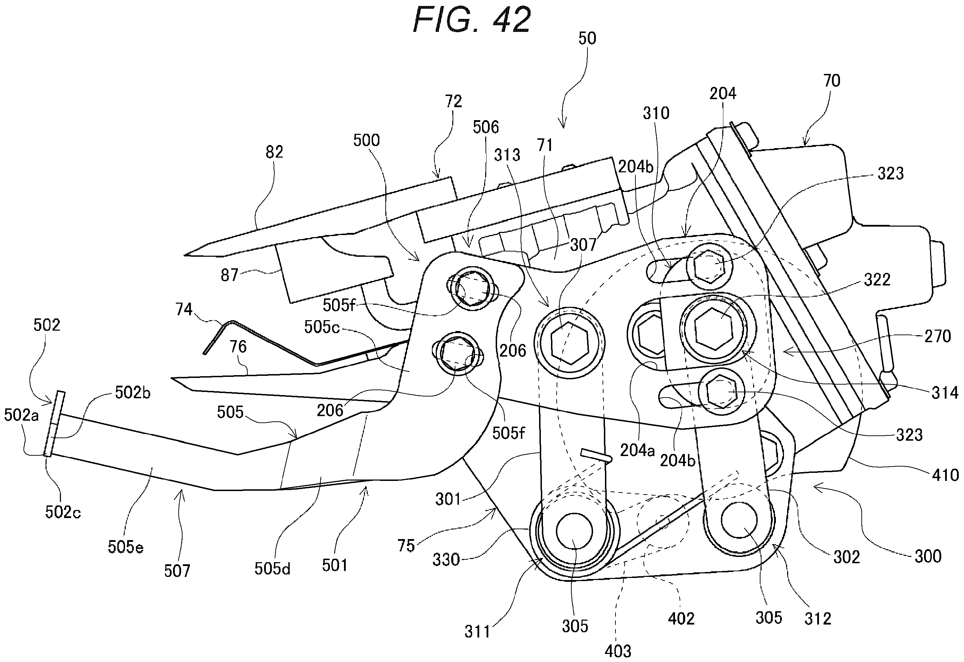

A second embodiment of a planting unit according to the present invention will be described with reference to Figs. 42 to 46. In each embodiment described below, the same names or the same reference numerals are used to represent configurations common to or corresponding to those of the first embodiment described above, and description of overlapping contents will be appropriately omitted. The planting unit according to the present embodiment is different from the planting unit according to the above-described embodiment in the configuration of the groove forming arm.

A groove forming arm 500 according to the present embodiment is formed in an elongated shape, and is provided such that the longitudinal direction thereof is along the claw extending direction. The groove forming arm 500 is provided near the planting claw 72 for the planting claw device 50. The groove forming arm 500 is provided so as to move relative to the planting claw 72 with movably supported on the planting claw device 50 by the link mechanism 300.

The groove forming arm 500 has a substantially "T" shape as a whole in a plan view, and has a portion positioned outside the planting claw device 50 in the left-right direction and a portion positioned on the lower side of the planting claw device 50. The groove forming arm 500 has, as portions forming the substantially "T" shaped outer shape, an arm body portion 501 and an arm tip end portion 502. These portions forming the groove forming arm 500 are provided as plate-shaped portions having predetermined shapes.

The groove forming arm 500 has, as components thereof, the support plate 204 forming a support base portion of the groove forming arm 500 and a cutter member 505. In the groove forming arm 500, the support plate 204 and the support configuration for the planting claw device 50 by the support plate 204 are common to those of the groove forming arm 200 of the above-described embodiment. The support plate 204 and the cutter member 505 are connected and fixed to each other to form the integrated groove forming arm 500.

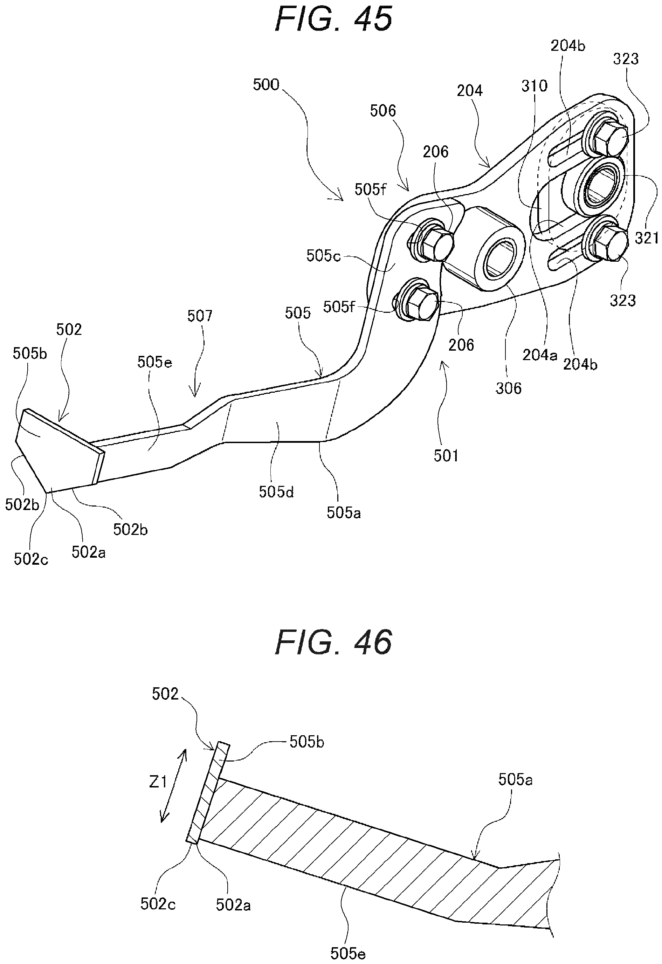

The cutter member 505 is a bent plate-shaped member having a substantially "T" shape in a plan view, and forms a body portion of the groove forming arm 500. The cutter member 505 has, as surface portions forming the substantially "T" shape, an arm portion 505a and a front surface portion 505b (see Fig. 45).

The arm portion 505a has a substantially "L" shaped bent shape with the corner side as the rear lower side in a left side view. The arm portion 505a has a base portion 505c forming a rear side portion of the substantially "L" shape in a side view, an intermediate inclined surface portion 505d extending forward and inward in the left-right direction from a lower end portion of the base portion 505c, and a tip end side arm portion 505e extending forward from the tip end side of the base portion 505c. The front surface portion 505b is provided on the front side of the tip end side arm portion 505e. In the arm portion 505a, a lower side portion of the substantially "L" shape in a side view is formed by the intermediate inclined surface portion 505d and the tip end side arm portion 505e.

The arm body portion 501 includes a body rear portion 506 which is a portion provided at a position shifted outward in the left-right direction with respect to the planting claw 72, and a body front portion 507 which is a portion provided at a position within the area of the width of the planting claw 72 in the left-right direction. The arm body portion 501 is a plate-shaped portion of which the plate thickness direction is schematically the left-right direction, and is formed by the support plate 204 and the arm portion 505a of the cutter member 505.

The cutter member 505 is fixed to the support plate 204 in a state in which an upper portion of the base portion 505c overlaps with the front end portion of the support plate 204 from the outside. The base portion 505c has a shape elongated in the up-down direction, and has a rear portion extending downward from the front end portion of the support plate 204.

The cutter member 505 is fixed to the support plate 204 with the two bolts 206. The two bolts 206 are positioned on both sides of the front portion of the support plate 204 in the width direction thereof at an overlapping portion of the base portion 505c of the cutter member 505 and the support plate 204. The bolt 206 penetrates a hole 505f formed in an upper portion of the base portion 505c, and is screwed into a screw hole formed in the front end portion of the support plate 204.

The hole 505f through which the bolt 206 penetrates is a long hole of which the longitudinal direction is a direction along the direction of extension of the cutter member 505 from the support plate 204. With this configuration, it is possible to adjust a position at which the cutter member 505 is fixed to the support plate 204 in the direction of extension of the cutter member 505.

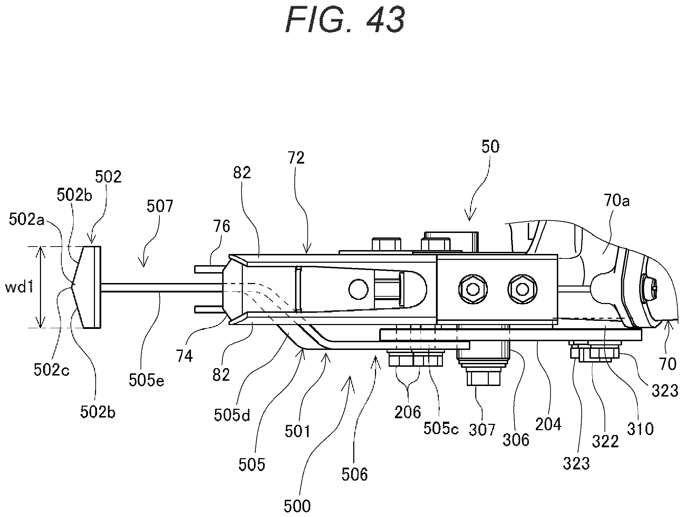

The body rear portion 506 of the arm body portion 501 is a portion positioned outside the planting claw 72 in the left-right direction. Thus, as illustrated in Fig. 43, the body rear portion 506 is a portion formed by the support plate 204, the base portion 505c of the cutter member 505, and a rear portion of the intermediate inclined surface portion 505d.

The body front portion 507 of the arm body portion 501 is a portion positioned within the area of the width of the planting claw 72 in the left-right direction. Thus, as illustrated in Fig. 43, the body front portion 507 is a portion formed by a front portion of the intermediate inclined surface portion 505d of the cutter member 505 and the tip end side arm portion 505e of the cutter member 505.

As described above, in the arm body portion 501, the body front portion 507 has a common position in the left-right direction to, e.g., the those of the planting claw 72 and the holding plate 74 and the excavation claw 76 positioned below the planting claw 72, and is provided so as to partially overlap with these configurations in a plan view. The body front portion 507 is positioned below, e.g., the planting claw 72 and the holding plate 74.

The tip end side arm portion 505e of the cutter member 505 is a plate-shaped portion having a plate thickness direction in the left-right direction, having a linear shape along the front-rear direction in a plan view, and having a substantially constant width in a side view. The tip end side arm portion 505e is positioned at a substantially center portion of the planting claw 72 in the left-right direction. A large portion of the front side of the tip end side arm portion 505e is positioned at the front with respect to the tip end of the planting claw 72 in a state in which the groove forming arm 500 is in the groove forming posture. Note that Fig. 43 illustrates a state in which the groove forming arm 500 is in the groove forming posture.

As described above, the arm body portion 501 having the body rear portion 506 and the body front portion 507 has the shape in which from the rear side to the front side, the base portion 505c extends downward at a front portion of a portion positioned outside the planting claw device 50 in the left-right direction, the intermediate inclined surface portion 505d gradually extends inward in the left-right direction (upper side in Fig. 43), and the tip end side arm portion 505e extends forward below the planting claw 72.

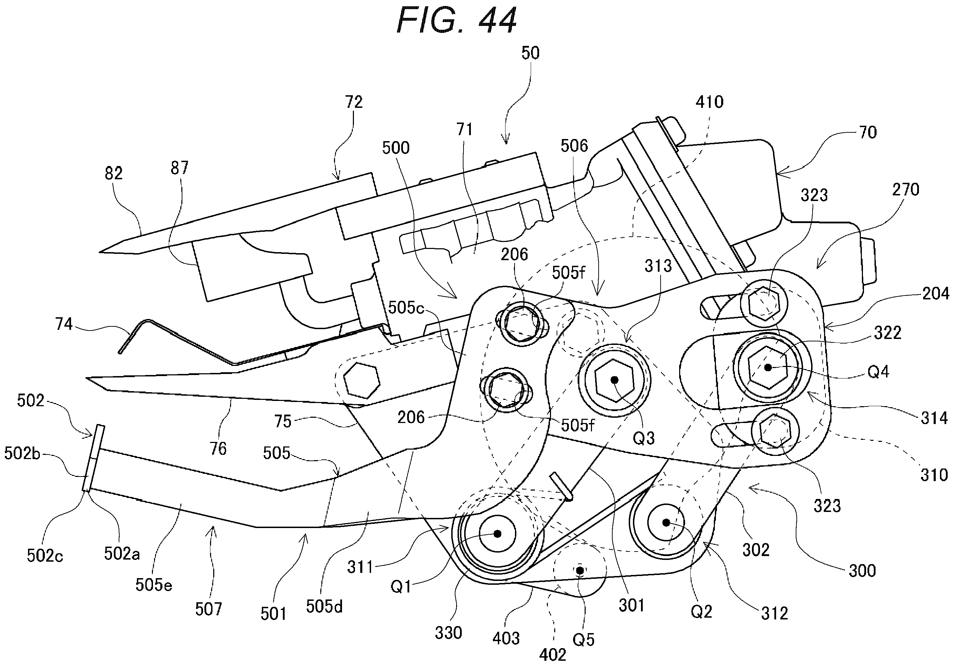

The arm tip end portion 502 is provided on the tip end side of the arm body portion 501. The arm tip end portion 502 is positioned at the front with respect to the tip end of the excavation claw 76 in a state in which the groove forming arm 500 is in the groove forming posture (see Fig. 42), and is positioned below the tip end of the excavation claw 76 in a state in which the groove forming arm 500 is in the standby posture (see Fig. 44). The arm tip end portion 502 is a plate-shaped portion projecting to both left and right sides with respect to the tip end side arm portion 505e of the cutter member 505 forming a front portion of the arm body portion 501, and is formed by the front surface portion 505b of the cutter member 505.

The arm tip end portion 502 is an inclined surface portion inclined forward and downward with respect to the direction orthogonal to the claw extending direction in a side view. The arm tip end portion 502 is a plate-shaped portion having a linear shape in a side cross-sectional view (see Fig. 46). Fig. 46 is a cross-sectional view of a front portion of the groove forming arm 500, and is a left side cross-sectional view at the center position of the tip end side arm portion 505e in the left-right direction (plate thickness direction) thereof. As illustrated in Fig. 46, the arm tip end portion 502 has a linear shape with a predetermined direction (see an arrow Z1) as an extending direction in a side cross-sectional view.

A lower edge portion of the arm tip end portion 502 is a tip end protruding portion 502a protruding slightly downward with respect to a tip end portion of the arm body portion 501. The arm tip end portion 502 has, at the lower edge portion thereof, a downwardly-raised mountain shape forming a top portion 502c by a pair of inclined side portions 502b. The top portion 502c is an obtuse corner portion formed by the pair of inclined side portions 502b.

According to the configuration including the groove forming arm 500 according to the present embodiment, the cut width wd1 (see Fig. 43) of the multifilm 250 can be narrower than the above-described cut width wd2 (see Fig. 19) of the substantially "U" shaped groove forming arm 200. Here, the cut width wd1 of the groove forming arm 500 is the dimension of the arm tip end portion 502 in the left-right direction, and the cut width wd2 of the groove forming arm 200 is the dimension in the left-right direction between the outer surface of the outer surface portion 205a and the inner surface of the inner surface portion 205c. With this configuration, in a state in which the multifilm 250 is cut by the groove forming arm 500, the width of the cut end of the multifilm 250 can be shortened, and contact of the cut end with the planted seedling can be reduced.

Note that the cut end of the multifilm 250 is a film piece remaining in a state (cut in a double-door manner) of being connected to the body side of the film on both left and right sides of the planted seedling after the multifilm 250 has been linearly torn in the front-rear direction by the arm body portion 501 of the groove forming arm 500. On this point, according to the U-shaped groove forming arm 200, since the multifilm 250 is cut in the front-rear direction by the arm body portion 201 and the auxiliary arm portion 203, a wide remaining piece connected, on the rear side, to the body side of the film remains as the cut end of the multifilm 250.

According to the T-shaped groove forming arm 500, it is possible to reduce the amount of soil to be moved backward and relatively increase covering soil around the planted seedling as compared to the U-shaped groove forming arm 200.

In the case of the U-shaped groove forming arm 200, since the arm body portion 201 and the auxiliary arm portion 203 are arranged outside the planting claw 72 in the left-right direction, the groove forming arm 200 can be positioned close to the planting claw 72. With this configuration, the cut length (length in the front-rear direction) of the multifilm 250 can be relatively shortened, and the length of the hole of the multifilm 250 can be shortened.

On the other hand, in the case of the T-shaped groove forming arm 500, since the front portion of the arm body portion 501 is arranged below the center portion of the planting claw 72 in the left-right direction, the groove forming arm 500 is provided at a position relatively away from the planting claw 72 in order to avoid contact with the components of the planting claw device 50. Thus, the cut length of the multifilm 250 can be relatively extended, and the length of the hole of the multifilm 250 can be extended.

As in the above-described U-shaped groove forming arm 200, the groove forming arm 500 is configured such that the arm tip end portion 502 stands on the field surface at the timing of entering the field surface, and therefore, it is possible to reduce the torque in groove formation and the drive torque of the planting claw device 50. In particular, e.g., the torque in groove formation can be effectively reduced by causing the linear direction of extension (see Fig. 46, the arrow Z1) of the arm tip end portion 502 to follow the trajectory of the tip end protruding portion 502a in the groove forming operation in a side sectional view. The multifilm 250 can be smoothly cut by the arm tip end portion 502, and in particular, smooth cutting action on the multifilm 250 can be achieved by the mountain shape of a lower portion of the arm tip end portion 502.

### [Third Embodiment]

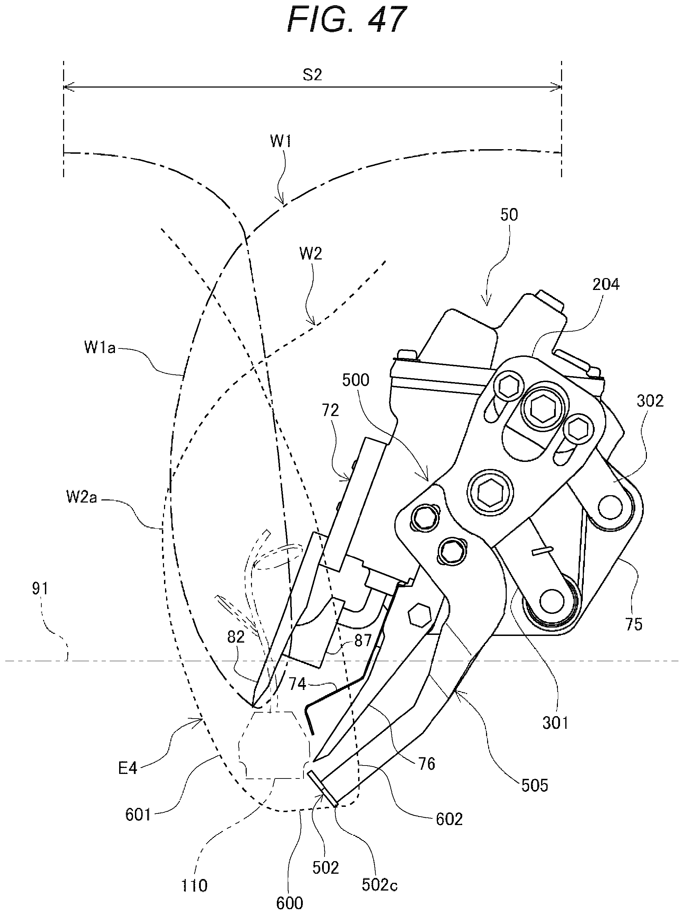

A third embodiment of a planting unit according to the present invention will be described with reference to Fig. 47. The planting unit according to the present embodiment is different from the planting unit according to the above-described embodiments in the operation mode of the groove forming arm, specifically the trajectory of the tip end portion of the groove forming arm.

Fig. 47 illustrates, as an example, a configuration having the groove forming arm 500 according to the second embodiment as the groove forming arm. Fig. 47 illustrates the movement trajectories of the planting claw 72 and the groove forming arm 500 in a case where the planting unit is in the shaft support portion separated state and the intrarow spacing is the relatively-small intrarow spacing dimension S2 (e.g., 24 cm).

In the present embodiment, regarding operation of the groove forming arm 500, the groove forming arm 500 is provided so as to draw, as the movement trajectory of the tip end portion, a trajectory E4 including a horizontal trajectory portion at least at part of the periphery of the space for pushing out the seedling block 110 held by the planting claw 72 together with the holding plate 74. The trajectory E4 is part of the trajectory W2 of the arm tip end portion 502 of the groove forming arm 500, and is indicated by a dashed line in Fig. 47. The trajectory E4 indicates the trajectory of the top portion 502c of the arm tip end portion 502.

In a side view, the groove forming arm 500 moves the arm tip end portion 502 so as to pass from the front side to the rear side of a seedling block corresponding portion through the lower side of the seedling block corresponding portion with a gap therefrom, the seedling block corresponding portion being a portion where the seedling block 110 to be planted in the field is positioned. That is, the groove forming arm 500 moves the arm tip end portion 502 in a manner of making a U-turn around the seedling block corresponding portion so as not to contact the trajectory E4 with the seedling block corresponding portion at a turning point from lowering operation to lifting operation.

According to the groove forming arm 500, the soil of the field is removed and the groove is formed along the trajectory of the arm tip end portion 502. Then, the groove forming arm 500 acts on the field such that the soil removed portion (groove formed portion) of the field formed by the groove forming arm 500 forms a space where the seedling block 110 released from the planting claw device 50 is to be positioned. On the trajectory E4, a position within an area surrounded by the turning point having a substantially "U" shape on the lower end side is ensured as the space to which the seedling block 110 is released at the timing when groove formation by the groove forming arm 500 ends.

The trajectory E4 of the arm tip end portion 502 as described above has a horizontal portion 600 which is a horizontal trajectory portion around the space to which the seedling block 110 is pushed out. The horizontal portion 600 is a portion of the trajectory E4 along the field surface 91 in a side view, and is a linear portion along the machine body front-rear direction (left-right direction in Fig. 47). The horizontal portion 600 forms a lower end portion (bottom portion) of a lower portion of the trajectory E4 at the turning point. Thus, the horizontal portion 600 represents, as the movement path of the arm tip end portion 502, a path horizontally extending from the front to the rear below the seedling block corresponding portion.

The trajectory E4 having the horizontal portion 600 as described above has, at the turning point at the lower portion, a trajectory portion in which a lowering trajectory portion 601 indicating lowering operation of the arm tip end portion 502, the horizontal portion 600, and a lifting trajectory portion 602 indicating lifting operation of the arm tip end portion 502 are continuous to each other. The lowering trajectory portion 601 has a shape bulging forward, and has the lower end connected to the front side of the horizontal portion 600. The lifting trajectory portion 602 has the lower end connected to the rear side of the horizontal portion 600, and has a substantially linear shape slightly inclined forward.

The trajectory E4 of the arm tip end portion 502 as described above is obtained by adjusting the shape of the cam surface 411 (see Fig. 23) of the cam plate 410 such that the trajectory portion of the lower end portion of the trajectory E4 becomes closer to the horizontal orientation.

According to the trajectory E4, the groove forming arm 500 performs, as an operation of drawing the lowering trajectory portion 601, an operation of causing the arm tip end portion 502 to penetrate the field surface 91 from a position at the front of the virtually-arranged seedling block 110. Thereafter, the arm tip end portion 502 moves to the lower side of the virtually-arranged seedling block 110, and as an operation of drawing the horizontal portion 600, performs an operation of horizontally moving the arm tip end portion 502 from the front to the rear. Thereafter, at the timing when the arm tip end portion 502 reaches the rear side of the virtually-arranged seedling block 110, the seedling block 110 is pushed out by the pressing piece 87 and is actually planted.

The groove forming arm 500 of which the tip end (top portion 502c) of the arm tip end portion 502 is positioned on the rear lower side of the planted seedling block 110 performs, as an operation of drawing the lifting trajectory portion 602, an operation of moving the arm tip end portion 502 upward to separate the arm tip end portion 502 from the field surface 91. Thereafter, the groove forming arm 500 gently moves the arm tip end portion 502 to the front side of the seedling block 110 above the seedling block 110 while moving the arm tip end portion 502 upward.

According to the operation mode of the groove forming arm 500 of the present embodiment, when the seedling block 110 is released to the field, a horizontal seedling receiving portion is formed as a bottom surface portion of a portion where the groove is formed by the groove forming arm 500 in the field. With this configuration, the released seedling block 110 is planted in an upright posture on the relatively-hard horizontal groove bottom formed by the groove forming arm 500. Thus, a favorable upright planting posture can be obtained as the seedling planting posture.

### [Fourth Embodiment]

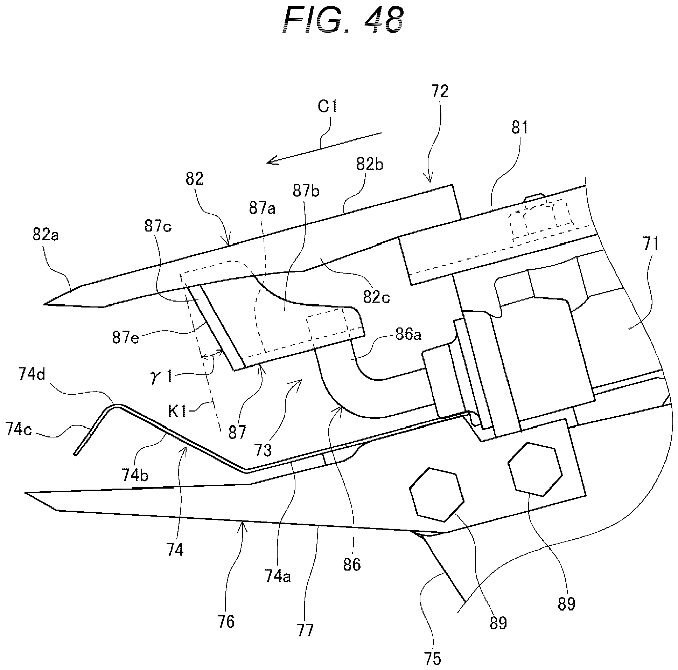

A fourth embodiment of a planting unit according to the present invention will be described with reference to Fig. 48. The planting unit according to the present embodiment is different from the planting unit according to the above-described embodiments in the configuration of the pressing piece 87 of the pushing member 73.

As shown in Fig. 48, in the pressing piece 87 according to the present embodiment, the pressing surface 87e serving as the action surface on the seedling block 110 is inclined with respect to the direction of pushing by the pressing piece 87 in a side view. The direction of pushing by the pressing piece 87 is the claw extending direction (see the arrow C 1), and is a direction along which the upper surface portion 82b of the claw body portion 82 extends in a side view. Note that the pressing surface 87e is a plane along a straight line in a side view.

In the embodiments described above, the pressing surface 87e of the pressing piece 87 is along the plane direction (hereinafter referred to as an "orthogonal plane direction") orthogonal to the claw extending direction in a side view (see Fig. 12 and the like). On the other hand, in the present embodiment, as illustrated in Fig. 48, the pressing surface 87e of the pressing piece 87 is inclined forward with respect to the orthogonal plane direction indicated by a chain line K1 in a side view. That is, the pressing surface 87e is inclined, in a side view, in a direction in which the upper side is positioned on the front side in the claw extending direction and the lower side is positioned on the rear side in the claw extending direction with respect to the orthogonal plane direction.

Regarding the degree of inclination of the pressing surface 87e, the inclination angle γ1 of the pressing surface 87e with respect to the orthogonal plane direction in a side view is, for example, within a range of 10 to 30° (e.g., about 20°). Note that the degree of the inclination angle γ1 of the pressing surface 87e is not particularly limited.

According to the configuration of the pressing piece 87 of the present embodiment, the posture of the seedling block 110 pushed out by the pressing piece 87 can be corrected by the inclination of the pressing surface 87e. With this configuration, it is easy to ensure the upright state of the seedling block 110 in the soil of the field, and it is possible to obtain a favorable upright planting posture as the seedling planting posture. By combining the configuration of the pressing piece 87 according to the present embodiment with the operation mode of the groove forming arm 500 according to the third embodiment, the seedling block 110 can be effectively planted upright, and a favorable planting posture can be obtained.

The seedling transplanter according to the present invention as described above with reference to the embodiments is not limited to the above-described embodiments, and various aspects can be adopted within the scope of the present invention.

The present technique can have the following configurations. Note that the configurations described below can be selected and arbitrarily combined.
(1) A seedling transplanter for continuously planting a seedling in a field by cutting a seedling mat placed on a seedling mount partially by a planting claw, the seedling transplanter including a groove forming arm that is provided near the planting claw and is provided so as to move relative to the planting claw. The groove forming arm has, as a position posture relative to the planting claw, a standby posture that is a position posture at the timing when the planting claw cuts the seedling mat, and a groove forming posture moved forward with respect to the planting claw when the seedling is planted in the field.
(2) The seedling transplanter according to (1), in which the groove forming arm is provided so as to perform a circulation operation of returning from the groove forming posture to the standby posture after planting of the seedling in the field by the planting claw has ended.
(3) The seedling transplanter according to (1) or (2), in which the groove forming arm is provided such that in the groove forming posture, a tip end thereof protrudes forward with respect to the planting claw and enters a field surface prior to the planting claw.
(4) The seedling transplanter according to any one of (1) to (3), in which the groove forming arm is provided so as not to contact the seedling planted in the field in an operation area where at least a tip end portion of the groove forming arm is positioned below the field surface.
(5) The seedling transplanter according to any one of (1) to (4), in which the groove forming arm is provided so as to change the position posture in conjunction with operation of the planting claw.
(6) The seedling transplanter according to (5), in which the groove forming arm changes the position posture in conjunction with the operation of the planting claw by a cam mechanism including a cam provided on a rotary case rotatably supporting a planting claw device including the planting claw and configured to change the position of the groove forming arm relative to the planting claw with rotation of the planting claw device.
(7) The seedling transplanter according to any one of (1) to (6), in which the groove forming arm has the tip end portion as a linear plate-shaped portion in a side cross-sectional view, and is provided so as to cause the plate-shaped portion to stand on the field surface at timing of entering the field surface.
(8) The seedling transplanter according to any one of (1) to (7), in which the groove forming arm is provided so as to draw, as the movement trajectory of the tip end portion, a trajectory for ensuring, for the planting claw positioned at the lowermost end, a space for pushing out a seedling held by the planting claw.
(9) The seedling transplanter according to any one of (1) to (8), in which the groove forming arm has an arm body portion provided at a position shifted to one side in a left-right direction with respect to the planting claw, and an arm tip end portion provided on the tip end side of the arm body portion.
(10) The seedling transplanter according to (9), in which the arm tip end portion is a portion connected, on one end side in the left-right direction, to the arm body portion, and the groove forming arm has an auxiliary arm portion provided at a position shifted to the other side in the left-right direction with respect to the planting claw and having one end side connected to the other end side of the arm tip end portion in the left-right direction.
(11) The seedling transplanter according to any one of (1) to (8), in which the groove forming arm has an arm body portion including a portion provided at a position shifted to one side in the left-right direction with respect to the planting claw and a portion provided at a position within the area of the width of the planting claw in the left-right direction, and an arm tip end portion provided on the tip end side of the arm body portion.
(12) The seedling transplanter according to (11), in which the arm tip end portion is a portion projecting to both left and right sides with respect to the arm body portion.
(13) The seedling transplanter according to any one of (1) to (12), in which the groove forming arm is provided so as to draw, as the movement trajectory of the tip end portion, a trajectory including a horizontal trajectory portion at least at part of the periphery of a space for pushing out a seedling held by the planting claw.
(14) A seedling transplanter for continuously planting a seedling in a field by cutting a seedling mat placed on a seedling mount partially by a planting claw, the seedling transplanter including a groove forming arm that is provided near the planting claw and is provided so as to move relative to the planting claw, and a trajectory changing device that changes the movement trajectory of the groove forming arm on the planting claw according to the seedling planting pitch of the planting claw.
(15) The seedling transplanter according to (14), in which the groove forming arm is provided so as to change a position posture relative to the planting claw in conjunction with operation of the planting claw.
(16) The seedling transplanter according to (14) or (15), in which the trajectory changing device includes a link mechanism that supports the groove forming arm on a planting claw device including the planting claw.
(17) The seedling transplanter according to (16), in which the link mechanism includes two link arms of which one end side is turnably supported on the planting claw device side and other end side is turnably supported on the groove forming arm side, and
   the trajectory changing device changes the movement trajectory of the groove forming arm on the planting claw by changing a distance between support portions of the two link arms on the groove forming arm side.
(18) The seedling transplanter according to any one of (14) to (17), in which the groove forming arm has, as a position posture relative to the planting claw, a standby posture that is a position posture at the timing when the planting claw cuts the seedling mat, and a groove forming posture moved forward with respect to the planting claw when the seedling is planted in the field, and is provided so as to perform a circulation operation of returning from the groove forming posture to the standby posture after planting of the seedling in the field by the planting claw has ended.
(19) The seedling transplanter according to (18), in which the groove forming arm is provided such that in the groove forming posture, the tip end thereof protrudes forward with respect to the planting claw and enters a field surface prior to the planting claw.
(20) The seedling transplanter according to any one of (14) to (19), in which the groove forming arm is provided so as not to contact the seedling planted in the field in an operation area where at least a tip end portion of the groove forming arm is positioned below the field surface.

### LIST OF REFERENCE SIGNS

- 1: Seedling Transplanter
- 3: Seedling Transplanting Device
- 42: Seedling Mount
- 50: Planting Claw Device
- 52: Rotary Case
- 72: Planting Claw
- 91: Field Surface
- 100: Seedling Mat
- 110: Seedling Block
- 200: Groove Forming Arm
- 201: Arm Body Portion
- 202: Arm Tip End Portion
- 203: Auxiliary Arm Portion
- 270: Trajectory Changing Device
- 300: Link Mechanism
- 301: Front Arm (Link Arm)
- 302: Rear Arm (Link Arm)
- 313: Front Movement Shaft Support Portion
- 314: Rear Movement Shaft Support Portion
- 400: Cam Mechanism
- 410: Cam Plate (Cam)
- 500: Groove Forming Arm
- 501: Arm Body Portion
- 502: Arm Tip End Portion
- 506: Body Rear Portion
- 507: Body Front Portion

## Claims

1. A seedling transplanter for continuously planting a seedling in a field by cutting a seedling mat placed on a seedling mount partially by a planting claw, comprising:
a groove forming arm that is provided near the planting claw and is provided so as to move relative to the planting claw,
wherein the groove forming arm has, as a position posture relative to the planting claw,
a standby posture that is a position posture at timing when the planting claw cuts the seedling mat, and
a groove forming posture moved forward with respect to the planting claw when the seedling is planted in the field.

2. The seedling transplanter according to claim 1, wherein
the groove forming arm is provided so as to perform a circulation operation of returning from the groove forming posture to the standby posture after planting of the seedling in the field by the planting claw has ended.

3. The seedling transplanter according to claim 1 or 2, wherein
the groove forming arm is provided such that in the groove forming posture, a tip end thereof protrudes forward with respect to the planting claw and enters a field surface prior to the planting claw.

4. The seedling transplanter according to claim 1, wherein
the groove forming arm is provided so as not to contact the seedling planted in the field in an operation area where at least a tip end portion of the groove forming arm is positioned below a field surface.

5. The seedling transplanter according to claim 1, wherein
the groove forming arm is provided so as to change the position posture in conjunction with operation of the planting claw.

6. The seedling transplanter according to claim 5, wherein
the groove forming arm changes the position posture in conjunction with the operation of the planting claw by a cam mechanism including a cam provided on a rotary case rotatably supporting a planting claw device including the planting claw and configured to change a position of the groove forming arm relative to the planting claw with rotation of the planting claw device.

7. The seedling transplanter according to claim 1, wherein
the groove forming arm has a tip end portion as a linear plate-shaped portion in a side cross-sectional view, and is provided so as to cause the plate-shaped portion to stand on a field surface at timing of entering the field surface.

8. The seedling transplanter according to claim 1, wherein
the groove forming arm is provided so as to draw, as a movement trajectory of a tip end portion, a trajectory for ensuring, for the planting claw positioned at a lowermost end, a space for pushing out a seedling held by the planting claw.

9. The seedling transplanter according to claim 1, wherein
the groove forming arm has an arm body portion provided at a position shifted to one side in a left-right direction with respect to the planting claw, and
an arm tip end portion provided on a tip end side of the arm body portion.

10. The seedling transplanter according to claim 9, wherein
the arm tip end portion is a portion connected, on one end side in the left-right direction, to the arm body portion, and
the groove forming arm has an auxiliary arm portion provided at a position shifted to the other side in the left-right direction with respect to the planting claw and having one end side connected to the other end side of the arm tip end portion in the left-right direction.

11. The seedling transplanter according to claim 1, wherein
the groove forming arm has an arm body portion including a portion provided at a position shifted to one side in a left-right direction with respect to the planting claw and a portion provided at a position within an area of a width of the planting claw in the left-right direction, and
an arm tip end portion provided on a tip end side of the arm body portion.

12. The seedling transplanter according to claim 11, wherein
the arm tip end portion is a portion projecting to both left and right sides with respect to the arm body portion.

13. A seedling transplanter for continuously planting a seedling in a field by cutting a seedling mat placed on a seedling mount partially by a planting claw, comprising:
a groove forming arm that is provided near the planting claw and is provided so as to move relative to the planting claw; and
a trajectory changing device that changes a movement trajectory of the groove forming arm on the planting claw according to a seedling planting pitch of the planting claw.

14. The seedling transplanter according to claim 13, wherein
the groove forming arm is provided so as to change a position posture relative to the planting claw in conjunction with operation of the planting claw.

15. The seedling transplanter according to claim 13 or 14, wherein
the trajectory changing device includes a link mechanism that supports the groove forming arm on a planting claw device including the planting claw.

16. The seedling transplanter according to claim 15, wherein
the link mechanism includes two link arms of which one end side is turnably supported on a planting claw device side and other end side is turnably supported on a groove forming arm side, and
the trajectory changing device changes the movement trajectory of the groove forming arm on the planting claw by changing a distance between support portions of the two link arms on the groove forming arm side.

17. The seedling transplanter according to claim 13, wherein
the groove forming arm has, as a position posture relative to the planting claw,
a standby posture that is a position posture at timing when the planting claw cuts the seedling mat, and
a groove forming posture moved forward with respect to the planting claw when the seedling is planted in the field, and
is provided so as to perform a circulation operation of returning from the groove forming posture to the standby posture after planting of the seedling in the field by the planting claw has ended.

18. The seedling transplanter according to claim 17, wherein
the groove forming arm is provided such that in the groove forming posture, a tip end thereof protrudes forward with respect to the planting claw and enters a field surface prior to the planting claw.

19. The seedling transplanter according to claim 17 or 18, wherein
the groove forming arm is provided so as not to contact the seedling planted in the field in an operation area where at least a tip end portion of the groove forming arm is positioned below a field surface.
